# EUROPEAN PATENT APPLICATION

(11) **EP 4 443 828 A1**
(43) Date of publication of application: **09.10.2024**
(21) Application number: 22914145.2
(22) Date of filing: 09.12.2022
(51) Int. Cl.: H04L 27/36

(54) **MODULATION METHOD, DEMODULATION METHOD AND RELATED APPARATUS**

(30) Priority: 27.12.2021 CN 202111620116
(71) Applicant: Huawei Technologies Co., Ltd., Shenzhen, Guangdong 518129 (CN)
(72) Inventor: SHI, Meng, Shenzhen, Guangdong 518129 (CN); ZOU, Peng, Shenzhen, Guangdong 518129 (CN); ZHANG, Jiayin, Shenzhen, Guangdong 518129 (CN)
(74) Representative: Isarpatent
(86) International application number: PCT/CN2022/137771
(87) International publication number: WO 2023/124890

(57) **Abstract**

Embodiments of this application disclose a modulation method, to reduce system complexity. The method in embodiments of this application includes: A first communication apparatus generates a first symbol stream based on a symbol type quantity, a probability distribution corresponding to a first symbol of each symbol type, a bit quantity corresponding to each first symbol, and a first original bit stream, where the symbol type quantity and the probability distribution corresponding to the first symbol of each symbol type indicate a probability distribution and a signal amplitude of a quadrature signal of a constellation point in a target probabilistic shaping constellation diagram and a probability distribution and a signal amplitude of an inphase signal of the constellation point, the bit quantity corresponding to each first symbol is a bit quantity required by each first symbol that is represented by using a bit, and first symbols of different symbol types correspond to different probability distributions and/or different signal amplitudes; and the first communication apparatus generates a first quadrature amplitude modulation QAM symbol stream based on the first symbol stream and a second original bit stream, where the first QAM symbol stream includes one or more QAM symbols.

## Description

This application claims priority to Chinese Patent Application No. 202111620116.1, filed with the China National Intellectual Property Administration on December 27, 2021 and entitled "MODULATION METHOD, DEMODULATION METHOD, AND RELATED APPARATUS", which is incorporated herein by reference in its entirety.

### TECHNICAL FIELD

This application relates to communication technologies, and in particular, to a modulation method, a demodulation method, and a related apparatus.

### BACKGROUND

In a 4th generation (4th generation, 4G) mobile communication system or a 5th generation (5th generation, 5G) mobile communication system, a probabilistic constellation shaping (probabilistic constellation shaping, PCS) modulation scheme is used to modulate bit streams, to reduce a signal-to-noise ratio based on a shaping gain. Probabilistic constellation shaping achieves a shaping gain by modifying probability distributions of constellation points in a quadrature amplitude modulation (quadrature amplitude modulation, QAM) constellation diagram. A probability distribution of each constellation point is different, but a geometric position of constellation mapping remains unchanged. The shaping gain increases with a modulation order, and higher-order constellations have higher shaping gains, such that system performance and spectral efficiency are further improved.

Probabilistic constellation shaping includes probabilistic amplitude shaping (probabilistic amplitude shaping, PAS) and probabilistic fold shaping (probabilistic fold shaping, PFS). Probabilistic amplitude shaping is for even-order QAM constellation diagrams, and probabilistic fold shaping is for odd-order QAM constellation diagrams. QAM signals include orthogonal signals and inphase signals, where the quadrature signal may be referred to as an I-channel signal, and the inphase signal may be referred to as a Q-channel signal. At present, in a probabilistic constellation shaping system, an I-channel bit stream with a probability distribution is generated by using a constant composition distribution matcher (constant composition distribution matching, CCDM). Then, a pulse amplitude modulation (pulse amplitude modulation, PAM) symbol is generated based on the bit stream with the probability distribution. Check bits and random bits that are evenly distributed are used as sign bits of PAM symbols, to generate an I-channel PAM symbol having a sign bit. Similarly, a Q-channel bit stream with a probability distribution is generated by using a CCDM. Then, a PAM symbol is generated based on the bit stream with the probability distribution. Check bits and random bits that are evenly distributed are used as sign bits of PAM symbols, to generate a Q-channel PAM symbol having a sign bit. Finally, the I-channel PAM symbol having the sign bit and the Q-channel PAM symbol having the sign bit are combined to obtain a QAM symbol.

It can be learned that, in the foregoing technical solution, in a process of generating the QAM symbol, the I-channel signal and the Q-channel signal of the QAM signal are separately processed, and one CCDM need to be used for processing of the I-channel signal and one CCDM need to be used for processing of the Q-channel signal, resulting in high system complexity.

### SUMMARY

This application provides a modulation method, a demodulation method, and a related apparatus, to reduce system complexity.

A first aspect of this application provides a modulation method, including:
A first communication apparatus generates a first symbol stream based on a symbol type quantity, a probability distribution corresponding to a first symbol of each symbol type, a bit quantity corresponding to each first symbol, and a first original bit stream, where the symbol type quantity and the probability distribution corresponding to the first symbol of each symbol type indicate a probability distribution and a signal amplitude of a quadrature signal of a constellation point in a target probabilistic shaping constellation diagram and a probability distribution and a signal amplitude of an inphase signal of the constellation point, the bit quantity corresponding to each first symbol is a bit quantity required by each first symbol that is represented by using a bit, and first symbols of different symbol types correspond to different probability distributions and/or different signal amplitudes; and the first communication apparatus generates a first QAM symbol stream based on the first symbol stream and a second original bit stream, where the first QAM symbol stream includes one or more QAM symbols.

In the foregoing technical solution, the symbol type quantity and the probability distribution corresponding to the first symbol of each symbol type indicate the probability distribution and a signal amplitude of the quadrature signal of the constellation point in the target probabilistic shaping constellation diagram and the probability distribution and the signal amplitude of the inphase signal of the constellation point. In other words, in a process of determining the first symbol stream, the first communication apparatus processes a quadrature signal (an I-channel signal) and an inphase signal (a Q-channel signal) in a QAM symbol together. That is, the first communication apparatus generates the first symbol stream by using one CCDM, and generates the first QAM symbol stream based on the first symbol stream and the second original bit stream. There is no need to use two CCDMs to generate a symbol stream corresponding to the I-channel signal and a symbol stream corresponding to the Q-channel signal and then combine the two symbol streams into a QAM symbol, thereby reducing system complexity. In addition, the I-channel signal and the Q-channel signal in the target probabilistic shaping constellation diagram may have a same probability distribution, or may have different probability distributions, to adapt to probability distributions of different symmetry, thereby improving applicability of the solution.

In a possible implementation, a first symbol in the first symbol stream is a complex-valued symbol in which a value of a real part and a value of an imaginary part are both greater than or equal to 0.

It can be learned from this implementation that a signal amplitude of a signal corresponding to each first symbol in the first symbol stream is greater than or equal to 0. That is, the first symbol stream is for determining the signal amplitude of the signal corresponding to the first symbol, but is not for determining a sign bit of the signal corresponding to the first symbol.

In another possible implementation, the method further includes:
The first communication apparatus interleaves and separates, according to a first interleaving and separation rule, a plurality of first symbols included in the first symbol stream, to obtain an interleaved first symbol stream.

That the first communication apparatus generates a first QAM symbol stream based on the first symbol stream and a second original bit stream includes:
The first communication apparatus generates the first QAM symbol stream based on the interleaved first symbol stream and the second original bit stream.

In this implementation, the first communication apparatus interleaves, according to the first interleaving and separation rule, the first symbols included in the first symbol stream. This helps ensure an I-channel probability distribution and a Q-channel probability distribution in the target probabilistic shaping constellation diagram. In addition, a centralized error in the first symbol stream is avoided, and decoding performance and error correction performance are affected. The first communication apparatus may decentralize, through interleaving processing, first symbols in errors in the interleaved first symbol stream, that is, decentralize the first symbols in errors in the first symbol stream, thereby improving robustness of decoding error correction.

In another possible implementation, that the first communication apparatus generates a first QAM symbol stream based on the first symbol stream and a second original bit stream includes:

The first communication apparatus maps the first symbol stream into a first bit stream according to a first mapping rule, where the first mapping rule is a mapping relationship between a first symbol and a bit, and a quantity of bits to which each first symbol is mapped is the bit quantity corresponding to each first symbol; the first communication apparatus performs encoding based on the first bit stream and the second original bit stream to obtain a first check bit stream; the first communication apparatus determines a second bit stream based on the first check bit stream and the second original bit stream; and the first communication apparatus generates the first QAM symbol stream based on the first symbol stream and the second bit stream.

In this implementation, a specific implementation in which the first communication apparatus generates the first QAM symbol stream based on the first symbol stream and the second original bit stream is provided, which facilitates implementation of the solution. The first communication apparatus performs encoding based on the first bit stream and the second original bit stream to obtain the first check bit stream. The first communication apparatus determines the second bit stream based on the first check bit stream and the second original bit stream. Then, the first communication apparatus generates the first QAM symbol stream based on the first symbol stream and the second bit stream. This helps a decoder perform decoding based on the first check bit stream, thereby improving decoding performance.

In another possible implementation, each first symbol in the first symbol stream corresponds to one constellation point in the target probabilistic shaping constellation diagram; and each first symbol in the first symbol stream indicates a signal amplitude of a constellation point corresponding to the first symbol, and the second bit stream indicates a sign bit of a quadrature signal of the constellation point corresponding to each first symbol in the first symbol stream and a sign bit of an inphase signal of the constellation point.

In this implementation, a relationship between a first symbol in the first symbol stream and a constellation point in the target probabilistic shaping constellation diagram and a relationship between the second bit stream and a first symbol in the first symbol stream are shown. In this way, the first communication apparatus generates the first QAM symbol stream based on the first symbol stream and the second bit stream. That is, a first symbol in the first symbol stream is used as a signal amplitude of a constellation point, and a bit in the second bit stream determines a quadrant in which the constellation point corresponding to the first symbol falls.

In another possible implementation, each first symbol in the first symbol stream indicates the signal amplitude of the constellation point corresponding to the first symbol, a (2i-1)^{th} bit in the second bit stream indicates a sign bit of a quadrature signal of a constellation point corresponding to an i^{th} first symbol in the first symbol stream, a 2i^{th} bit in the second bit stream indicates a sign bit of an inphase signal of the constellation point corresponding to the i^{th} first symbol in the first symbol stream, and i is an integer greater than or equal to 1.

In this implementation, a correspondence between a bit in the second bit stream and a first symbol is clearly shown, so that the first communication apparatus determines a quadrant in which a constellation point corresponding to the first symbol falls.

In another possible implementation, each first symbol in the first symbol stream corresponds to a quadrature signal or an inphase signal of one constellation point in the target probabilistic shaping constellation diagram; and each first symbol in the first symbol stream indicates a signal amplitude of the quadrature signal or the inphase signal corresponding to the first symbol, and the second bit stream indicates a sign bit of the quadrature signal or the inphase signal corresponding to each first symbol in the first symbol stream.

In this implementation, a relationship between a first symbol in the first symbol stream and a quadrature signal or an inphase signal of a constellation point in the target probabilistic shaping constellation diagram and a relationship between the second bit stream and a first symbol in the first symbol stream are shown. In this way, the first communication apparatus generates the first QAM symbol stream based on the first symbol stream and the second bit stream. That is, a first symbol in the first symbol stream is used as a signal amplitude of a quadrature signal or an inphase signal of a constellation point, and a bit in the second bit stream determines half axes (including a positive half axis and a negative half axis) on which the quadrature signal or the inphase signal of the constellation point corresponding to the first symbol falls.

In another possible implementation, an odd-numbered first symbol in the first symbol stream corresponds to a quadrature signal of a constellation point in the target probabilistic shaping constellation diagram, and an even-numbered first symbol in the first symbol stream corresponds to an inphase signal of a constellation point in the target probabilistic shaping constellation diagram.

The odd-numbered first symbol in the first symbol stream indicates a signal amplitude of the quadrature signal corresponding to the first symbol, the even-numbered first symbol in the first symbol stream indicates a signal amplitude of the inphase signal corresponding to the first symbol, an odd-numbered bit in the second bit stream indicates a sign bit of a quadrature signal corresponding to the odd-numbered first symbol, and an even-numbered bit in the second bit stream indicates a sign bit of an inphase signal corresponding to the even-numbered first symbol.

In this implementation, a correspondence between a bit in the second bit stream and a first symbol is clearly shown, so that the first communication apparatus determines a half axis on which a quadrature signal or an inphase signal of a constellation point corresponding to the first symbol falls.

In another possible implementation, the first bit stream and the second original bit stream are located in a first code block, a length of the first code block is greater than a code block length supported by the first communication apparatus, the first bit stream includes a plurality of first bits, and the second original bit stream includes a plurality of second bits.

That the first communication apparatus performs encoding based on the first bit stream and the second original bit stream to obtain the first check bit stream includes: The first communication apparatus determines a first transport block cyclic redundancy check (transport block cyclic redundancy check, TB CRC) bit based on the first bit stream and the second original bit stream; the first communication apparatus determines the first code block as M code subblocks; the first communication apparatus separately encodes the M code subblocks, to obtain code block cyclic redundancy check (code block cyclic redundancy check, CB CRC) bits corresponding to the M code subblocks; and the first communication apparatus determines the first check bit stream based on the CB CRC bits corresponding to the M code subblocks and the first TB CRC bit.

The first check bit stream includes check bits corresponding to the M code subblocks, check bits corresponding to an M^{th} code subblock in the M code subblocks include a CB CRC bit corresponding to the M^{th} code subblock and the first TB CRC bit, each of the M code subblocks includes a part of the plurality of first bits and a part of the plurality of second bits, and different code subblocks include different first bits and different second bits; M is equal to a rounded-up ratio of the length of the first code block to the code block length supported by the first communication apparatus; and a ratio of a quantity of first bits included in each of the M code subblocks to a first value is equal to a first ratio, the first value is equal to a sum of a quantity of second bits included in each code subblock and a quantity of check bits included in each code subblock, and the first ratio is a ratio of a quantity of bits required for representing a signal amplitude corresponding to each constellation point in the target probabilistic shaping constellation diagram to a quantity of bits required for representing a sign bit of a signal corresponding to each constellation point in the target probabilistic shaping constellation diagram.

In this implementation, the first communication apparatus segments the first code block, so that each of code subblocks obtained through segmentation includes bit information required for forming a QAM symbol, and each code subblock may independently form a QAM symbol. Therefore, performance of a probabilistic constellation shaping system in a multi-code block scenario is ensured, and it is ensured that a receiving-end device can correctly perform demodulation.

In another possible implementation, the method further includes:

The first communication apparatus obtains a channel state parameter; the first communication apparatus determines supported maximum spectral efficiency (spectral efficiency, SE) based on the channel state parameter; the first communication apparatus determines, based on the maximum spectral efficiency, a first coding rate and a first modulation order and a Maxwell-Boltzmann distribution parameter that correspond to the target probabilistic shaping constellation diagram; and the first communication apparatus determines, based on the first modulation order and the Maxwell-Boltzmann distribution parameter, the symbol type quantity, the probability distribution corresponding to the first symbol of each symbol type, and the bit quantity corresponding to each first symbol. That a first communication apparatus generates a first symbol stream based on a symbol type quantity, a probability distribution corresponding to a first symbol of each symbol type, a bit quantity corresponding to each first symbol, and a first original bit stream includes: The first communication apparatus generates the first symbol stream based on the first coding rate, the symbol type quantity, the probability distribution corresponding to the first symbol of each symbol type, the bit quantity corresponding to each first symbol, and the first original bit stream.

In this implementation, the first communication apparatus determines the supported maximum spectral efficiency based on the channel state parameter, so that the Maxwell-Boltzmann distribution parameter can be adjusted when the first coding rate and the first modulation order are changed. In this way, spectral efficiency can be adjusted more flexibly, and spectral efficiency at a finer granularity can be achieved. Then, the first communication apparatus determines, based on these parameters, the symbol type quantity, the probability distribution corresponding to the first symbol of each symbol type, and the bit quantity corresponding to each first symbol. In this way, a shaping gain of probabilistic constellation shaping modulation is increased, and system modulation performance is improved.

In another possible implementation, when a first coding rate used by the first communication apparatus and a first modulation order corresponding to the target probabilistic shaping constellation diagram remain unchanged, the method further includes:
The first communication apparatus obtains a channel state parameter; the first communication apparatus determines supported maximum spectral efficiency based on the channel state parameter; the first communication apparatus determines, based on the maximum spectral efficiency, a Maxwell-Boltzmann distribution parameter corresponding to the target probabilistic shaping constellation diagram; and the first communication apparatus determines, based on the first modulation order and the Maxwell-Boltzmann distribution parameter, the symbol type quantity, the probability distribution corresponding to the first symbol of each symbol type, and the bit quantity corresponding to each first symbol. That a first communication apparatus generates a first symbol stream based on a symbol type quantity, a probability distribution corresponding to a first symbol of each symbol type, a bit quantity corresponding to each first symbol, and a first original bit stream includes: The first communication apparatus generates the first symbol stream based on the first coding rate, the symbol type quantity, the probability distribution corresponding to the first symbol of each symbol type, the bit quantity corresponding to each first symbol, and the first original bit stream.

In this implementation, the first communication apparatus determines the supported maximum spectral efficiency based on the channel state parameter, so that the Maxwell-Boltzmann distribution parameter can be adjusted when the first coding rate and the first modulation order remain unchanged. This helps flexibly adjust spectral efficiency and achieve spectral efficiency at a finer granularity. Then, the first communication apparatus determines, based on these parameters, the symbol type quantity, the probability distribution corresponding to the first symbol of each symbol type, and the bit quantity corresponding to each first symbol. In this way, a shaping gain of probabilistic constellation shaping modulation is increased, and system modulation performance is improved.

In another possible implementation, the method further includes:
The first communication apparatus obtains a channel state parameter; the first communication apparatus determines, based on the channel state parameter and a first correspondence, a first coding rate and a first modulation order and a Maxwell-Boltzmann distribution parameter that correspond to the target probabilistic shaping constellation diagram, where the first correspondence is a correspondence between the channel state parameter and a modulation and coding parameter, and the modulation and coding parameter includes a coding rate, a modulation order corresponding to a probabilistic shaping constellation diagram, and the Maxwell-Boltzmann distribution parameter; and the first communication apparatus determines, based on the first modulation order and the Maxwell-Boltzmann distribution parameter, the symbol type quantity, the probability distribution corresponding to the first symbol of each symbol type, and the bit quantity corresponding to each first symbol. That a first communication apparatus generates a first symbol stream based on a symbol type quantity, a probability distribution corresponding to a first symbol of each symbol type, a bit quantity corresponding to each first symbol, and a first original bit stream includes: The first communication apparatus generates the first symbol stream based on the first coding rate, the symbol type quantity, the probability distribution corresponding to the first symbol of each symbol type, the bit quantity corresponding to each first symbol, and the first original bit stream.

In this implementation, the first communication apparatus determines, based on the first correspondence and the channel state parameter, the first coding rate and the first modulation order and the Maxwell-Boltzmann distribution parameter that correspond to the target probabilistic shaping constellation diagram. That is, the first communication apparatus determines the modulation and coding parameter by using the predefined first correspondence. This manner is simpler and more efficient. Then, the first communication apparatus determines, based on these parameters, the symbol type quantity, the probability distribution corresponding to the first symbol of each symbol type, and the bit quantity corresponding to each first symbol. In this way, a shaping gain of probabilistic constellation shaping modulation is increased, and system modulation performance is improved.

In another possible implementation, a first net transmission rate corresponding to a case in which the first communication apparatus performs modulation by using a uniform modulation scheme is equal to a product of a second modulation order used in the uniform modulation scheme and a second coding rate; and the method further includes:
The first communication apparatus sets the second modulation order to a first modulation order corresponding to the target probabilistic shaping constellation diagram; the first communication apparatus sets the first net transmission rate to a net transmission rate corresponding to a case in which the first communication apparatus uses probabilistic constellation shaping modulation; the first communication apparatus obtains, through calculation based on the first net transmission rate and the first modulation order, a first coding rate and a Maxwell-Boltzmann distribution parameter corresponding to the target probabilistic shaping constellation diagram; and the first communication apparatus determines, based on the first modulation order and the Maxwell-Boltzmann distribution parameter, the symbol type quantity, the probability distribution corresponding to the first symbol of each symbol type, and the bit quantity corresponding to each first symbol. That a first communication apparatus generates a first symbol stream based on a symbol type quantity, a probability distribution corresponding to a first symbol of each symbol type, a bit quantity corresponding to each first symbol, and a first original bit stream includes: The first communication apparatus generates the first symbol stream based on the first coding rate, the symbol type quantity, the probability distribution corresponding to the first symbol of each symbol type, the bit quantity corresponding to each first symbol, and the first original bit stream.

In this implementation, when the probabilistic constellation shaping modulation and the uniform modulation have a same net transmission rate, the first communication apparatus may implement a lower demodulation threshold by increasing the first coding rate; meet a same transmission requirement under a lower signal-to-noise ratio (signal-to-noise ratio, SNR) condition; or achieve higher spectral efficiency with a same signal-to-noise ratio. In this way, a shaping gain is obtained by using the probabilistic constellation shaping modulation, and system performance is improved.

In another possible implementation, a first net transmission rate corresponding to a case in which the first communication apparatus performs modulation by using a uniform modulation scheme is equal to a product of a second modulation order corresponding to the uniform modulation scheme and a corresponding second coding rate; and the method further includes:
The first communication apparatus sets the second coding rate to a first coding rate used when the first communication apparatus uses probabilistic constellation shaping modulation; the first communication apparatus sets a first modulation order corresponding to the target probabilistic shaping constellation diagram to be equal to the second modulation order plus a first preset value; the first communication apparatus sets the first net transmission rate to a net transmission rate corresponding to a case in which the first communication apparatus uses the probabilistic constellation shaping modulation; the first communication apparatus determines, based on the first net transmission rate and the first modulation order, the Maxwell-Boltzmann distribution parameter corresponding to the target probabilistic shaping constellation diagram; and the first communication apparatus determines, based on the first modulation order and the Maxwell-Boltzmann distribution parameter, the symbol type quantity, the probability distribution corresponding to the first symbol of each symbol type, and the bit quantity corresponding to each first symbol. That a first communication apparatus generates a first symbol stream based on a symbol type quantity, a probability distribution corresponding to a first symbol of each symbol type, a bit quantity corresponding to each first symbol, and a first original bit stream includes: The first communication apparatus generates the first symbol stream based on the first coding rate, the symbol type quantity, the probability distribution corresponding to the first symbol of each symbol type, the bit quantity corresponding to each first symbol, and the first original bit stream.

In this implementation, when the probabilistic constellation shaping modulation and the uniform modulation have a same net transmission rate, the first communication apparatus may implement a lower demodulation threshold by increasing the first modulation order corresponding to the target probabilistic shaping constellation diagram; meet a same transmission requirement under a lower signal-to-noise ratio condition; or achieve higher spectral efficiency under a same signal-to-noise ratio requirement. In this way, a shaping gain brought by the probabilistic constellation shaping modulation is increased, and system performance is improved.

In another possible implementation, the method further includes:
The first communication apparatus sends first indication information to a second communication apparatus, where the first indication information indicates a first modulation and coding scheme (modulation and coding scheme, MCS) and the Maxwell-Boltzmann distribution parameter corresponding to the target probabilistic shaping constellation diagram, and the first MCS indicates the first coding rate and the first modulation order, or the first indication information is for the first coding rate, the first modulation order, and the Maxwell-Boltzmann distribution parameter.

In this implementation, the first communication apparatus may indicate these parameters to the second communication apparatus, so that the second communication apparatus is enabled to perform probabilistic constellation shaping modulation based on these parameters. The first communication apparatus may add an indication of the Maxwell-Boltzmann distribution parameter to an existing MCS indication, or directly indicate the first coding rate, the first modulation order, and the Maxwell-Boltzmann distribution parameter.

In another possible implementation, the method further includes:
The first communication apparatus sends second indication information to a second communication apparatus, where the second indication information indicates a second MCS and an order-increase equal-entropy scheme, or indicates a second MCS and an equal-order coding rate increase scheme, and the second MCS indicates the second modulation order and the second coding rate.

In this implementation, the first communication apparatus may send the second indication information to the second communication apparatus, to indicate the second MCS and a manner (for example, the order-increase equal-entropy scheme or the equal-order coding rate increase scheme) of determining the first coding rate, the first modulation order, and the Maxwell-Boltzmann distribution parameter. Therefore, the second communication apparatus determines the first coding rate, the first modulation order, and the Maxwell-Boltzmann distribution parameter based on the second indication information.

In another possible implementation, the method further includes:
The first communication apparatus obtains the channel state parameter; and if a value of the channel state parameter is greater than or equal to a first threshold, the first communication apparatus performs modulation by using a probabilistic constellation shaping scheme.

In this implementation, the first communication apparatus may perform modulation based on the channel state parameter by using the probabilistic constellation shaping scheme, to select an appropriate modulation scheme based on a channel state environment, thereby improving communication transmission performance.

A second aspect of this application provides a demodulation method, where the method includes:

A second communication apparatus obtains a second QAM symbol stream; the second communication apparatus demodulates the second QAM symbol stream to obtain a third bit stream; the second communication apparatus parses the third bit stream to obtain a system bit stream and a second check bit stream; the second communication apparatus performs decoding based on the system bit stream and the second check bit stream to obtain a fourth bit stream and a fifth bit stream; the second communication apparatus maps the fourth bit stream into a second symbol stream according to a second mapping rule, where the second mapping rule is a mapping relationship between a bit and a second symbol, a bit quantity corresponding to each second symbol in the second symbol stream is a bit quantity required by each second symbol that are represented by using a bit, a symbol type quantity of second symbols included in the second symbol stream and a probability distribution corresponding to a second symbol of each symbol type indicate a probability distribution and a signal amplitude of a quadrature signal of a constellation point in a target probabilistic shaping constellation diagram and a probability distribution and a signal amplitude of the constellation point, and symbols of different symbol types correspond to different probability distributions and/or different signal amplitudes; and the second communication apparatus parses the second symbol stream based on the symbol type quantity, the bit quantity corresponding to each second symbol, and the probability distribution corresponding to each symbol type, to obtain a sixth bit stream.

In the foregoing technical solution, the bit quantity corresponding to each second symbol in the second symbol stream is the bit quantity required by each second symbol that are represented by using a bit, the symbol type quantity of the second symbols included in the second symbol stream and the probability distribution corresponding to the second symbol of each symbol type indicate the probability distribution and the signal amplitude of the quadrature signal of the constellation point in the target probabilistic shaping constellation diagram and the probability distribution and the signal amplitude of the constellation point, and symbols of different symbol types correspond to different probability distributions and/or different signal amplitudes. The second communication apparatus parses the second symbol stream based on the symbol type quantity, the bit quantity corresponding to each second symbol, and the probability distribution corresponding to each symbol type, to obtain the sixth bit stream. In other words, in a process of determining the second symbol stream, the second communication apparatus processes a quadrature signal (an I-channel signal) and an inphase signal (a Q-channel signal) in a QAM symbol together. To be specific, the second communication apparatus determines the second symbol stream by using one de-CCDM, and parses the second symbol stream based on the symbol type quantity, the bit quantity corresponding to each second symbol, and the probability distribution corresponding to each symbol type, to obtain the sixth bit stream, thereby reducing system complexity. In addition, the I-channel signal and the Q-channel signal in the target probabilistic shaping constellation diagram may have a same probability distribution, or may have different probability distributions, to adapt to probability distributions of different symmetry, thereby improving applicability of the solution.

In a possible implementation, the method further includes:
The second communication apparatus performs, according to a first de-interleaving and separation rule, de-interleaving and separation processing on a plurality of second symbols included in the second symbol stream, to obtain a de-interleaved second symbol stream.

That the second communication apparatus parses the second symbol stream based on the symbol type quantity, the bit quantity corresponding to each second symbol, and the probability distribution corresponding to each symbol type, to obtain a sixth bit stream includes:

The second communication apparatus parses the de-interleaved second symbol stream based on the symbol type quantity, the bit quantity corresponding to each second symbol, and the probability distribution corresponding to each symbol type, to obtain the sixth bit stream.

In this implementation, the second communication apparatus performs, according to the first de-interleaving and separation rule, de-interleaving and separation processing on the plurality of second symbols included in the second symbol stream, to obtain the de-interleaved second symbol stream. Therefore, the second communication apparatus correctly parses the second symbol stream.

In another possible implementation, a second symbol in the second symbol stream is a complex-valued symbol in which a value of a real part and a value of an imaginary part are both greater than or equal to 0.

It can be learned from this implementation that a signal amplitude of a signal corresponding to each second symbol in the second symbol stream is greater than or equal to 0. That is, the second symbol stream is for determining the signal amplitude of the signal corresponding to the second symbol, but is not for determining a sign bit of the signal corresponding to the second symbol.

In another possible implementation, the system bit stream includes a plurality of third bits and a plurality of fourth bits, the system bit stream is located in a second code block, and a length of the second code block is greater than a code block length supported by the second communication apparatus; and the method further includes:

The second communication apparatus determines the second code block as M code subblocks, where each of the M code subblocks includes a part of the third bits and a part of the fourth bits, and different code subblocks include different third bits and different fourth bits; and the second communication apparatus determines the second check bit stream as M portions of check bits, where the M portions of check bits one-to-one correspond to the M code subblocks; check bits corresponding to an M^{th} code subblock in the M code subblocks include a first TB CRC bit; M is equal to a rounded-up ratio of the length of the second code block to the code block length supported by the second communication apparatus; and a ratio of a quantity of third bits in the M code subblocks to a second value is equal to a first ratio, the second value is equal to a sum of a quantity of fourth bits included in each code subblock and a quantity of check bits corresponding to each code subblock, and the first ratio is a ratio of a quantity of bits required for representing a signal amplitude corresponding to each constellation point in the target probabilistic shaping constellation diagram to a quantity of bits required for representing a sign bit of a signal corresponding to each constellation point in the target probabilistic shaping constellation diagram. That the second communication apparatus performs decoding based on the system bit stream and the second check bit stream to obtain a fourth bit stream and a fifth bit stream includes: The second communication apparatus decodes each code subblock and the check bits corresponding to each code subblock, to obtain a fifth bit corresponding to each code subblock and a sixth bit corresponding to each code subblock; and the second communication apparatus determines the fifth bit corresponding to each code subblock as the fourth bit stream, and determines the sixth bit corresponding to each code subblock as the fifth bit stream.

In this implementation, the second communication apparatus segments the second code block, splits the second check bit stream, and decodes the M code subblocks and the check bits corresponding to each code subblock, to obtain a corresponding bit stream. Therefore, correct demodulation of the second communication apparatus is implemented, and performance of a probabilistic constellation shaping system in a multi-code block scenario is ensured.

In another possible implementation, the method further includes:
The second communication apparatus receives first indication information of a first communication apparatus, where the first indication information indicates a first MCS and the Maxwell-Boltzmann distribution parameter corresponding to the target probabilistic shaping constellation diagram, and the first MCS indicates a first coding rate used when the first communication apparatus uses probabilistic constellation shaping modulation and a first modulation order corresponding to the target probabilistic shaping constellation diagram; or the first indication information is for the first coding rate and the first modulation order and the Maxwell-Boltzmann distribution parameter that correspond to the target probabilistic shaping constellation diagram; and the second communication apparatus determines, based on the first modulation order and the Maxwell-Boltzmann distribution parameter, the symbol type quantity, the probability distribution corresponding to the second symbol of each symbol type, and the bit quantity corresponding to each second symbol. That the second communication apparatus parses the second symbol stream based on the symbol type quantity, the bit quantity corresponding to each second symbol, and the probability distribution corresponding to each symbol type, to obtain a sixth bit stream includes:

The second communication apparatus parses the second symbol stream based on the first coding rate, the symbol type quantity, the bit quantity corresponding to each second symbol, and the probability distribution corresponding to each symbol type, to obtain the sixth bit stream.

In this implementation, the second communication apparatus receives the first indication information from the first communication apparatus, and determines, based on the parameters indicated by the first indication information, the symbol type quantity, the probability distribution corresponding to the second symbol of each symbol type, and the bit quantity corresponding to each second symbol. In this way, a shaping gain of probabilistic constellation shaping modulation is increased, and system modulation performance is improved.

In another possible implementation, the method further includes:
The second communication apparatus receives second indication information from a first communication apparatus, where the second indication information indicates a second MCS and an order-increase equal-entropy scheme, or indicates a second MCS and an equal-order coding rate increase scheme, and the second MCS indicates a second modulation order corresponding to a uniform modulation scheme and a corresponding second coding rate.

In this implementation, the second indication information indicates the second modulation and coding scheme MCS and the order-increase equal-entropy scheme, or indicates the second MCS and the equal-order coding rate increase scheme. Therefore, the second communication apparatus determines, based on the second indication information, the symbol type quantity, the probability distribution corresponding to the second symbol of each symbol type, and the bit quantity corresponding to each second symbol.

In another possible implementation, if the second indication information indicates the equal-order coding rate increase scheme, the method further includes:
The second communication apparatus determines, by using the equal-order coding rate increase scheme, a first coding rate used when the second communication apparatus uses probabilistic constellation shaping modulation, and a first modulation order and a Maxwell-Boltzmann distribution parameter that correspond to the target probabilistic shaping constellation diagram; and the second communication apparatus determines, based on the first modulation order and the Maxwell-Boltzmann distribution parameter, the symbol type quantity, the probability distribution corresponding to the second symbol of each symbol type, and the bit quantity corresponding to each second symbol. That the second communication apparatus parses the second symbol stream based on the symbol type quantity, the bit quantity corresponding to each second symbol, and the probability distribution corresponding to each symbol type, to obtain a sixth bit stream includes: The second communication apparatus parses the second symbol stream based on the first coding rate, the symbol type quantity, the bit quantity corresponding to each second symbol, and the probability distribution corresponding to each symbol type, to obtain the sixth bit stream.

In this implementation, when the probabilistic constellation shaping modulation and the uniform modulation have a same net transmission rate, the second communication apparatus may implement a lower demodulation threshold by increasing the first coding rate; meet a same transmission requirement under a lower signal-to-noise ratio condition; or achieve higher spectral efficiency under a same signal-to-noise ratio requirement. In this way, a shaping gain brought by the probabilistic constellation shaping modulation is increased, and system performance is improved.

In another possible implementation, a first net transmission rate corresponding to a case in which the first communication apparatus performs modulation by using a uniform modulation scheme is equal to a product of a second modulation order corresponding to the uniform modulation scheme and a corresponding second coding rate.

That the second communication apparatus determines, by using the equal-order coding rate increase scheme, a first coding rate used when the second communication apparatus uses probabilistic constellation shaping modulation, a first modulation order, and a Maxwell-Boltzmann distribution parameter includes: The second communication apparatus sets the second modulation order to the first modulation order corresponding to the target probabilistic shaping constellation diagram; the second communication apparatus sets the first net transmission rate to a net transmission rate corresponding to a case in which the first communication apparatus uses the probabilistic constellation shaping modulation; and the second communication apparatus obtains, through calculation based on the first net transmission rate and the first modulation order, the first coding rate and the Maxwell-Boltzmann distribution parameter corresponding to the target probabilistic shaping constellation diagram.

In this implementation, a specific process in which the first communication apparatus determines, by using the equal-order coding rate increase scheme, the first coding rate used when the second communication apparatus uses the probabilistic constellation shaping modulation, the first modulation order, and the Maxwell-Boltzmann distribution parameter is provided, thereby facilitating implementation of the solution. The second communication apparatus implements higher spectral efficiency by increasing the first coding rate.

In another possible implementation, if the second indication information indicates the order-increase equal-entropy scheme, the method further includes:
The second communication apparatus determines, by using the order-increase equal-entropy scheme, a first coding rate used when the second communication apparatus uses probabilistic constellation shaping modulation, and a first modulation order and a Maxwell-Boltzmann distribution parameter that correspond to the target probabilistic shaping constellation diagram; and the second communication apparatus determines, based on the first modulation order and the Maxwell-Boltzmann distribution parameter, the symbol type quantity, the probability distribution corresponding to the second symbol of each symbol type, and the bit quantity corresponding to each second symbol. That the second communication apparatus parses the second symbol stream based on the symbol type quantity, the bit quantity corresponding to each second symbol, and the probability distribution corresponding to each symbol type, to obtain a sixth bit stream includes: The second communication apparatus parses the second symbol stream based on the first coding rate, the symbol type quantity, the bit quantity corresponding to each second symbol, and the probability distribution corresponding to each symbol type, to obtain the sixth bit stream. In this implementation, when the probabilistic constellation shaping modulation and the uniform modulation have a same net transmission rate, the second communication apparatus may implement a lower demodulation threshold by increasing the first modulation order corresponding to the target probabilistic shaping constellation diagram; meet a same transmission requirement under a lower signal-to-noise ratio condition; or achieve higher spectral efficiency under a same signal-to-noise ratio requirement. In this way, a shaping gain obtained through probabilistic constellation shaping modulation is increased, and system performance is improved.

In another possible implementation, a first net transmission rate corresponding to a case in which the first communication apparatus performs modulation by using a uniform modulation scheme is equal to a product of a second modulation order corresponding to the uniform modulation scheme and a corresponding second coding rate.

That the second communication apparatus determines, by using the order-increase equal-entropy scheme, a first coding rate used when the second communication apparatus uses probabilistic constellation shaping modulation, and a first modulation order and a Maxwell-Boltzmann distribution parameter that correspond to the target probabilistic shaping constellation diagram includes: The second communication apparatus sets the second coding rate to a first coding rate used when the first communication apparatus uses the probabilistic constellation shaping modulation; the second communication apparatus sets the first modulation order corresponding to the target probabilistic shaping constellation diagram to the second modulation order plus a first preset value; the second communication apparatus sets the first net transmission rate to a net transmission rate corresponding to a case in which the second communication apparatus uses the probabilistic constellation shaping modulation; and the second communication apparatus determines, based on the first net transmission rate and the first modulation order, the Maxwell-Boltzmann distribution parameter corresponding to the target probabilistic shaping constellation diagram.

In this implementation, a specific process in which the second communication apparatus determines, by using the order-increase equal-entropy scheme, the first coding rate used when the second communication apparatus uses the probabilistic constellation shaping modulation, and the first modulation order and the Maxwell-Boltzmann distribution parameter that correspond to the target probabilistic shaping constellation diagram is provided, thereby facilitating implementation of the solution. The second communication apparatus implements higher spectral efficiency by increasing the first modulation order.

A third aspect of this application provides a first communication apparatus, including:
a processing module, configured to: generate a first symbol stream based on a symbol type quantity, a probability distribution corresponding to a first symbol of each symbol type, a bit quantity corresponding to each first symbol, and a first original bit stream, where the symbol type quantity and the probability distribution corresponding to the first symbol of each symbol type indicate a probability distribution and a signal amplitude of a quadrature signal of a constellation point in a target probabilistic shaping constellation diagram and a probability distribution and a signal amplitude of an inphase signal of the constellation point, the bit quantity corresponding to each first symbol is a bit quantity required by each first symbol that is represented by using a bit, and first symbols of different symbol types correspond to different probability distributions and/or different signal amplitudes; and generate a first QAM symbol stream based on the first symbol stream and a second original bit stream, where the first QAM symbol stream includes one or more QAM symbols.

In a possible implementation, a first symbol in the first symbol stream is a complex-valued symbol in which a value of a real part and a value of an imaginary part are both greater than or equal to 0.

In another possible implementation, the processing module is further configured to:
interleave and separate, according to a first interleaving and separation rule, a plurality of first symbols included in the first symbol stream, to obtain an interleaved first symbol stream.

The processing module is specifically configured to:
generate the first QAM symbol stream based on the interleaved first symbol stream and the second original bit stream.

In another possible implementation, the processing module is specifically configured to:
map the first symbol stream into a first bit stream according to a first mapping rule, where the first mapping rule is a mapping relationship between a first symbol and a bit, and a quantity of bits to which each first symbol is mapped is the bit quantity corresponding to each first symbol;
perform encoding based on the first bit stream and the second original bit stream to obtain a first check bit stream;
determine a second bit stream based on the first check bit stream and the second original bit stream; and
generate the first QAM symbol stream based on the first symbol stream and the second bit stream.

In another possible implementation, each first symbol in the first symbol stream corresponds to one constellation point in the target probabilistic shaping constellation diagram; and
each first symbol in the first symbol stream indicates a signal amplitude of a constellation point corresponding to the first symbol, and the second bit stream indicates a sign bit of a quadrature signal of the constellation point corresponding to each first symbol in the first symbol stream and a sign bit of an inphase signal of the constellation point.

In another possible implementation, each first symbol in the first symbol stream indicates the signal amplitude of the constellation point corresponding to the first symbol, a (2i-1)^{th} bit in the second bit stream indicates a sign bit of a quadrature signal of a constellation point corresponding to an i^{th} first symbol in the first symbol stream, a 2i^{th} bit in the second bit stream indicates a sign bit of an inphase signal of the constellation point corresponding to the i^{th} first symbol in the first symbol stream, and i is an integer greater than or equal to 1.

In another possible implementation, each first symbol in the first symbol stream corresponds to a quadrature signal or an inphase signal of one constellation point in the target probabilistic shaping constellation diagram; and
each first symbol in the first symbol stream indicates a signal amplitude of the quadrature signal or the inphase signal corresponding to the first symbol, and the second bit stream indicates a sign bit of the quadrature signal or the inphase signal corresponding to each first symbol in the first symbol stream.

In another possible implementation, an odd-numbered first symbol in the first symbol stream corresponds to a quadrature signal of a constellation point in the target probabilistic shaping constellation diagram, and an even-numbered first symbol in the first symbol stream corresponds to an inphase signal of a constellation point in the target probabilistic shaping constellation diagram.

The odd-numbered first symbol in the first symbol stream indicates a signal amplitude of the quadrature signal corresponding to the first symbol, the even-numbered first symbol in the first symbol stream indicates a signal amplitude of the inphase signal corresponding to the first symbol, an odd-numbered bit in the second bit stream indicates a sign bit of a quadrature signal corresponding to the odd-numbered first symbol, and an even-numbered bit in the second bit stream indicates a sign bit of an inphase signal corresponding to the even-numbered first symbol.

In another possible implementation, the first bit stream and the second original bit stream are located in a first code block, a length of the first code block is greater than a code block length supported by the first communication apparatus, the first bit stream includes a plurality of first bits, and the second original bit stream includes a plurality of second bits.

The processing module is specifically configured to:
determine a first TB CRC bit based on the first bit stream and the second original bit stream;
determine the first code block as M code subblocks;
separately encode the M code subblocks, to obtain CB CRC bits corresponding to the M code subblocks; and
determine the first check bit stream based on the CB CRC bits corresponding to the M code subblocks and the first TB CRC bit.

The first check bit stream includes check bits corresponding to the M code subblocks, check bits corresponding to an M^{th} code subblock in the M code subblocks include a CB CRC bit corresponding to the M^{th} code subblock and the first TB CRC bit, each of the M code subblocks includes a part of the plurality of first bits and a part of the plurality of second bits, and different code subblocks include different first bits and different second bits; M is equal to a rounded-up ratio of the length of the first code block to the code block length supported by the first communication apparatus; and a ratio of a quantity of first bits included in each of the M code subblocks to a first value is equal to a first ratio, the first value is equal to a sum of a quantity of second bits included in each code subblock and a quantity of check bits included in each code subblock, and the first ratio is a ratio of a quantity of bits required for representing a signal amplitude corresponding to each constellation point in the target probabilistic shaping constellation diagram to a quantity of bits required for representing a sign bit of a signal corresponding to each constellation point in the target probabilistic shaping constellation diagram.

In another possible implementation, the processing module is further configured to:
obtain a channel state parameter;
determine supported maximum spectral efficiency based on the channel state parameter;
determine, based on the maximum spectral efficiency, a first coding rate and a first modulation order and a Maxwell-Boltzmann distribution parameter that correspond to the target probabilistic shaping constellation diagram; and
determine, based on the first modulation order and the Maxwell-Boltzmann distribution parameter, the symbol type quantity, the probability distribution corresponding to the first symbol of each symbol type, and the bit quantity corresponding to each first symbol.

The processing module is specifically configured to:
generate the first symbol stream based on the first coding rate, the symbol type quantity, the probability distribution corresponding to the first symbol of each symbol type, the bit quantity corresponding to each first symbol, and the first original bit stream.

In another possible implementation, when a first coding rate used by the first communication apparatus and a first modulation order corresponding to the target probabilistic shaping constellation diagram remain unchanged, the processing module is further configured to:
obtain a channel state parameter;
determine supported maximum spectral efficiency based on the channel state parameter;
determine, based on the maximum spectral efficiency, a Maxwell-Boltzmann distribution parameter corresponding to the target probabilistic shaping constellation diagram; and
determine, based on the first modulation order and the Maxwell-Boltzmann distribution parameter, the symbol type quantity, the probability distribution corresponding to the first symbol of each symbol type, and the bit quantity corresponding to each first symbol.

The processing module is specifically configured to:
generate the first symbol stream based on the first coding rate, the symbol type quantity, the probability distribution corresponding to the first symbol of each symbol type, the bit quantity corresponding to each first symbol, and the first original bit stream.

In another possible implementation, the processing module is further configured to:
obtain a channel state parameter;
determine, based on the channel state parameter and a first correspondence, a first coding rate and a first modulation order and a Maxwell-Boltzmann distribution parameter that correspond to the target probabilistic shaping constellation diagram, where the first correspondence is a correspondence between the channel state parameter and a modulation and coding parameter, and the modulation and coding parameter includes a coding rate, a modulation order corresponding to a probabilistic shaping constellation diagram, and the Maxwell-Boltzmann distribution parameter; and
determine, based on the first modulation order and the Maxwell-Boltzmann distribution parameter, the symbol type quantity, the probability distribution corresponding to the first symbol of each symbol type, and the bit quantity corresponding to each first symbol.

The processing module is specifically configured to:
generate the first symbol stream based on the first coding rate, the symbol type quantity, the probability distribution corresponding to the first symbol of each symbol type, the bit quantity corresponding to each first symbol, and the first original bit stream.

In another possible implementation, a first net transmission rate corresponding to a case in which the first communication apparatus performs modulation by using a uniform modulation scheme is equal to a product of a second modulation order used in the uniform modulation scheme and a second coding rate; and the processing module is further configured to:
set the second modulation order to a first modulation order corresponding to the target probabilistic shaping constellation diagram;
set the first net transmission rate to a net transmission rate corresponding to a case in which the first communication apparatus uses probabilistic constellation shaping modulation;
obtain, through calculation based on the first net transmission rate and the second modulation order, a first coding rate and a Maxwell-Boltzmann distribution parameter corresponding to the target probabilistic shaping constellation diagram; and
determine, based on the first modulation order and the Maxwell-Boltzmann distribution parameter, the symbol type quantity, the probability distribution corresponding to the first symbol of each symbol type, and the bit quantity corresponding to each first symbol.

The processing module is specifically configured to:
generate the first symbol stream based on the first coding rate, the symbol type quantity, the probability distribution corresponding to the first symbol of each symbol type, the bit quantity corresponding to each first symbol, and the first original bit stream.

In another possible implementation, a first net transmission rate corresponding to a case in which the first communication apparatus performs modulation by using a uniform modulation scheme is equal to a product of a second modulation order corresponding to the uniform modulation scheme and a corresponding second coding rate. The processing module is further configured to:
set the second coding rate to a first coding rate used when the first communication apparatus uses probabilistic constellation shaping modulation;
set the first modulation order corresponding to the target probabilistic shaping constellation diagram to the second modulation order plus a first preset value;
set the first net transmission rate to a net transmission rate corresponding to a case in which the first communication apparatus uses the probabilistic constellation shaping modulation;
determine, based on the first net transmission rate and the first modulation order, the Maxwell-Boltzmann distribution parameter corresponding to the target probabilistic shaping constellation diagram; and
determine, based on the first modulation order and the Maxwell-Boltzmann distribution parameter, the symbol type quantity, the probability distribution corresponding to the first symbol of each symbol type, and the bit quantity corresponding to each first symbol.

The processing module is specifically configured to:
generate the first symbol stream based on the first coding rate, the symbol type quantity, the probability distribution corresponding to the first symbol of each symbol type, the bit quantity corresponding to each first symbol, and the first original bit stream.

In another possible implementation, the first communication apparatus further includes a transceiver module.

The transceiver module is configured to send first indication information to a second communication apparatus, where
the first indication information indicates a first MCS and the Maxwell-Boltzmann distribution parameter corresponding to the target probabilistic shaping constellation diagram, and the first MCS indicates the first coding rate and the first modulation order, or the first indication information is for the first coding rate, the first modulation order, and the Maxwell-Boltzmann distribution parameter.

In another possible implementation, the first communication apparatus further includes a transceiver module.

The transceiver module sends second indication information to a second communication apparatus, where the second indication information indicates a second MCS and an order-increase equal-entropy scheme, or indicates a second MCS and an equal-order coding rate increase scheme, and the second MCS indicates the second modulation order and the second coding rate.

In another possible implementation, the processing module is further configured to:
obtain a channel state parameter; and
if the value of the channel state parameter is greater than or equal to the first threshold, perform modulation in a probabilistic constellation shaping scheme.

A fourth aspect of this application provides a second communication apparatus, including:
a processing module, configured to: obtain a second QAM symbol stream; demodulate the second QAM symbol stream to obtain a third bit stream; parse the third bit stream to obtain a system bit stream and a second check bit stream; perform decoding based on the system bit stream and the second check bit stream to obtain a fourth bit stream and a fifth bit stream; map the fourth bit stream into a second symbol stream according to a second mapping rule, where the second mapping rule is a mapping relationship between a bit and a second symbol, a bit quantity corresponding to each second symbol in the second symbol stream is a bit quantity required by each second symbol that are represented by using a bit, a symbol type quantity of second symbols included in the second symbol stream and a probability distribution corresponding to a second symbol of each symbol type indicate a probability distribution and a signal amplitude of a quadrature signal of a constellation point in a target probabilistic shaping constellation diagram and a probability distribution and a signal amplitude of the constellation point, and symbols of different symbol types correspond to different probability distributions and/or different signal amplitudes; and parse the second symbol stream based on the symbol type quantity, the bit quantity corresponding to each second symbol, and the probability distribution corresponding to each symbol type, to obtain a sixth bit stream.

In a possible implementation, the processing module is further configured to:
perform, according to a first de-interleaving and separation rule, de-interleaving and separation processing on a plurality of second symbols included in the second symbol stream, to obtain a de-interleaved second symbol stream.

The processing module is specifically configured to:
parse the de-interleaved second symbol stream based on the symbol type quantity, the bit quantity corresponding to each second symbol, and the probability distribution corresponding to each symbol type, to obtain the sixth bit stream.

In another possible implementation, a second symbol in the second symbol stream is a complex-valued symbol in which a value of a real part and a value of an imaginary part are both greater than or equal to 0.

In another possible implementation, the system bit stream includes a plurality of third bits and a plurality of fourth bits, the system bit stream is located in a second code block, and a length of the second code block is greater than a code block length supported by the second communication apparatus; and the processing module is further configured to:
determine the second code block as M code subblocks, where each of the M code subblocks includes a part of the third bits and a part of the fourth bits, and different code subblocks include different third bits and different fourth bits; and
determine the second check bit stream as M portions of check bits, where the M portions of check bits one-to-one correspond to the M code subblocks; check bits corresponding to an M^{th} code subblock in the M code subblocks include a first TB CRC bit; M is equal to a rounded-up ratio of the length of the second code block to the code block length supported by the second communication apparatus; and a ratio of a quantity of third bits in the M code subblocks to a second value is equal to a first ratio, the second value is equal to a sum of a quantity of fourth bits included in each code subblock and a quantity of check bits corresponding to each code subblock, and the first ratio is a ratio of a quantity of bits required for representing a signal amplitude corresponding to each constellation point in the target probabilistic shaping constellation diagram to a quantity of bits required for representing a sign bit of a signal corresponding to each constellation point in the target probabilistic shaping constellation diagram.

The processing module is specifically configured to:
decode each code subblock and the check bits corresponding to each code subblock, to obtain a fifth bit corresponding to each code subblock and a sixth bit corresponding to each code subblock; and
determine the fifth bit corresponding to each code subblock as the fourth bit stream, and determine the sixth bit corresponding to each code subblock as the fifth bit stream.

In another possible implementation, the first communication apparatus further includes a transceiver module.

The transceiver module is configured to receive first indication information of a first communication apparatus, where
the first indication information indicates a first MCS and the Maxwell-Boltzmann distribution parameter corresponding to the target probabilistic shaping constellation diagram, and the first MCS indicates a first coding rate used when the first communication apparatus uses probabilistic constellation shaping modulation and a first modulation order corresponding to the target probabilistic shaping constellation diagram; or the first indication information is for the first coding rate, and the first modulation order and the Maxwell-Boltzmann distribution parameter that correspond to the target probabilistic shaping constellation diagram.

The processing module is further configured to:
determine, based on the first modulation order and the Maxwell-Boltzmann distribution parameter, the symbol type quantity, the probability distribution corresponding to the second symbol of each symbol type, and the bit quantity corresponding to each second symbol.

The processing module is specifically configured to:
parse the second symbol stream based on the first coding rate, the symbol type quantity, the bit quantity corresponding to each second symbol, and the probability distribution corresponding to each symbol type, to obtain the sixth bit stream.

In another possible implementation, the first communication apparatus further includes a transceiver module.

The transceiver module receives second indication information from a first communication apparatus, where
the second indication information indicates a second MCS and an order-increase equal-entropy scheme, or indicates a second MCS and an equal-order coding rate increase scheme, and the second MCS indicates a second modulation order corresponding to a uniform modulation scheme and a corresponding second coding rate.

In another possible implementation, if the second indication information indicates the equal-order coding rate increase scheme, the processing module is further configured to:
determine, by using the equal-order coding rate increase scheme, a first coding rate used when the second communication apparatus uses probabilistic constellation shaping modulation, and a first modulation order and a Maxwell-Boltzmann distribution parameter that correspond to the target probabilistic shaping constellation diagram; and
determine, based on the first modulation order and the Maxwell-Boltzmann distribution parameter, the symbol type quantity, the probability distribution corresponding to the second symbol of each symbol type, and the bit quantity corresponding to each second symbol.

The processing module is specifically configured to:
parse the second symbol stream based on the first coding rate, the symbol type quantity, the bit quantity corresponding to each second symbol, and the probability distribution corresponding to each symbol type, to obtain the sixth bit stream.

In another possible implementation, a first net transmission rate corresponding to a case in which the first communication apparatus performs modulation by using a uniform modulation scheme is equal to a product of a second modulation order corresponding to the uniform modulation scheme and a corresponding second coding rate.

The processing module is specifically configured to:
set the second modulation order to a first modulation order corresponding to the target probabilistic shaping constellation diagram;
set the first net transmission rate to a net transmission rate corresponding to a case in which the first communication apparatus uses probabilistic constellation shaping modulation; and
obtain, through calculation based on the first net transmission rate and the first modulation order, the first coding rate and the Maxwell-Boltzmann distribution parameter corresponding to the target probabilistic shaping constellation diagram.

In another possible implementation, if the second indication information indicates the equal-order coding rate increase scheme, the processing module is further configured to:
determine, by using the equal-order coding rate increase scheme, a first coding rate used when the second communication apparatus uses probabilistic constellation shaping modulation, and a first modulation order and a Maxwell-Boltzmann distribution parameter that correspond to the target probabilistic shaping constellation diagram; and
determine, based on the first modulation order and the Maxwell-Boltzmann distribution parameter, the symbol type quantity, the probability distribution corresponding to the second symbol of each symbol type, and the bit quantity corresponding to each second symbol.

The processing module is specifically configured to:
parse the second symbol stream based on the first coding rate, the symbol type quantity, the bit quantity corresponding to each second symbol, and the probability distribution corresponding to each symbol type, to obtain the sixth bit stream.

In another possible implementation, a first net transmission rate corresponding to a case in which the first communication apparatus performs modulation by using a uniform modulation scheme is equal to a product of a second modulation order corresponding to the uniform modulation scheme and a corresponding second coding rate.

The processing module is specifically configured to:
set the second coding rate to a first coding rate used when the first communication apparatus uses the probabilistic constellation shaping modulation;
set the first modulation order corresponding to the target probabilistic shaping constellation diagram to the second modulation order plus a first preset value;
set the first net transmission rate to a net transmission rate corresponding to a case in which the second communication apparatus uses the probabilistic constellation shaping modulation; and
determine, based on the first net transmission rate and the first modulation order, the Maxwell-Boltzmann distribution parameter corresponding to the target probabilistic shaping constellation diagram.

A fifth aspect of this application provides a first communication apparatus, where the first communication apparatus includes a processor. The processor is configured to invoke a computer program or computer instructions in a memory, so that the processor implements any implementation of the first aspect.

Optionally, the first communication apparatus further includes the memory.

Optionally, the memory and the processor are integrated together.

Optionally, the communication apparatus further includes a transceiver, and the processor is configured to control the transceiver to receive and send signals.

A sixth aspect of this application provides a second communication apparatus, where the second communication apparatus includes a processor. The processor is configured to invoke a computer program or computer instructions in a memory, so that the processor implements any implementation of the second aspect.

Optionally, the second communication apparatus further includes the memory.

Optionally, the memory and the processor are integrated together.

Optionally, the communication apparatus further includes a transceiver, and the processor is configured to control the transceiver to receive and send signals.

A seventh aspect of this application provides a first communication apparatus. The first communications device includes a processor, and the processor is configured to perform any implementation of the first aspect.

An eighth aspect of this application provides a second communication apparatus, where the second communication apparatus includes a processor, and the processor is configured to perform any implementation of the second aspect.

A ninth aspect of embodiments of this application provides a first communication apparatus, where the first communication apparatus includes a logic circuit, and the logic circuit is configured to perform a processing operation in any implementation of the first aspect. Optionally, the first communication apparatus further includes an input/output interface, and the input/output interface is configured to perform a receiving/sending operation in any implementation of the first aspect.

A tenth aspect of embodiments of this application provides a second communication apparatus, where the second communication apparatus includes a logic circuit, and the logic circuit is configured to perform a processing operation in any implementation of the second aspect. Optionally, the second communication apparatus includes an input/output interface, and the input/output interface is configured to perform a receiving/sending operation in any implementation of the second aspect.

An eleventh aspect of embodiments of this application provides a computer program product including instructions. When the instructions are run on a computer, the computer is enabled to perform any implementation of the first aspect and the second aspect.

A twelfth aspect of embodiments of this application provides a computer-readable storage medium, including computer instructions. When the computer instructions are run on a computer, the computer is enabled to perform any implementation of the first aspect and the second aspect.

A thirteenth aspect of embodiments of this application provides a chip apparatus, including a processor, configured to connect to a memory, and invoke a program stored in the memory, to enable the processor to perform any implementation of the first aspect and the second aspect.

A fourteenth aspect of embodiments of this application provides a communication system. The communication system includes the first communication apparatus according to the first aspect and the second communication apparatus according to the second aspect.

According to the foregoing technical solutions, it can be learned that embodiments of this application have the following advantages:

It can be learned from the foregoing technical solution that the first communication apparatus generates the first symbol stream based on the symbol type quantity, the probability distribution corresponding to the first symbol of each symbol type, the bit quantity corresponding to each first symbol, and the first original bit stream. The symbol type quantity and the probability distribution corresponding to the first symbol of each symbol type indicate the probability distribution and the signal amplitude of the quadrature signal of the constellation point in the target probabilistic shaping constellation diagram and the probability distribution and the signal amplitude of the inphase signal of the constellation point. The bit quantity corresponding to each first symbol is the bit quantity required by each first symbol that is represented by using a bit, and first symbols of different symbol types correspond to different probability distributions and/or different signal amplitudes. The first communication apparatus generates the first QAM symbol stream based on the first symbol stream and the second original bit stream, where the first QAM symbol stream includes one or more QAM symbols. It can be learned that, in the technical solutions of this application, the symbol type quantity and the probability distribution corresponding to the first symbol of each symbol type indicate the probability distribution and the signal amplitude of the quadrature signal of the constellation point in the target probabilistic shaping constellation diagram and the probability distribution and the signal amplitude of the inphase signal of the constellation point. In other words, in a process of determining the first symbol stream, the first communication apparatus processes a quadrature signal (an I-channel signal) and an inphase signal (a Q-channel signal) in a QAM symbol together. That is, the first communication apparatus generates the first symbol stream by using one CCDM, and generates the first QAM symbol stream based on the first symbol stream and the second original bit stream. There is no need to use two CCDMs to generate a symbol stream corresponding to the I-channel signal and a symbol stream corresponding to the Q-channel signal and then combine the two symbol streams into a QAM symbol, thereby reducing system complexity.

### BRIEF DESCRIPTION OF DRAWINGS

FIG. 1A is a diagram of a communication system according to an embodiment of this application;
FIG. 1B is a schematic flowchart of a probabilistic amplitude shaping system according to an embodiment of this application;
FIG. 2 is a diagram of an embodiment of a modulation method according to an embodiment of this application;
FIG. 3 is a diagram of a target probabilistic shaping constellation diagram according to an embodiment of this application;
FIG. 4 is a schematic flowchart of a modulation method according to an embodiment of this application;
FIG. 5 is a diagram of an embodiment of a modulation method and a demodulation method according to an embodiment of this application;
FIG. 6 is a schematic flowchart of a demodulation method according to an embodiment of this application;
FIG. 7 is a diagram of an LDPC encoding process according to an embodiment of this application;
FIG. 8 is a diagram of another embodiment of a modulation method and a demodulation method according to an embodiment of this application;
FIG. 9 is a diagram of another embodiment of a modulation method and a demodulation method according to an embodiment of this application;
FIG. 10 is a diagram of a structure of a first communication apparatus according to an embodiment of this application;
FIG. 11 is a diagram of a structure of a second communication apparatus according to an embodiment of this application;
FIG. 12 is a diagram of another structure of a first communication apparatus according to an embodiment of this application;
FIG. 13 is a diagram of another structure of a second communication apparatus according to an embodiment of this application;
FIG. 14 is a diagram of a structure of a terminal device according to an embodiment of this application; and
FIG. 15 is a diagram of a structure of a communication apparatus according to an embodiment of this application.

### DESCRIPTION OF EMBODIMENTS

Embodiments of this application provide a modulation method, a demodulation method, and a related apparatus, to reduce system complexity.

In descriptions of this application, unless otherwise specified, "/" means "or". For example, A/B may mean A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c may be singular or plural.

A communication system to which the technical solutions of this application are applicable includes but is not limited to a long term evolution (long term evolution, LTE) system, a 5th generation communication (the fifth-generation, 5G) mobile communication system, a mobile communication system (for example, a 6G mobile communication system) after a 5G network, a device to device (device to device, D2D) communication system, a vehicle to everything (vehicle to everything, V2X) communication system, a system integrating a plurality of communication systems, a new radio (new radio, NR) system, or a non-terrestrial network (non-terrestrial network, NTN) system.

For ease of understanding a method provided in embodiments of this application, the following describes a system architecture of the method provided in embodiments of this application. It may be understood that the system architecture described in embodiments of this application is intended to describe the technical solutions in embodiments of this application more clearly, and does not constitute any limitation on the technical solutions provided in embodiments of this application.

A communication system to which this application is applicable includes a first communication apparatus and a second communication apparatus. The first communication apparatus may perform communication transmission with the second communication apparatus. Optionally, the first communication apparatus is a terminal device, and the second communication apparatus is a network device. Alternatively, the first communication apparatus is a network device, and the second communication apparatus is a terminal device.

The following describes a terminal device and a network device in this application.

The terminal device may be a wireless terminal device that can receive scheduling and indication information of the network device. The wireless terminal device may be a device that provides a user with voice and/or data connectivity, a handheld device with a wireless connection function, or another processing device connected to a wireless modem.

The terminal device is also referred to as user equipment (user equipment, UE), a mobile station (mobile station, MS), a mobile terminal (mobile terminal, MT), or the like, and is a device that includes a wireless communication function (providing voice/data connectivity for a user), for example, a handheld device or a vehicle-mounted device that has a wireless connection function. Currently, some examples of the terminal device are: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The network device may be a device in a wireless network. For example, the network device may be a radio access network (radio access network, RAN) node that connects the terminal device to the wireless network, and may also be referred to as an access network device.

The access network device is an apparatus that is deployed in a radio access network to provide a wireless communication function for the terminal device. The access network device is a base station, and the base station is a macro base station, a micro base station (also referred to as a small cell), a relay station, an access point (access point, AP), a wearable device, a vehicle-mounted device, or the like in various forms. The base station may also be a transmission reception point (transmission reception point, TRP), a transmission measurement function (transmission measurement function, TMF), or the like. For example, the base station in embodiments of this application may be a base station in new radio (new radio, NR). The base station in 5G NR may also be referred to as a transmission reception point (transmission reception point, TRP), a transmission point (transmission point, TP), a next generation NodeB (next generation NodeB, ngNB), an evolved NodeB (evolved NodeB, eNB, or eNodeB) in a long term evolution (long term evolution, LTE) system.

The following describes some possible scenarios to which the technical solutions of this application are applicable.

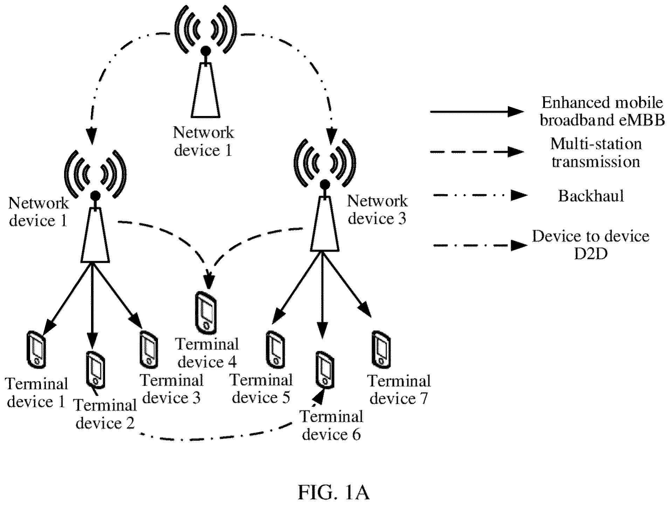

FIG. 1A is a diagram of a communication system according to an embodiment of this application. Refer to FIG. 1A. A communication system includes at least one network device and at least one terminal device.

As shown in FIG. 1A, a scenario to which this application is applicable includes but is not limited to a scenario that has a high timing requirement or a high transmission rate requirement, such as multi-station transmission, backhaul, wireless to the home (wireless to the x, WTTx), enhanced mobile broadband (enhanced mobile broadband, eMBB), or D2D. The multi-station transmission means that a same terminal device simultaneously transmits a signal to a plurality of transmission points (the transmission point may be the network device shown in FIG. 1A).

The following describes some technical terms in the technical solutions of this application.
1. A quadrature amplitude modulation (quadrature amplitude modulation, QAM) signal includes a quadrature signal and an inphase signal. The QAM signal may also be referred to as a QAM symbol, and one QAM symbol may be represented as a ± bj, where a represents the quadrature signal, which may also be referred to as an I-channel signal; and b represents the inphase signal, which may also be referred to as a Q-channel signal.
2. Uniform modulation (uniform modulation, UM) is a modulation scheme in a constellation diagram obtained through uniform modulation, where probability distributions of constellation points are the same and geometric positions of the constellation points are regular. For example, QAM modulation belongs to uniform modulation.
3. Non-uniform modulation (non-uniform modulation, NUM) includes geometric constellation shaping (geometric constellation shaping, GCS) and probabilistic constellation shaping (probabilistic constellation shaping, PCS). In a constellation diagram obtained through non-uniform modulation, probability distributions of constellation points are different, geometric positions of constellation points are irregular or uneven, or probability distributions are different and geometric positions of constellation points are irregular or uneven.
4. Geometric constellation shaping: A shaping gain is achieved by modifying a geometric position of constellation mapping. Probability distributions of constellation points are even, and a probability distribution of each point is equal.
5. Probabilistic constellation shaping: A shaping gain is achieved by modifying probability distributions of constellation points. A probability distribution of each point is not limited to be passed, but a geometric position of constellation mapping remains unchanged.
6. Constellation point in each circle of a probabilistic shaping constellation diagram: Constellation points in circles of the probabilistic shaping constellation diagram have equal distances to the origin of coordinates. The probabilistic shaping constellation diagram may also be referred to as a constellation diagram based on probabilistic constellation shaping. For ease of description, the probabilistic shaping constellation diagram is described below.

At present, non-uniform modulation (non-uniform modulation, NUM) reduces a required signal-to-noise ratio based on a shaping gain. The shaping gain increases as a modulation order increases, and higher-order constellations have higher shaping gains, such that system performance and spectral efficiency are further improved. Non-uniform modulation includes geometric constellation shaping and probabilistic constellation shaping. The technical solutions of this application are mainly applicable to probabilistic constellation shaping modulation.

The following describes a probabilistic constellation shaping system and a system procedure.

According to the information theory proposed by Shannon, in an additive white Gaussian noise (additive white gaussian noise, AWGN) channel, an upper bound of a channel capacity may be expressed as: $C = {log}_{2} \left(1+SNR\right)$

*C* is the channel capacity, *SNR* is a signal-to-noise ratio of the channel, and log₂(1+*SNR*) means taking a log of (1+*SNR*) by using 2 as a base.

Compared with a conventional equal-probability QAM constellation diagram (that is, probability distributions of constellation points in a constellation diagram are the same), Maxwell-Boltzmann (Maxwell-Boltzmann) distribution may bring a shaping gain of a maximum of 1.53 dB (decibel). A probability distribution expression of each constellation point may be expressed as: ${P}_{X} \left({x}_{i}\right) = \frac{1}{{\sum }_{{x}_{j} ∈ χ} {e}^{- ν {\left|{x}_{j}\right|}^{2}}} {e}^{- ν {\left|{x}_{i}\right|}^{2}} , {x}_{i} ∈ χ$

χ={*x*₁,*x*₂,...,*x_{M}*} represents a coordinate set of constellation points included in M-order QAM. For example, coordinates of a constellation point are *xᵢ* = aᵢ +bᵢj , where aᵢ represents a quadrature signal of the constellation point, and bᵢ represents an inphase signal of the constellation point. V is a Maxwell-Boltzmann (Maxwell-Boltzmann) distribution parameter. A larger parameter indicates a larger shaping gain, that is, a larger probability difference between inner and outer circles in a probabilistic shaping constellation diagram. In this case, a source entropy of the probabilistic shaping constellation diagram may be expressed as: $H \left(A\right) = {\sum }_{i = 1}^{M} - {P}_{X} \left({x}_{i}\right) ⋅ {log}_{2} \left({P}_{X}\left({x}_{i}\right)\right)$

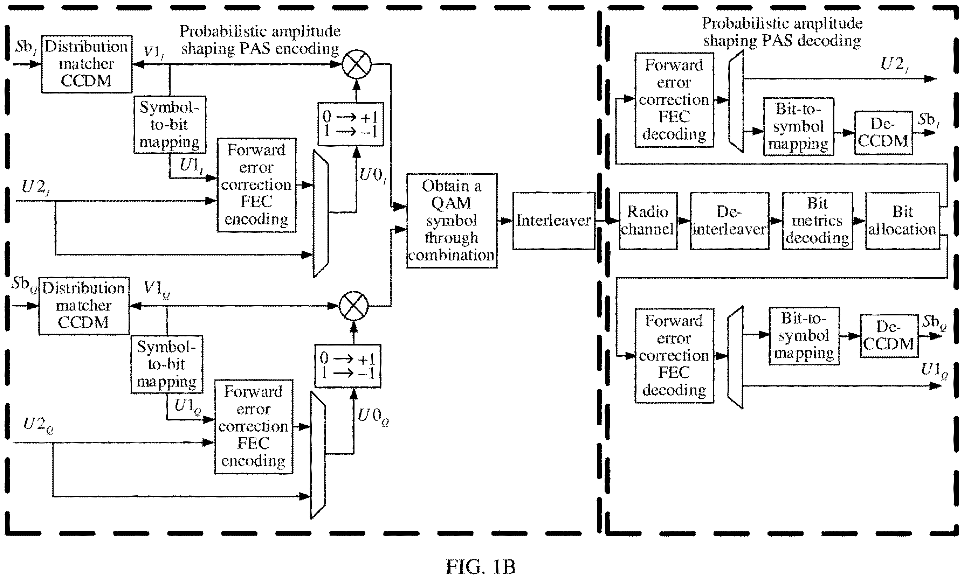

Probabilistic constellation shaping includes probabilistic amplitude shaping (probabilistic amplitude shaping, PAS) and probabilistic fold shaping (probabilistic fold shaping, PFS). The following describes an implementation process of a PAS system with reference to FIG. 1B. The PAS system is mainly for performing probabilistic shaping on a probabilistic constellation shaping pulse amplitude modulation (probabilistic constellation shaping pulse amplitude modulation, PCS-PAM) signal. The PAS system may be for an even-order QAM constellation diagram, for example, a 16-QAM constellation diagram or a 64-QAM constellation diagram. In this case, a QAM signal is split into an I-channel PAM signal and a Q-channel PAM signal, and a PCS-QAM signal may be generated by using the PAS system. A process of generating an I-channel PAM signal obtained through probabilistic shaping is similar to a process of generating a Q-channel PAM signal obtained through probabilistic shaping.

For example, as shown in FIG. 1B, the process of generating the I-channel PAM signal obtained through probabilistic shaping includes: An original bit stream *S*b*_{I}* is converted into a symbol stream *V*1*_{I}* having a corresponding probability distribution by using a CCDM. Then, the symbol stream *V*1*_{I}* is converted into a bit stream *U*1*_{I}* through mapping. A check bit stream is obtained through FEC encoding on a bit stream *U*2*_{I}* and the bit stream *U*1*_{I}*. For example, an FEC encoder may select digital video broadcast-satellite 2-low-density parity-check (digital video broadcast-satellite 2-low density parity check, DVBS2-LDPC) code as an FEC code, where a code length of the FEC code is fixed at 64800, and a coding rate may be 1/4, 1/3, 2/5, 1/2, 3/5, 2/3, 3/4, 4/5, 5/6, 8/9, or 9/10. Because error correction bits of the LDPC code have a characteristic that an occurrence probability of "0" is basically equal to that of "1", the check bit stream and the bit stream *U*2*_{I}* are combined into a corresponding bit stream *U*0*_{I},* and bits in the bit stream *U*0*_{I}* are respectively used as sign bits of symbols in the symbol stream *V*1*_{I}* to determine a quadrant in which a symbol output by the CCDM is located, to obtain the I-channel PAM signal obtained through probabilistic shaping. A process of generating the Q-channel PAM signal obtained through probabilistic shaping is similar. Therefore, the I-channel PAM signal obtained through probabilistic shaping and the Q-channel PAM signal obtained through probabilistic shaping may be obtained, and then the I-channel PAM signal obtained through probabilistic shaping and the Q-channel PAM signal obtained through probabilistic shaping are combined to obtain the QAM signal.

After the QAM signal passes through a channel, a receiver separately decodes the I signal and the Q signal. Processing of each channel of signals at the receiver includes operations such as FEC decoding, bit-to-symbol mapping, and de-CCDM. The receiver may calculate a bit error ratio (bit error ratio, BER) based on decoded bits and original bits.

Probabilistic fold shaping is mainly for an odd-order QAM symbol. A process of probabilistic fold shaping is similar to the foregoing process of generating the PAM signal obtained through probabilistic shaping in the PAS system. However, two sign bits need to be generated each time for mapping to four quadrants, and a dimension of a symbol mapped by the CCDM is a quantity of constellation points in each quadrant.

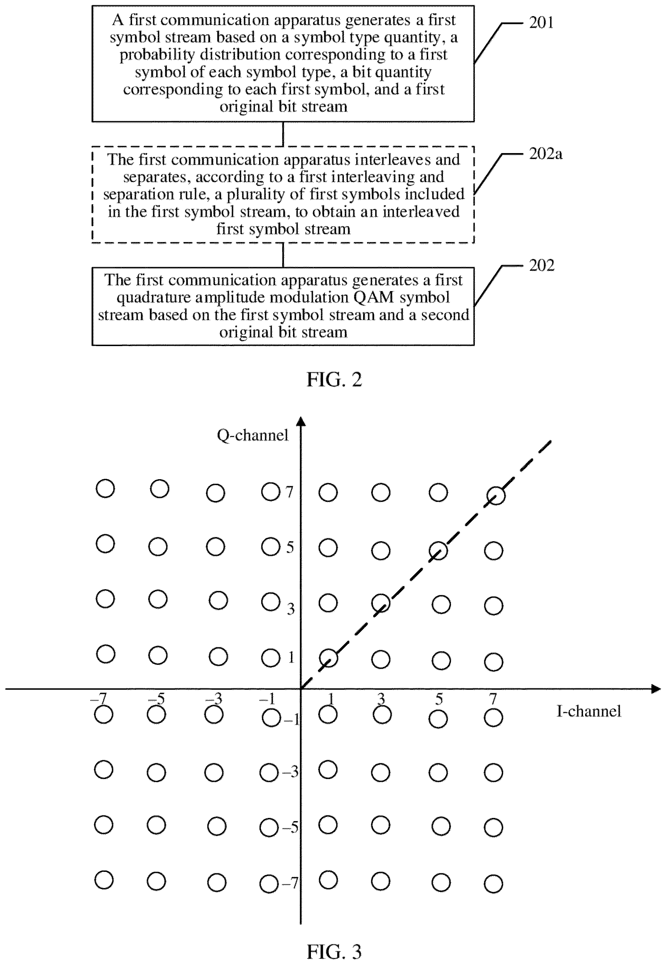

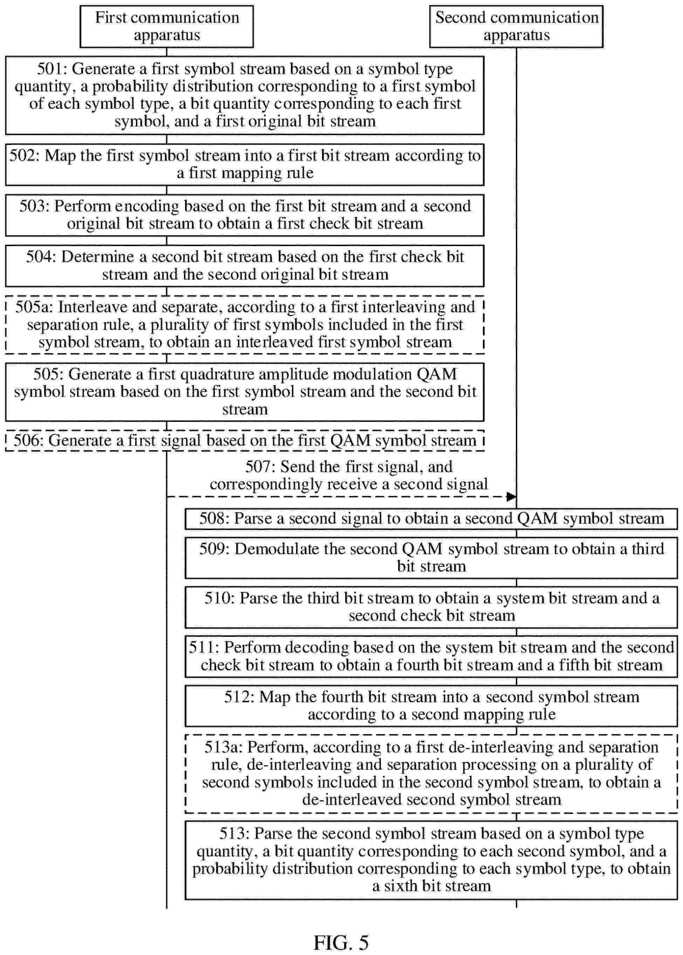

It can be learned that, in the foregoing technical solution, in a process of generating the QAM symbol, the I-channel signal and the Q-channel signal of the QAM signal are separately processed, and one CCDM needs to be used for processing of the I-channel signal and one CCDM needs to be used for processing of the Q-channel signal. For a demodulator device, two de-CCDMs are also required to demodulate the I-channel PAM signal obtained through probabilistic shaping and the Q-channel PAM signal obtained through probabilistic shaping. Therefore, in terms of modulation, in the foregoing technical solution, in the process of generating the QAM symbol, the I-channel signal and the Q-channel signal of the QAM signal are separately processed, and one CCDM needs to be used for processing of the I-channel signal and one CCDM needs to be used for processing of the Q-channel signal, resulting in high system complexity. In terms of demodulation, one de-CCDM also needs to be used for demodulation of the I-channel signal and one de-CCDM also needs to be used for demodulation of the Q-channel signal, resulting in high system complexity. Then, in a current probabilistic constellation shaping system, only I-channel and Q-channel constellations with a same probability distribution can be generated, and I-channel and Q-channel constellations with different probability distributions cannot be flexibly generated. As a result, adaptability of an application scenario is limited, and flexibility is low. In view of this, this application provides a corresponding technical solution, to reduce system complexity and improve flexibility of an application scenario of the solution. For details, refer to the following related descriptions of embodiments shown in FIG. 2 and FIG. 5.

The following describes a manner of calculating spectral efficiency of a probabilistic constellation shaping system.

Assuming that a code length supported by an FEC encoder is *N_{c}*, variables in the probabilistic constellation shaping system need to satisfy the following relational expressions: $U {2}_{I} + U {1}_{I} = {N}_{C} ⋅ {R}_{C}$ $U {2}_{I} + {N}_{C} ⋅ \left(1-{R}_{C}\right) = V {1}_{I}$ $U {1}_{I} = V {1}_{I} ⋅ L$

*R_{C}* is a coding rate of the encoder, L=log(P)-1, and P is a quantity of PAS signal levels.

With reference to the PAS system described above, it can be learned that, if 64QAM is used as an example, two PAS systems need to be used, each PAS system needs to implement a probabilistic shaping symbol stream of PCS-PAM8, *N_{C}* =64800, and P=8. Assuming that the coding rate is *R_{C}* =0.9, and *V*1*_{I}* =21600, *L*=log₂(*P*)-1=log₂(8)-1=2 and *U*1*_{I}* =43200. Therefore, *U*2*_{I}* =*N_{C}*·*R_{C}*-*U*1*_{I}* =15120, and *U*2*_{I}*+*N_{C}*(1*-R_{C}*)=*V*1*_{I}*. In addition, *U*1*_{I}* = *R_{DM}·V*1*_{I}*, and *R_{DM}* is a bit rate used by a CCDM. In this case, spectral efficiency of the PAS system is: ${R}_{all} = \left(S{b}_{I}+U{2}_{I}\right) / V {1}_{I}$

When *U*2*_{I}*=0, *R_{C}*=(P-1)/P. In this case, a value of *R_{C}* is a lower limit of the coding rate of the PAS system.

The following describes measurement indicators of the probabilistic constellation shaping system.

At present, generalized mutual information (generalized mutual information, GMI) and normalized generalized mutual information (normalized generalized mutual information, NGMI) are for measuring maximum spectral efficiency and a maximum error-correction bit rate that can be achieved by bit-error-free transmission after the probabilistic constellation shaping system uses soft-decision to correct error codes. An expression of the GMI is as follows: $GMI \approx \frac{1}{N} {\sum }_{k = 0}^{N - 1} \left[-{log}_{2}\left({P}_{k}\right)\right] - \frac{1}{N} {\sum }_{k = 0}^{N - 1} {\sum }_{i = 1}^{M} \left[{log}_{2}\left(1+{e}^{{\left(-1\right)}^{{b}_{k , i}} {Λ}_{k , i}}\right)\right]$

*N* is a quantity of constellation points in a probabilistic shaping constellation diagram, *M* is a modulation order corresponding to the probabilistic shaping constellation diagram, *Pₖ* is a probability distribution of a k^{th} constellation point in the probabilistic shaping constellation diagram, *b_{k,i}* is an i^{th} bit in bits representing a k^{th} QAM symbol in a QAM symbol stream generated based on the probabilistic shaping constellation diagram, and Λ*_{k,i}* is a bit log likelihood ratio (log likelihood ratio, LLR): ${Λ}_{k , i} = log \frac{{\sum }_{x ∈ {χ}_{1}^{i}} {q}_{Y | X} \left({y}_{k}| x\right) {P}_{X} \left(x\right)}{{\sum }_{x ∈ {χ}_{0}^{i}} {q}_{Y | X} \left({y}_{k}| x\right) {P}_{X} \left(x\right)}$

A subset ${χ}_{0}^{i}$ includes a QAM symbol whose i^{th} bit is 0 in bits representing QAM symbols in χ, and a subset ${χ}_{1}^{i}$ includes a QAM symbol whose i^{th} bit is 1 in bits indicating QAM symbols in X. χ = {*x*₁,*x*₂,...,*x_{M}*} represents a coordinate set of constellation points included in M-order QAM, that is, a coordinate set of constellation points included in the probabilistic shaping constellation diagram. *q*_{Y|X} (*yₖ* | *x*) is a probability density function of a channel. For an AWGN channel that uses bit interleaved coded modulation (bit interleaved coded modulation, BICM) and whose noise variance is σ² , *q*_{*Y*|*X*} (*yₖ* | *x*) may be expressed as: ${q}_{Y | X} \left({y}_{k}| x\right) = \frac{1}{\sqrt{2 {πσ}^{2}}} {e}^{- \frac{{\left|{y}_{k}-x\right|}^{2}}{2 {σ}^{2}}}$

The NGMI may be for measuring a maximum bit rate of bit-error-free transmission in an ideal state of the system. NGMI of an M-QAM PCS system may be expressed as: $NGMI = 1 - \frac{H \left(A\right) - GMI}{{log}_{2} M}$

NGMI of a QAM system using uniform distribution may be expressed as: $NGMI = \frac{GMI}{{log}_{2} M}$

An achievable information rate (achievable information rate, AIR) of the system without considering a coding scheme or the like can be expressed as: $AIR = GMI ⋅ BW$

However, the rate cannot be implemented in an actual PCS system, and is only a maximum achievable rate in an ideal state. Therefore, currently, a net transmission rate (net transmission rate, NTR) is used to measure an actual transmission rate of the system: $NTR = \left(H\left(A\right)-\left(1-{R}_{C}\right)M\right) ⋅ BW$

Provided that *NGMI* > *R_{C}* is met, bit-error-free transmission whose net rate is the *NTR* in an ideal state can be implemented. However, due to factors such as an LDPC code and a channel that are actually used, bit-error-free transmission cannot be implemented by directly using an error-correction code with a bit rate equal to that of the NGMI, and a specific margin needs to be reserved. This also indicates that, provided that a value of the NGMI is greater than a threshold shown in Table 1, a PAS or PFS system that uses an LDPC as an error-correction code can implement bit-error-free transmission at the bit rate. A 6.25% redundant step code is used as an outer code to ensure bit-error-free transmission. Therefore, an actual rate is slightly lower than *R_{C}*.

**Table 1**

| Coding rate *R_{C}* | NGMI threshold | Total bit rate |
|---|---|---|
| 1/4 | 0.30 | 0.24 |
| 1/3 | 0.37 | 0.31 |
| 2/5 | 0.44 | 0.38 |
| 1/2 | 0.54 | 0.47 |
| 3/5 | 0.64 | 0.56 |
| 2/3 | 0.71 | 0.63 |
| 3/4 | 0.78 | 0.71 |
| 4/5 | 0.83 | 0.75 |
| 5/6 | 0.86 | 0.78 |
| 8/9 | 0.91 | 0.84 |
| 9/10 | 0.92 | 0.85 |

In an NR system, data links such as a physical downlink shared channel (physical downlink shared channel, PDSCH) and a physical uplink shared channel (physical uplink shared channel, PUSCH) use LDPC coding. A specific data channel coding process includes: transport block (transport block, TB) cyclic redundancy check (cyclic redundancy check, CRC) addition, LDPC base graph (base graph, BG) selection, code block (code block, CB) segmentation and code block-level CRC addition, LDPC coding, rate matching (rate matching, RM) and bit interleaving, code block concatenation, and the like. Rate matching of the LDPC is independently performed for each code block, and rate matching is implemented through puncturing, repetition, or shortening based on parameters such as a bit rate, a system bit, and an actual physical resource length. An output after code block concatenation is an encoded code word (code word, CW). The code word is for subsequent modulation and is mapped to QAM symbols of different orders according to a configuration. The QAM symbols are processed by using procedures such as layer mapping, precoding, resource mapping, orthogonal frequency division multiplexing (orthogonal frequency division multiplexing, OFDM), or discrete fourier transformation spread (discrete fourier transformation spread, DFTS) symbol generation, and finally sent by an antenna port to a receiver through a channel.

In a new radio (new radio, NR) system, different MCS tables are configured for modulation and coding schemes (modulation and coding schemes, MCSs) for a physical downlink shared channel (physical downlink shared channel, PDSCH) and a physical uplink shared channel (physical uplink shared channel, PUSCH). For example, details are shown in the following Table 2. A network device ensures transmission efficiency and transmission quality of a service of a terminal device by using the MCS. When channel quality is good, a higher-order modulation scheme and a lower target coding rate are used. The network device or the terminal device selects a corresponding parameter based on a channel quality indicator (channel quality indicator, CQI) or based on an MCS indicated in downlink control information (downlink control information, DCI), or uplink control information (uplink control information, UCI). For example, as shown in Table 2, each order of MCS corresponds to one target coding rate. An MCS with a higher order indicates a higher target coding rate, higher transmission efficiency, and a higher throughput. As shown in Table 2, the MCS table includes parameters such as a modulation order, a target coding rate, and spectral efficiency.

In the following Table 2, different spectral efficiency is implemented by changing a modulation order and a target coding rate. An interval between modulation orders is reduced by changing the target coding rate, and spectral efficiency is closer. Configuration diversity of the target coding rate further increases LDPC encoding complexity, and needs to be implemented by adjusting different redundant bits.

**Table 2**

| Modulation and coding scheme index (MCS index) | Modulation order Qₘ (Modulation Order) | Target coding rate R | Spectral efficiency (Spectral efficiency) |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved (reserved) | |
| 30 | 4 | Reserved (reserved) | |
| 31 | 6 | Reserved (reserved) | |

The technical solution of this application is described below with reference to specific embodiments.

FIG. 2 is a diagram of an embodiment of a modulation method according to an embodiment of this application. Refer to FIG. 2. The method includes the following steps.

201: A first communication apparatus generates a first symbol stream based on a symbol type quantity, a probability distribution corresponding to a first symbol of each symbol type, a bit quantity corresponding to each first symbol, and a first original bit stream.

The symbol type quantity and the probability distribution corresponding to the first symbol of each symbol type indicate a probability distribution and a signal amplitude of a quadrature signal of a constellation point in a target probabilistic shaping constellation diagram and a probability distribution and a signal amplitude of an inphase signal of the constellation point. The bit quantity corresponding to each first symbol is a bit quantity required by each first symbol that is represented by using a bit. First symbols of different symbol types correspond to different probability distributions and/or different signal amplitudes.

The following describes, with reference to two examples, the symbol type quantity, the probability distribution corresponding to the first symbol of each symbol type, and the bit quantity corresponding to each first symbol.

Example 1: As shown in FIG. 3, 64QAM is used as an example. It indicates that a quantity of bits required by a 64-QAM constellation diagram is 6, and signal amplitudes of constellation points include 1, 3, 5, and 7. In this case, bits representing an I-channel signal are 3 bits, and one of the bits is a sign bit of the I-channel signal. Bits representing a Q-channel signal are also 3 bits, and one of the bits is a sign bit of the Q-channel signal.

If a finally required target probabilistic shaping constellation diagram (that is, PCS 64QAM) is I/Q symmetric, only one channel of signal needs to be considered. It can be learned from the foregoing analysis that a symbol that does not carry a sign bit and that is required in each channel of signal needs to be represented by using 2 bits. Therefore, it can be learned that the symbol type quantity is 4, and the bit quantity corresponding to each first symbol is 2. Herein, an example in which the four symbol types are respectively 1, 3, 5, and 7 is used for description. A probability distribution corresponding to the first symbol of each symbol type is determined with reference to the foregoing formula (2). For example, when a source entropy H of the target probabilistic shaping constellation diagram is 5.6, and a value of Maxwell-Boltzmann v is 0.0336, it may be determined, through calculation, that a probability distribution of the symbol "1" is 0.4149, a probability distribution of the symbol "3" is 0.3171, a probability distribution of the symbol "5" is 0.1852, and a probability distribution of the symbol "7" is 0.0827. It can be learned that the first symbol stream includes four symbol types: 1, 3, 5, and 7. A ratio of the symbol "1" to first symbols included in the first symbol stream is 0.4149, a ratio of the symbol "3" to the first symbols included in the first symbol stream is 0.3171, a ratio of the symbol "5" to the first symbols included in the first symbol stream is 0.1852, and a ratio of the symbol "7" to the first symbols included in the first symbol stream is 0.0827.

It can be learned from the foregoing example 1 that each first symbol in the first symbol stream corresponds to the quadrature signal or the inphase signal of the constellation point, and the quadrature signal or the inphase signal corresponding to the first symbol of each symbol type has a different signal amplitude.

For example, a signal amplitude corresponding to the symbol "1" is 1, a signal amplitude corresponding to the symbol "3" is 3, a signal amplitude corresponding to the symbol "5" is 5, and a signal amplitude corresponding to the symbol "7" is 7.

It should be noted that the four symbol types may alternatively be 0, 1, 2, and 3. 0 indicates that the signal amplitude of the quadrature signal or the inphase signal of the constellation point corresponding to 0 is 1, 1 indicates that the signal amplitude of the quadrature signal or the inphase signal of the constellation point corresponding to 1 is 3, 2 indicates that the signal amplitude of the quadrature signal or the inphase signal of the constellation point corresponding to 2 is 5, and 3 indicates that the signal amplitude of the quadrature signal or the inphase signal of the constellation point corresponding to 3 is 7. This is not specifically limited in this application. That is, a value of a first symbol in the first symbol stream is a signal amplitude of a quadrature signal or an inphase signal of a constellation point corresponding to the symbol, or may indicate a signal amplitude of a quadrature signal or an inphase signal of a constellation point corresponding to the symbol, but a value thereof is not the signal amplitude of the quadrature signal or the inphase signal of the constellation point corresponding to the symbol. The following describes the technical solution of this application by using an example in which the value of the first symbol in the first symbol stream is the signal amplitude of the quadrature signal or the inphase signal of the constellation point corresponding to the symbol.

Example 2: As shown in FIG. 3, 64QAM is used as an example. It indicates that a quantity of bits required by a 64-QAM constellation diagram is 6, and signal amplitudes of constellation points include 1, 3, 5, and 7.

If a finally required target probabilistic shaping constellation diagram (that is, PCS 64QAM) is not I/Q symmetric but quadrant symmetric, a symbol representing each quadrant requires six bits, where two bits are sign bits, and are for determining a quadrant in which the symbol falls. Therefore, a symbol that does not carry a sign bit and that is required in this case needs to be represented by using four bits. Therefore, it can be learned that the bit quantity corresponding to each first symbol is four bits. If probability distributions of constellation points falling in a quadrant are different, the symbol type quantity is 16. A probability distribution corresponding to the first symbol of each symbol type is determined with reference to the foregoing formula (2). The first symbol stream includes 16 symbol types, which are specifically {1+1j, 1+3j, 1+5j, 1+7j, ..., 7+lj, 7+3j, 7+5j, 7+7j}.

It should be noted that the 16 symbol types may alternatively be replaced with 0 to 15. 0 represents a first symbol 1 + 1j, 1 represents a first symbol 1+3j, 2 represents a first symbol 1+5j, and so on. This is not specifically limited in this application. That is, the first symbol in the first symbol stream may be a representation of a constellation point corresponding to the first symbol, or may indicate a constellation point corresponding to the first symbol. The following describes the technical solution of this application by using an example in which the first symbol in the first symbol stream may be a representation of a constellation point corresponding to the first symbol.

It can be learned from the foregoing Example 2 that each first symbol in the first symbol stream corresponds to one constellation point, and probability distributions of first symbols of different symbol types are different. For example, a signal amplitude of a constellation point corresponding to 1+2j is $\sqrt{{1}^{2} + {2}^{2}}$, and a signal amplitude of a constellation point corresponding to 2+1j is $\sqrt{{2}^{2} + {1}^{2}}$. It can be learned that, the signal amplitude corresponding to 1+2j is the same as the signal amplitude corresponding to 2+1j, but a probability distribution corresponding to 1+2j is different from a probability distribution corresponding to 2+1j.

For specific manners of determining the symbol type quantity, the probability distribution corresponding to the first symbol of each symbol type, and the bit quantity corresponding to each first symbol, refer to the following related descriptions.

The first symbol stream includes a plurality of first symbols, and a ratio of the first symbol of each symbol type in the first symbol stream to the first symbols included in the first symbol stream is equal to the probability distribution corresponding to the first symbol of each symbol type. That is, the first symbol included in the first symbol stream has a corresponding probability distribution. The symbol type quantity and the probability distribution corresponding to the first symbol of each symbol type indicate the probability distribution and the signal amplitude of the quadrature signal of the constellation point in the target probabilistic shaping constellation diagram and the probability distribution and the signal amplitude of the inphase signal of the constellation point. In other words, in a process of determining the first symbol stream, the first communication apparatus processes a quadrature signal (an I-channel signal) and an inphase signal (a Q-channel signal) in a QAM symbol together.

The first symbol in the first symbol stream is an integer greater than or equal to 0 in both a real part and an imaginary part.

In a possible implementation, each first symbol in the first symbol stream corresponds to a quadrature signal or an inphase signal of one constellation point in the target probabilistic shaping constellation diagram.

For example, it can be learned from the foregoing example 1 that the first symbol stream includes four symbol types: 1, 3, 5, and 7. The first symbol in the first symbol stream may correspond to an I signal of the constellation point or a Q signal of the constellation point.

In another possible implementation, each first symbol in the first symbol stream corresponds to one constellation point in the target probabilistic shaping constellation diagram.

For example, it can be learned from the foregoing example 2 that the first symbol stream includes 16 symbol types, which are specifically {1+1j, 1+3j, 1+5j, 1+7j, ..., 7+1j, 7+3j, 7+5j, 7+7j }. A first symbol 1+1j corresponds to a constellation point whose value of a horizontal coordinate is 1 and whose value of a vertical coordinate is 1 in the target probabilistic shaping constellation diagram shown in the figure. A first symbol 1+3j corresponds to a constellation point whose value of a horizontal coordinate is 1 and whose value of a vertical coordinate is 3 in the target probabilistic shaping constellation diagram shown in the FIG. 3.

It can be learned from the foregoing example 1 and example 2 that, the technical solution of this application is applicable to both a probabilistic shaping constellation diagram in which an I channel and a Q channel have a same probability distribution, and is also applicable to a probabilistic shaping constellation diagram in which an I channel and a Q channel have different probability distributions. The technical solution has rich application scenarios, wide applicability, and high flexibility.

Specifically, the first communication apparatus receives a third original bit stream, and determines or divides the third original bit stream as or into the first original bit stream and a second original bit stream. In other words, the third original bit stream includes the first original bit stream and the second original bit stream. Then, the first communication apparatus generates the first symbol stream based on the first original bit stream, the symbol type quantity, the probability distribution corresponding to the first symbol of each symbol type, and the bit quantity corresponding to each first symbol.

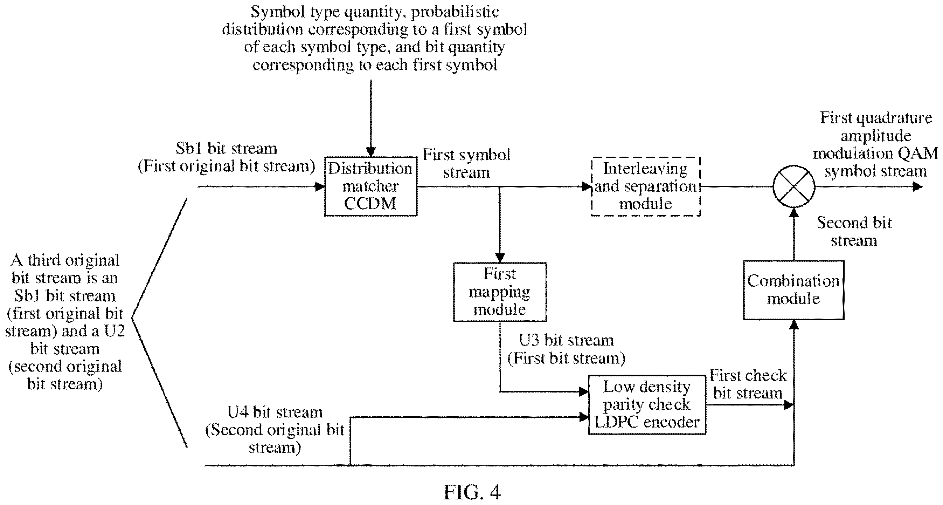

For example, as shown in FIG. 4, the first communication apparatus receives the third original bit stream, and determines or divides the third original bit stream as or into an Sb1 bit stream and a U2 bit stream. In other words, the third original bit stream includes the Sb1 bit stream and the U2 bit stream. The Sb1 bit stream is the first original bit stream in step 201, and the U2 bit stream is the second original bit stream in step 201. The first communication apparatus inputs the Sb1 bit stream, the symbol type quantity, the probability distribution corresponding to the first symbol of each symbol type, and the bit quantity corresponding to each first symbol into a CCDM, and the CCDM outputs the first symbol stream.

202. The first communication apparatus generates a first QAM symbol stream based on the first symbol stream and the second original bit stream.

The first QAM symbol stream includes one or more QAM symbols. The one or more QAM symbols constitute the target probabilistic shaping constellation diagram.

Optionally, the embodiment shown in FIG. 2 further includes step 202a, and step 202a may be performed before step 202.

202a: The first communication apparatus interleaves and separates, according to a first interleaving and separation rule, a plurality of first symbols included in the first symbol stream, to obtain an interleaved first symbol stream.

Optionally, the first interleaving and separation rule includes: The first communication apparatus exchanges positions of the first symbols in the first symbol stream in a preset order.

For example, in the foregoing example 1, the first symbol stream is {111111111111333333335555557777}, and the first communication apparatus processes the first symbol stream according to the first interleaving and separation rule, to obtain an interleaved first symbol stream {133157315711131353311551537117}. The target probabilistic shaping constellation diagram is I/Q symmetric. Therefore, in the interleaved first symbol stream, an odd-numbered first symbol corresponds to a quadrature signal of a constellation point, and an even-numbered first symbol corresponds to an inphase signal of a constellation point. Alternatively, in the interleaved first symbol stream, an even-numbered first symbol corresponds to a quadrature signal of a constellation point, and an odd-numbered first symbol corresponds to an inphase signal of a constellation point. Alternatively, in the interleaved first symbol stream, a first symbol in the first half corresponds to a quadrature signal of a constellation point, and a first symbol in the second half corresponds to an inphase signal of a constellation point.

In this implementation, the first communication apparatus interleaves, according to the first interleaving and separation rule, the first symbols included in the first symbol stream. This helps ensure an I-channel probability distribution and a Q-channel probability distribution. For example, the first symbol stream is a { 111111111111333333335555557777}. If interleaving is not performed, first symbols with a same probability distribution are centralized together, which is not conducive to ensuring an I-channel probability distribution and a Q-channel probability distribution. In addition, a centralized error in the first symbol stream is avoided, and decoding performance and error correction performance are affected. The first communication apparatus may decentralize, through interleaving processing, first symbols in errors in the interleaved first symbol stream, that is, decentralize the first symbols in errors in the first symbol stream, thereby improving robustness of decoding error correction.

Based on step 202a, step 202 specifically includes:
The first communication apparatus generates the first QAM symbol stream based on the interleaved first symbol stream and the second original bit stream.

Optionally, with reference to an embodiment shown in FIG. 5, the following describes in detail a specific process in which the first communication apparatus generates the first QAM symbol stream based on the interleaved first symbol stream and the second original bit stream.

Optionally, the first communication apparatus generates a first signal based on the first QAM symbol, and sends the first signal to a second communication apparatus. Correspondingly, the second communication apparatus receives a second signal from the first communication apparatus. The first signal is the same as or different from the second signal. The second communication apparatus parses the second signal. For a specific process, refer to related descriptions of the embodiment shown in FIG. 5 below.

Optionally, the following describes some possible implementations in which the first communication apparatus uses a probabilistic constellation shaping modulation scheme.
1. The first communication apparatus may use the probabilistic constellation shaping modulation scheme by default.
2. The first communication apparatus obtains a channel state parameter, and the first communication apparatus uses the probabilistic constellation shaping modulation scheme when the channel state parameter is greater than a first threshold.

A value of the first threshold may be set by considering at least one of the following factors: a channel condition, a value of a shaping gain in different channel states, comparison of system overheads, and the like.

In a possible implementation, the channel state parameter is a channel quality indicator (channel quality indicator, CQI), a block error rate (block error rate, BLER), or a throughput that is obtained by the first communication apparatus through measurement. The first communication apparatus is a terminal device.

In another possible implementation, the channel state parameter is a CQI, a BLER, or a throughput that is obtained by the second communication apparatus through measurement. The first communication apparatus is a network device, and the second communication apparatus is a terminal device.

3. The first communication apparatus is a terminal device, and the first communication apparatus receives a modulation scheme indication from the second communication apparatus. The modulation scheme indication indicates the first communication apparatus to use the probabilistic constellation shaping modulation scheme. The second communication apparatus is a network device.

In this embodiment of this application, the first communication apparatus generates the first symbol stream based on the symbol type quantity, the probability distribution corresponding to the first symbol of each symbol type, the bit quantity corresponding to each first symbol, and the first original bit stream. The symbol type quantity and the probability distribution corresponding to the first symbol of each symbol type indicate the probability distribution and the signal amplitude of the quadrature signal of the constellation point in the target probabilistic shaping constellation diagram and the probability distribution and the signal amplitude of the inphase signal of the constellation point. The bit quantity corresponding to each first symbol is the bit quantity required by each first symbol that is represented by using a bit, and first symbols of different symbol types correspond to different probability distributions and/or different signal amplitudes. The first communication apparatus generates the first QAM symbol stream based on the first symbol stream and the second original bit stream, where the first QAM symbol stream includes one or more QAM symbols. It can be learned that, in the technical solutions of this application, the symbol type quantity and the probability distribution corresponding to the first symbol of each symbol type indicate the probability distribution and the signal amplitude of the quadrature signal of the constellation point in the target probabilistic shaping constellation diagram and the probability distribution and the signal amplitude of the inphase signal of the constellation point. In other words, in a process of determining the first symbol stream, the first communication apparatus processes a quadrature signal (an I-channel signal) and an inphase signal (a Q-channel signal) in a QAM symbol together. That is, the first communication apparatus generates the first symbol stream by using one CCDM, and generates the first QAM symbol stream based on the first symbol stream and the second original bit stream. There is no need to use two CCDMs to generate a symbol stream corresponding to the I-channel signal and a symbol stream corresponding to the Q-channel signal and then combine the two symbol streams into a QAM symbol, thereby reducing system complexity. The I channel and the Q channel in the target probabilistic shaping constellation diagram may have a same probability distribution, or may have different probability distributions, to adapt to probability distributions of different symmetry. Therefore, application scenarios are rich, applicability is wide, and flexibility is high.

FIG. 5 is a diagram of an embodiment of a modulation method and a demodulation method according to an embodiment of this application. Refer to FIG. 5. The method includes the following steps.

501: A first communication apparatus generates a first symbol stream based on a symbol type quantity, a probability distribution corresponding to a first symbol of each symbol type, a bit quantity corresponding to each first symbol, and a first original bit stream.

Step 501 is similar to step 201 in the embodiment shown in FIG. 2. For details, refer to related descriptions of step 201 in the embodiment shown in FIG. 2. Details are not described herein again.

502: The first communication apparatus maps the first symbol stream into a first bit stream according to a first mapping rule.

The first mapping rule is a mapping relationship between a first symbol and a bit, and a quantity of bits to which each first symbol is mapped is the bit quantity corresponding to each first symbol.

For example, with reference to the foregoing example 1, the first symbol stream includes four symbol types: 1, 3, 5, and 7. The first mapping rule may be represented as the following Table 3:

**Table 3**

| First symbol | Bits |
|---|---|
| 1 | 10 |
| 3 | 11 |
| 5 | 01 |
| 7 | 00 |

It can be learned from Table 3 that 1 is mapped into bits 10, 3 is mapped into bits 11, 5 is mapped into bits 01, and 7 is mapped into bits 00. It can be learned that the first communication apparatus maps the first symbol stream into the first bit stream according to Table 1.

For example, with reference to the foregoing example 2, the first symbol stream includes 16 symbol types: 1+1j, 1+3j, 1+5j, 1+7j, ..., 7+1j, 7+3j, 7+5j, and 7+7j. The first mapping rule may be represented as the following Table 4:

**Table 4**

| First symbol | Bits |
|---|---|
| 1+1j | 0000 |
| 1+3j | 0001 |
| 1+5j | 0010 |
| 1+7j | 0011 |
| 3+1j | 0100 |
| 3+3j | 0101 |
| 3+5j | 0110 |
| 3+7j | 0111 |
| 5+1j | 1000 |
| 5+3j | 1001 |
| 5+5j | 1010 |
| 5+7j | 1011 |
| 7+lj | 1100 |
| 7+3j | 1101 |
| 7+5j | 1110 |
| 7+7j | 1111 |

It can be learned that the first communication apparatus maps the first symbol stream into the first bit stream according to the first mapping rule shown in Table 4.

For example, with reference to the foregoing example 2, the first symbol stream includes 16 symbol types: 1+1j, 1+3j, 1+5j, 1+7j, ..., 7+1j, 7+3j, 7+5j, and 7+7j. The first mapping rule may be represented as the following Table 5:

**Table 5**

| First symbol | Bits |
|---|---|
| 1+7j | 0000 |
| 1+5j | 0001 |
| 1+1j | 0010 |
| 1+3j | 0011 |
| 3+7j | 0100 |
| 3+5j | 0101 |
| 3+1j | 0110 |
| 3+3j | 0111 |
| 7+7j | 1000 |
| 7+5j | 1001 |
| 7+lj | 1010 |
| 7+3j | 1011 |
| 5+7j | 1100 |
| 5+5j | 1101 |
| 5+1j | 1110 |
| 5+3j | 1111 |

It can be learned that the first communication apparatus maps the first symbol stream into the first bit stream according to the first mapping rule shown in Table 5.

It should be noted that the first mapping rule may be preconfigured, or may be defined in a communication protocol. This is not specifically limited in this application.

For example, as shown in FIG. 4, a CCDM in the first communication apparatus outputs the first symbol stream, and a first mapping module maps the first symbol stream into a U3 bit stream, and outputs the U3 bit stream. The U3 bit stream is the first bit stream in step 502.

503: The first communication apparatus performs encoding based on the first bit stream and a second original bit stream to obtain a first check bit stream.

For example, as shown in FIG. 4, a U3 bit stream and a U4 bit stream are input to an LDPC encoder as system bits, and the LDPC encoder outputs a first check bit stream after encoding. The U3 bit stream is the first bit stream in step 503, and the U4 bit stream is the second original bit stream in the 503.

504: The first communication apparatus determines a second bit stream based on the first check bit stream and the second original bit stream.

Optionally, the first communication apparatus combines the second original bit stream with the first check bit stream, to obtain the second bit stream. That is, the second bit stream includes the first check bit stream and the second original bit stream. For example, as shown in FIG. 4, a combination module combines the first check bit stream with the second original bit stream to obtain the second bit stream.

505: The first communication apparatus generates a first QAM symbol stream based on the first symbol stream and the second bit stream.

The first QAM symbol stream includes one or more QAM symbols, and the one or more QAM symbols constitute the target probabilistic shaping constellation diagram.

Specifically, that the first communication apparatus generates a QAM symbol in the first QAM symbol stream includes: The first communication apparatus uses a first symbol in the first symbol stream as a signal amplitude of a signal corresponding to the first symbol; and the first communication apparatus uses a bit in the second bit stream as a sign bit of a signal corresponding to a first symbol corresponding to the bit.

Optionally, the embodiment shown in FIG. 5 further includes step 505a, and step 505a may be performed before step 505.

505a: The first communication apparatus interleaves and separates, according to a first interleaving and separation rule, a plurality of first symbols included in the first symbol stream, to obtain an interleaved first symbol stream.

Step 505a is similar to step 202a in the embodiment shown in FIG. 2. For details, refer to related descriptions of step 202a in the embodiment shown in FIG. 2. Details are not described herein again.

Based on step 505a, optionally, step 505 specifically includes:
The first communication apparatus generates the first QAM symbol stream based on the interleaved first symbol stream and the second bit stream.

Optionally, each first symbol in the interleaved first symbol stream corresponds to a quadrature signal or an inphase signal of one constellation point in the target probabilistic shaping constellation diagram. Each first symbol in the Interleave first symbol stream indicates a signal amplitude of the quadrature signal or the inphase signal corresponding to the first symbol. The second bit stream indicates a sign bit of the quadrature signal or the inphase signal corresponding to each first symbol in the first symbol stream.

In a possible implementation, an odd-numbered first symbol in the interleaved first symbol stream corresponds to a quadrature signal of a constellation point in the target probabilistic shaping constellation diagram, and an even-numbered first symbol in the interleaved first symbol stream corresponds to an inphase signal of a constellation point in the target probabilistic shaping constellation diagram. Alternatively, an even-numbered first symbol in the interleaved first symbol stream corresponds to a quadrature signal of a constellation point in the target probabilistic shaping constellation diagram, and an odd-numbered first symbol in the interleaved first symbol stream corresponds to an inphase signal of a constellation point in the target probabilistic shaping constellation diagram. Alternatively, a first symbol in the first half of the interleaved first symbol stream corresponds to a quadrature signal of a constellation point in the target probabilistic shaping constellation diagram, and a first symbol in the second half of the interleaved first symbol stream corresponds to an inphase signal of a constellation point in the target probabilistic shaping constellation diagram.

The following provides descriptions by using an example in which an odd-numbered first symbol in the interleaved first symbol stream corresponds to a quadrature signal of a constellation point in the target probabilistic shaping constellation diagram, and an even-numbered first symbol in the interleaved first symbol stream corresponds to an inphase signal of a constellation point in the target probabilistic shaping constellation diagram.

Optionally, the odd-numbered first symbol in the interleaved first symbol stream indicates a signal amplitude of the quadrature signal corresponding to the first symbol, and the even-numbered first symbol in the interleaved first symbol stream indicates a signal amplitude of the inphase signal corresponding to the first symbol. An odd-numbered bit in the second bit stream indicates a sign bit of a quadrature signal corresponding to the odd-numbered first symbol, and an even-numbered bit in the second bit stream indicates a sign bit of an inphase signal corresponding to the even-numbered first symbol.

For example, with reference to the foregoing example 1, the interleaved first symbol stream is {133157315711131353311551537117}, the odd-numbered first symbol in the interleaved first symbol stream indicates the signal amplitude of the quadrature signal corresponding to the first symbol, and the even-numbered first symbol indicates the signal amplitude of the inphase signal corresponding to the first symbol. The second bit stream is {010100011110001100110001101011}, the odd-numbered bit in the second bit stream indicates the sign bit of the quadrature signal corresponding to the odd-numbered first symbol, and the even-numbered bit in the second bit stream indicates the sign bit of the inphase signal corresponding to the even-numbered first symbol. In the second bit stream, "1" represents "-", and "0" represents "+". Therefore, the first communication apparatus may determine, based on the interleaved first symbol stream and the second bit stream, that the first symbol stream is { 1-3j, 3-j, 5+7j, 3-j, -5-7j, -1+j, 1+3j, -1-3j, 5+3j, -3-j, 1+5j, 5-j, -5+3j, -7+j, -1-7j}.

In another possible implementation, each first symbol in the first symbol stream corresponds to one constellation point in the target probabilistic shaping constellation diagram. Each first symbol in the first symbol stream indicates a signal amplitude of a constellation point corresponding to the first symbol. The second bit stream indicates a sign bit of a quadrature signal of the constellation point corresponding to the first symbol in the first symbol stream and a sign bit of an inphase signal of the constellation point. For example, each second symbol in a second symbol stream indicates a signal amplitude of a constellation point corresponding to the second symbol. A (2i-1)^{th} bit in a fifth bit stream indicates a sign bit of a quadrature signal of a constellation point corresponding to an i^{th} second symbol in the second symbol stream, a 2i^{th} bit in the fifth bit stream indicates a sign bit of an inphase signal of the constellation point corresponding to the i^{th} second symbol in the second symbol stream, and i is an integer greater than or equal to 1.

Optionally, the embodiment shown in FIG. 5 further includes step 506 and step 507. Step 506 and step 507 may be performed after step 505.

506: The first communication apparatus generates a first signal based on the first QAM symbol stream.

507: The first communication apparatus sends the first signal to a second communication apparatus. Correspondingly, the second communication apparatus receives a second signal from the first communication apparatus.

The first signal is the same as or different from the second signal.

Specifically, the first communication apparatus performs layer mapping, precoding, resource mapping, OFDM or DFTS symbol generation, and other procedure processing on the first QAM symbol stream to obtain the first signal. Then, the first communication apparatus sends the first signal on a channel through an antenna port. The first signal is subject to noise, the channel, and the like in a transmission process. Therefore, a signal that is received by the second communication apparatus from the first communication apparatus is referred to as the second signal herein. The first signal is the same as or different from the second signal.

508: The second communication apparatus parses the second signal to obtain a second QAM symbol stream.

The second QAM symbol stream includes one or more QAM symbols, and the one or more QAM symbols may constitute the target probabilistic shaping constellation diagram.

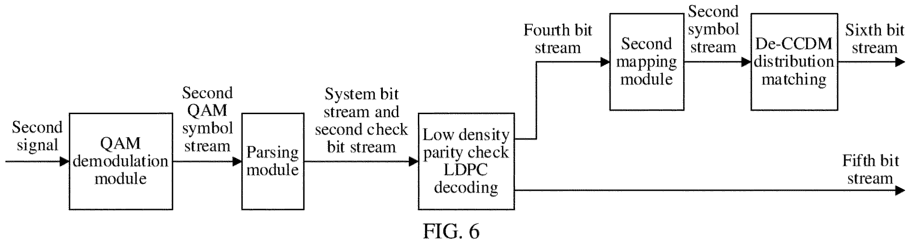

For example, as shown in FIG. 6, a QAM demodulation module parses the second signal to obtain the second QAM symbol stream.

509: The second communication apparatus demodulates the second QAM symbol stream to obtain a third bit stream.

For example, the second QAM symbol stream is {1-3j, 3-j, 5+7j, 3-j, -5-7j, -1+j, 1+3j, -1-3j, 5+3j, -3-j, 1+5j, 5-j, -5+3j, -7+j, -1-7j}. Because a modulation order is 64QAM, each QAM symbol needs to be represented by using six bits, where three bits represent a quadrature signal of a constellation point, and the other three bits represent an inphase signal of the constellation point. The sign bit "+" corresponds to a bit 1, and the sign bit "-" corresponds to a bit 0. 1 is mapped into bits 10, 3 is mapped into bits 11, 5 is mapped into bits 01, and 7 is mapped into bits 00.

Therefore, the third bit stream is {110011111010101100111010001000010110110111010011101111011010110101101010001111 000110010000}.

510: The second communication apparatus parses the third bit stream to obtain a system bit stream and a second check bit stream.

For example, as shown in FIG. 6, a parsing module demodulates the second QAM symbol stream to obtain the third bit stream. The third bit stream includes the system bit stream and the second check bit stream. The second communication apparatus determines or divides the third bit stream as or into the system bit stream and the second check bit stream.

Specifically, it can be learned from step 504 that the first communication apparatus combines the second original bit stream with the first check bit stream to obtain the second bit stream. Therefore, the second communication apparatus may determine a position of a check bit in the third bit stream, and the second communication apparatus may separate the check bit from the third bit stream, to obtain the second check bit stream and remaining bits. Herein, the remaining bits are referred to as the system bit stream.

511: The second communication apparatus performs decoding based on the system bit stream and the second check bit stream to obtain a fourth bit stream and the fifth bit stream.

For example, as shown in FIG. 6, the system bit stream and the second check bit stream are input to an LDPC decoder, and the LDPC decoder performs decoding to obtain the fourth bit stream and the fifth bit stream.

512: The second communication apparatus maps the fourth bit stream into the second symbol stream according to a second mapping rule.

The second mapping rule is a mapping relationship between a bit and a second symbol, and a bit quantity corresponding to each second symbol in the second symbol stream is a bit quantity required by each second symbol that is represented by using a bit.

A symbol type quantity of second symbols included in the second symbol stream and a probability distribution corresponding to a second symbol of each symbol type indicate a probability distribution and a signal amplitude of a quadrature signal of a constellation point in the target probabilistic shaping constellation diagram and a probability distribution and a signal amplitude of the constellation point. In other words, in a process of determining the second symbol stream, the second communication apparatus processes a quadrature signal (an I-channel signal) and an inphase signal (a Q-channel signal) in a QAM symbol together. Second symbols of different symbol types correspond to different probability distributions and/or different signal amplitudes.

For processes of determining the bit quantity corresponding to each second symbol, the probability distribution corresponding to the second symbol of each symbol type, and the symbol type quantity of the second symbols included in the second symbol stream, refer to the following related descriptions.

For example, the second mapping rule may be represented as the following Table 6:

**Table 6**

| Bits | Second symbol |
|---|---|
| 10 | 1 |
| 11 | 3 |
| 01 | 5 |
| 00 | 7 |

It can be learned from Table 6 that bits "10" are mapped into a second symbol "1", bits "11" are mapped into a second symbol "3", bits "01" are mapped to a second symbol "5", and bits "00" are mapped to a second symbol "7". The second communication apparatus maps the fourth bit stream into the second symbol stream with reference to Table 6.

For example, the second mapping rule may be represented as the following Table 7:

**Table 7**

| Bits | Second symbol |
|---|---|
| 0000 | 1+1j |
| 0001 | 1+3j |
| 0010 | 1+5j |
| 0011 | 1+7j |
| 0100 | 3+1j |
| 0101 | 3+3j |
| 0110 | 3+5j |
| 0111 | 3+7j |
| 1000 | 5+1j |
| 1001 | 5+3j |
| 1010 | 5+5j |
| 1011 | 5+7j |
| 1100 | 7+1j |
| 1101 | 7+3j |
| 1110 | 7+5j |
| 1111 | 7+7j |

The second communication apparatus may map the fourth bit stream into the second symbol stream with reference to Table 7.

For example, the second mapping rule may be represented as the following Table 8:

**Table 8**

| Bits | Second symbol |
|---|---|
| 0000 | 1+7j |
| 0001 | 1+5j |
| 0010 | 1+1j |
| 0011 | 1+3j |
| 0100 | 3+7j |
| 0101 | 3+5j |
| 0110 | 3+1j |
| 0111 | 3+3j |
| 1000 | 7+7j |
| 1001 | 7+5j |
| 1010 | 7+1j |
| 1011 | 7+3j |
| 1100 | 5+7j |
| 1101 | 5+5j |
| 1110 | 5+1j |
| 1111 | 5+3j |

The second communication apparatus may map the fourth bit stream into the second symbol stream with reference to Table 8.

For example, as shown in FIG. 6, a second mapping module maps the fourth bit stream into the second symbol stream according to the second mapping rule.

513: The second communication apparatus parses the second symbol stream based on the symbol type quantity, the bit quantity corresponding to each second symbol, and the probability distribution corresponding to each symbol type, to obtain a sixth bit stream.

For example, as shown in FIG. 6, the second communication apparatus inputs the second symbol stream, the symbol type quantity, the bit quantity corresponding to each second symbol, and the probability distribution corresponding to each symbol type into a de-CCDM, and the de-CCDM outputs the sixth bit stream.

Optionally, the embodiment shown in FIG. 5 further includes step 513a, and step 513a may be performed before step 513.

513a: The second communication apparatus performs, according to a first de-interleaving and separation rule, de-interleaving and separation processing on a plurality of second symbols included in the second symbol stream, to obtain a de-interleaved second symbol stream.

The first de-interleaving and separation rule corresponds to the first interleaving and separation rule in step 202a in the embodiment shown in FIG. 2. For example, the first interleaving and separation rule includes that the first communication apparatus separately interpolates the first 1/3 of first symbols in the first symbol stream into the remaining 2/3 of the first symbols. In this case, the first de-interleaving and separation rule includes that the second communication apparatus selects 1/3 of the second symbols, and places the part of second symbols before remaining second symbols.

Based on step 513a, optionally, step 513 specifically includes:
The second communication apparatus parses the de-interleaved second symbol stream based on the symbol type quantity, the bit quantity corresponding to each second symbol, and the probability distribution corresponding to each symbol type, to obtain the sixth bit stream.

Optionally, the second communication apparatus may perform corresponding performance calculation based on the fifth bit stream and the sixth bit stream that are obtained through demodulation and the first original bit stream and the second original bit stream of the first communication apparatus. For example, the second communication apparatus may determine a bit error ratio of the fifth bit stream by using the fifth bit stream obtained through demodulation and the first original bit stream, and determine a bit error ratio of the sixth bit stream by using the sixth bit stream obtained through demodulation and the first original bit stream.

In the embodiment shown in FIG. 5, the first communication apparatus modulates the first original bit stream and the second original bit stream into the first symbol stream by using the modulation method provided in this application, and then generates the first signal based on the first symbol stream. The first communication apparatus sends the first signal to the second communication apparatus. Correspondingly, the second communication apparatus receives the second signal from the first communication apparatus, where the first signal is the same as or different from the second signal. The second communication apparatus parses the second signal to obtain the second QAM symbol stream, and demodulates the second QAM symbol stream into the fifth bit stream and the sixth bit stream by using the demodulation method provided in this application. It can be learned from the foregoing related descriptions in FIG. 5 that the first communication apparatus needs to implement a modulation process by using one CCDM, and the second communication apparatus needs to implement a demodulation process by using one de-CCDM, thereby reducing system complexity. In addition, the I channel and the Q channel in the target probabilistic shaping constellation diagram may have a same probability distribution, or may have different probability distributions, to adapt to probability distributions of different symmetry, thereby improving applicability of the solution.

In this application, optionally, in step 503 in the embodiment shown in FIG. 5, the first bit stream and the second original bit stream are located in a first code block, and a length of the first code block is greater than a code block length supported by the first communication apparatus. The first bit stream includes a plurality of first bits, and the second original bit stream includes a plurality of second bits.

In this case, step 503 specifically includes step 5003a to step 5003d.

Step 5003a: The first communication apparatus determines a first TB CRC bit based on the first bit stream and the second original bit stream.

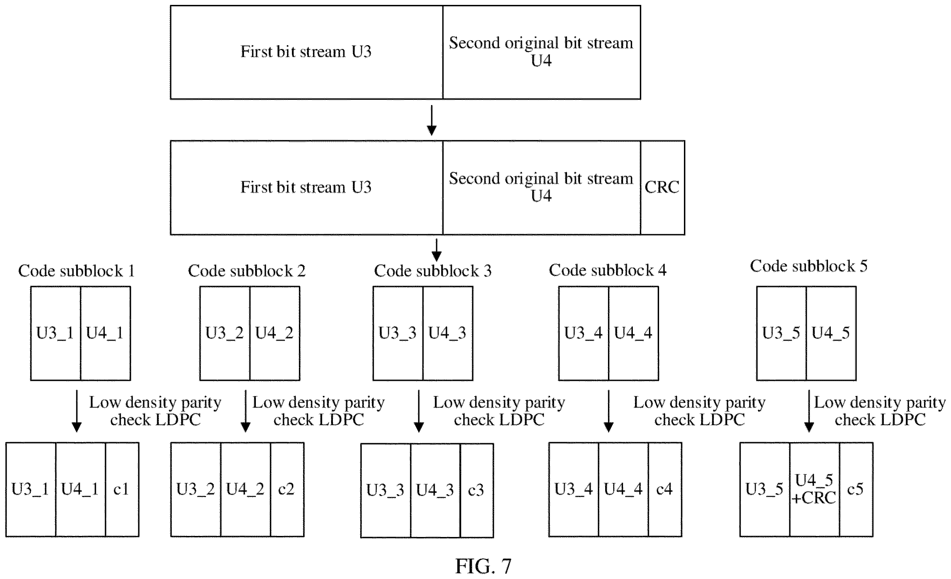

For example, as shown in FIG. 7, the first communication apparatus determines a required first TB CRC bit based on a first bit stream U3 and a second original bit stream U4.

Step 5003b: The first communication apparatus determines the first code block as M code subblocks.

Each of the M code subblocks includes a part of the plurality of first bits and a part of the plurality of second bits, and different code subblocks include different first bits and different second bits.

M is equal to a rounded-up ratio of the length of the first code block to the code block length supported by the first communication apparatus, and M is an integer greater than or equal to 2.

Optionally, the first bit stream includes M portions of first bits, and the M portions of first bits are determined in a bit sequence of the first bit stream. The second original bit stream includes M portions of second bits, and the M portions of second bits are determined in a bit sequence of the second original bit stream. The M portions of first bits match the M portions of second bits one by one. Each of the M code subblocks includes one portion of first bits and a first portion of second bits, and the first bits included in each code subblock matches the second bits included in the code subblock.

Optionally, that the first communication apparatus determines the first code block as M code subblocks includes:
The first communication apparatus splits the first bit stream into the M portions of first bits in the bit sequence of the first bit stream, and the first communication apparatus splits the second original bit stream into the M portions of second bits in a preset sequence. Then, the first communication apparatus matches the M portions of first bits with the M portions of second bits in a one-to-one manner, to obtain the M code subblocks. Each of the M code subblocks includes one portion of first bits and one portion of second bits.

For example, as shown in FIG. 7, the first communication apparatus splits the first bit stream U3 into U3_1, U3_2, U3_3, U3_4, and U3_5 in the bit sequence of the first bit stream U3. The first communication apparatus splits the second original bit stream U4 into U4_1, U4_2, U4_3, U4_4, and U4_5 in a bit sequence of the second original bit stream. Then, the first communication apparatus combines U3_1 and U4_1 into a code subblock 1, combines U3_2 and U4_2 into a code subblock 2, combines U3_3 and U4_3 into a code subblock 3, combines U3_4 and U4_4 into a code subblock 4, and combines U3_5 and U4_5 into a code subblock 5.

Step 5003c: The first communication apparatus separately encodes the M code subblocks to obtain CB CRC bits corresponding to the M code subblocks.

For example, as shown in FIG. 6, the first communication apparatus inputs each of the M code subblocks into the LDPC encoder, and the LDPC encoder outputs a CB CRC bit corresponding to each code subblock. Specifically, as shown in FIG. 7, the LDPC encoder outputs c1 corresponding to the code subblock 1, c2 corresponding to the code subblock 2, c3 corresponding to the code subblock 3, c4 corresponding to the code subblock 4, and c5 corresponding to the code subblock 5.

Step 5003d: The first communication apparatus determines the first check bit stream based on the CB CRC bits corresponding to the M code subblocks and the first TB CRC bit.

The first check bit stream includes check bits corresponding to the M code subblocks. Check bits corresponding to the first M-1 code subblocks in the M code subblocks include CB-CRC bits corresponding to the first M-1 code subblocks. Check bit corresponding to an M^{th} code subblock in the M code subblocks include a CB CRC bit corresponding to the M^{th} code subblock and the first TB CRC bit.

For example, the code subblock 1 includes U3_1 and U4_1, and a check bit corresponding to the code subblock 1 is c1. The code subblock 2 includes U3_2 and U4_2, and a check bit corresponding to the code subblock 2 is c2. The code subblock 3 includes U3_3 and U4_3, and a check bit corresponding to the code subblock 3 is c3. The code subblock 4 includes U3_4 and U4_4, and a check bit corresponding to the code subblock 4 is c4. The code subblock 5 includes U3_5 and U4_5, and check bits corresponding to the code subblock 5 include c5 and CRC.

A ratio of the quantity of first bits included in each of the M code subblocks to a first value is equal to a first ratio. The first value is equal to a sum of a quantity of second bits included in each code subblock and a quantity of check bits included in each code subblock. The first ratio is a ratio of a quantity of bits required for representing a signal amplitude corresponding to each constellation point in the target probabilistic shaping constellation diagram to a quantity of bits required for representing a sign bit of a signal corresponding to each constellation point in the target probabilistic shaping constellation diagram.

For example, in the target probabilistic shaping 64-QAM constellation diagram shown in FIG. 3, the quantity of bits required for representing the signal amplitude corresponding to each constellation point is 4 bits, and the quantity of bits required for representing the sign bit of the signal corresponding to each constellation point is 2 bits. Therefore, it can be learned that the first ratio is equal to 2. As shown in FIG. 7, a first bit included in the code subblock 1 is U3_1, a second bit included in the code subblock 1 is U4_1, and a check bit corresponding to the code subblock 1 is c1. In this case, it can be learned that U3_1/(U4_1+c1)=2. A first bit included in the code subblock 2 is U3_2, a second bit included in the code subblock 2 is U4_2, and a check bit corresponding to the code subblock 2 is c2. Therefore, it can be learned that U3_2/(U4_2+c2)=2. A first bit included in the code subblock 3 is U3_3, a second bit included in the code subblock 3 is U4_3, and a check bit corresponding to the code subblock 3 is c3. Therefore, it can be learned that U3_3/(U4_3+c3)=2. A first bit included in the code subblock 4 is U3_4, a second bit included in the code subblock 4 is U4_4, and a check bit corresponding to the code subblock 4 is c4. Therefore, it can be learned that U3_4/(U4_4+c4)=2. A second bit included in the code subblock 5 is U3_5, a second bit included in the code subblock 5 is U4_5, and a check bit corresponding to the code subblock 5 includes c5 and CRC. Therefore, it can be learned that U3_5/(U4_5+c5+CRC)=2.

Correspondingly, optionally, in step 510 in the embodiment shown in FIG. 5, the system bit stream includes a plurality of third bits and a plurality of fourth bits, the system bit stream is located in a second code block, and a length of the second code block is greater than a code block length supported by the second communication apparatus.

Based on this case, the embodiment shown in FIG. 5 further includes step 510a and step 510b. Step 510a and step 510b may be performed after step 510 and before step 511.

510a: The second communication apparatus determines the second code block as the M code subblocks.

Each of the M code subblocks includes a part of the third bits and a part of the fourth bits, and different code subblocks include different third bits and fourth bits.

The third bits and the fourth bits included in each of the M code subblocks are determined in a bit sequence of the system bit stream.

Specifically, the second communication apparatus splits the system bit stream in the bit sequence of the system bit stream, to obtain the M code subblocks, where each code subblock includes a part of the third bits and a part of the fourth bits.

Step 510a is similar to step 5003b. For details, refer to the foregoing descriptions.

510b: The second communication apparatus determines the second check bit stream as M portions of check bits.

The M portions of check bits are determined in a bit sequence of the second check bit stream. The M portions of check bits one-to-one correspond to the M code subblocks. A check bit corresponding to the M^{th} code subblock in the M code subblocks includes the first TB CRC bit.

Specifically, the second communication apparatus splits the second check bit stream into the M portions of check bits in the bit sequence of the second check bit stream.

M is equal to a rounded-up ratio of the length of the second code block to the code block length supported by the second communication apparatus.

A ratio of a quantity of third bits in the M code subblocks to a second value is equal to the first ratio, and the second value is equal to a sum of a quantity of fourth bits included in each code subblock and a quantity of check bits corresponding to each code subblock. The first ratio is the ratio of the quantity of bits required for representing the signal amplitude corresponding to each constellation point in the target probabilistic shaping constellation diagram to the quantity of bits required for representing the sign bit of the signal corresponding to each constellation point in the target probabilistic shaping constellation diagram.

Based on step 510a and step 510b, optionally, step 511 specifically includes step 511a and step 511b.

511a: The second communication apparatus decodes each code subblock and the check bits corresponding to each code subblock, to obtain a fifth bit corresponding to each code subblock and a sixth bit corresponding to each code subblock.

The second communication apparatus determines the M code subblocks, where each of the M code subblocks includes the fifth bit and the sixth bit. Alternatively, the second communication apparatus determines the M code subblocks, and determines, based on the M code subblocks and the check bits separately corresponding to the M code subblocks, the fifth bit corresponding to each of the M code subblocks and the sixth bit corresponding to each of the M code subblocks.

For example, as shown in FIG. 7, if there is no bit error, the second communication apparatus determines that obtained fifth bits corresponding to all M code subblocks are U3_1, U3_2, U3_3, U3_4, and U3_5, and obtained sixth bits corresponding to all the code subblocks are U4_1, U4_2, U4_3, U4_4, and U4_5.

511b: The second communication apparatus determines the fifth bit corresponding to each code subblock as the fourth bit stream, and determines the sixth bit corresponding to each code subblock as the fifth bit stream.

The second communication apparatus determines the fourth bit stream and the fifth bit stream. The fourth bit stream includes the fifth bit corresponding to each code subblock, and the fifth bit stream includes the sixth bit of each code subblock.

Optionally, step 511b specifically includes:
The second communication apparatus combines fifth bits corresponding to all of the M code subblocks into the fourth bit stream in a sequence of the M code subblocks; and the second communication apparatus combines sixth bits corresponding to all of the M code subblocks into the fifth bit stream in the sequence of the M code subblocks.

For example, if there is no bit error, the second communication apparatus combines U3_1, U3_2, U3_3, U3_4, and U3_5 in the sequence of the M code subblocks to obtain the first bit stream U3, and the second communication apparatus combines U4_1, U4_2, U4_3, U4_4, and U4_5 in the sequence of the M code subblocks to obtain the second original bit stream U4.

It can be learned that the first communication apparatus segments the first code block, so that each of code subblocks obtained through segmentation includes bit information required for forming a QAM symbol, and each code subblock may independently form a QAM symbol. Therefore, performance of a probabilistic constellation shaping system in a multi-code block scenario is ensured, and it is ensured that the second communication apparatus can correctly perform demodulation.

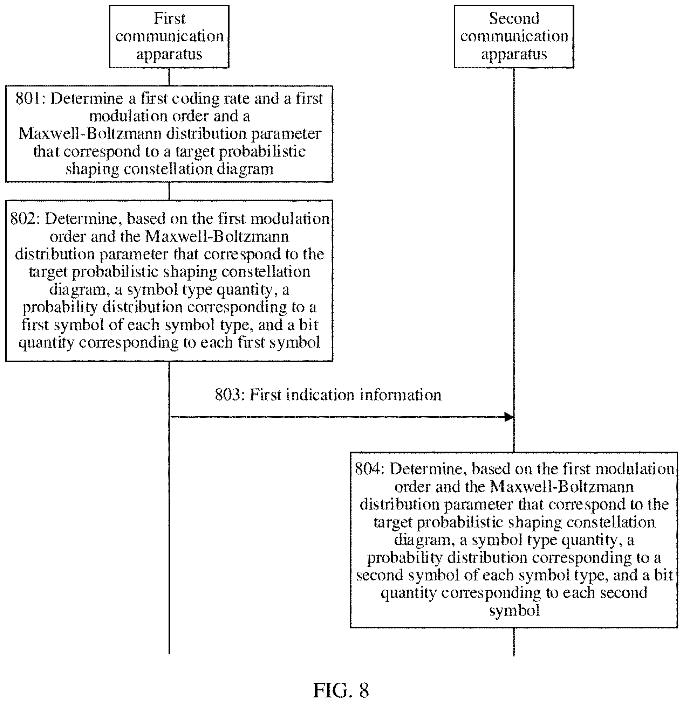

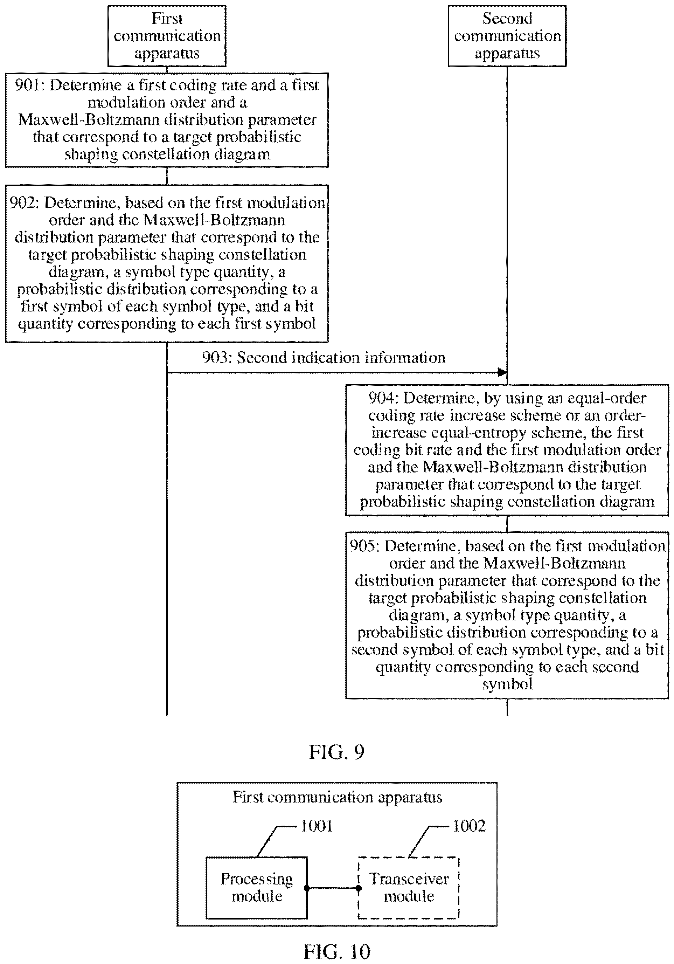

In this application, optionally, the first communication apparatus is a network device, or the second communication apparatus. With reference to embodiments shown in FIG. 8 and FIG. 9, the following describes processes in which the first communication apparatus determines the symbol type quantity, the probability distribution of the first symbol corresponding to each symbol type, and the bit quantity corresponding to each first symbol, and a process in which the first communication apparatus indicates, to the second communication apparatus, some parameters used for probabilistic constellation shaping modulation.

FIG. 8 is a diagram of another embodiment of a modulation method and a demodulation method according to an embodiment of this application. Refer to FIG. 8. The method includes the following steps.

801: A first communication apparatus determines a first coding rate and a first modulation order and a Maxwell-Boltzmann distribution parameter that correspond to a target probabilistic shaping constellation diagram.

The first coding rate is a coding rate used by the first communication apparatus for probabilistic constellation shaping modulation. For example, as shown in FIG. 3, an LDPC encoder performs encoding based on the first coding rate.

The first modulation order corresponding to the target probabilistic shaping constellation diagram is for determining a quantity of bits required for representing a constellation point in the target probabilistic shaping constellation diagram and a signal amplitude of the constellation point. For example, the target probabilistic shaping constellation diagram is 64QAM, that is, the first modulation order is 6. It can be learned that in the target probabilistic shaping constellation diagram, six bits are required to represent each constellation point, and a signal amplitude of the constellation point includes 1, 3, 5, or 7.

The Maxwell-Boltzmann distribution parameter is for determining probability distribution of the constellation point in the target probabilistic shaping constellation diagram. For example, the first communication apparatus may obtain, through calculation, the probability distribution of each constellation point in the target probabilistic shaping constellation diagram with reference to the foregoing formula (2) and the Maxwell-Boltzmann distribution parameter v.

The following describes some possible determining manners of the first communication apparatus in step 801.

The following describes a determining manner 1 with reference to step a11 to step a13.

Step a11: The first communication apparatus obtains a channel state parameter.

The channel state parameter includes at least one of the following: a CQI, a BLER, and a throughput that are measured by a second communication apparatus.

For example, the first communication apparatus is a network device, and the second communication apparatus is a terminal device. The first communication apparatus receives the channel state parameter from the second communication apparatus.

Step a12: The first communication apparatus determines supported maximum spectral efficiency based on the channel state parameter.

Step a13: The first communication apparatus determines, based on the maximum spectral efficiency SE, the first coding rate and the first modulation order and the Maxwell-Boltzmann distribution parameter that correspond to the target probabilistic shaping constellation diagram.

Specifically, spectral efficiency of uniform modulation may be expressed as: ${SE}_{uniform} = {M}_{uniform} {R}_{{c}_{uniform}} = ƒ \left({M}_{uniform}, {R}_{{c}_{uniform}}\right)$

*M_{uniform}* is a second modulation order for the uniform modulation, and *R_{c_{uniform}}* is a second coding rate for the uniform modulation.

It can be learned from the foregoing formula (15) that, in the uniform modulation, *SE_{uniform}* is changed by adjusting *M_{uniform}* and R*_{c_{uniform}}*.

Correspondingly, spectral efficiency of probabilistic constellation shaping modulation may be expressed as: ${SE}_{PCS} = {H}_{PCS} {R}_{PCS} = ƒ ′ \left(ν, {M}_{PCS}, {R}_{PCS}\right)$

*SE_{PCS}* is spectral efficiency supported by the probabilistic constellation shaping modulation, *H_{PCS}* is a source entropy of the target probabilistic shaping constellation diagram, v is the Maxwell-Boltzmann distribution parameter, *M_{PCS}* is the first modulation order corresponding to the target probabilistic shaping constellation diagram, and *R*_{PCS} is the first coding rate for the probabilistic constellation shaping modulation.

It can be learned from the foregoing formula (16) that the first communication apparatus may adjust *SE_{PCS}* by adjusting *v*, *M_{PCS}*, and *R*_{PCS}. In the foregoing step a12, the first communication apparatus may determine the maximum spectral efficiency. In this case, the first communication apparatus may obtain, through adjustment based on the maximum spectral efficiency, the first coding rate *R_{PCS}*, the first modulation order *M_{PCS}* corresponding to the target probabilistic shaping constellation diagram, and the Maxwell-Boltzmann distribution parameter v.

It can be learned that, the first communication apparatus determines the supported maximum spectral efficiency based on the channel state parameter, so that the Maxwell-Boltzmann distribution parameter v can be adjusted when the first coding rate *R*_{PCS} and the first modulation order *M_{PCS}* are changed, thereby more flexibly adjusting spectral efficiency.

It can be learned from Table 2 that the MCS corresponds to a coding rate and a modulation order, to implement different spectral efficiency adjustment. When system performance is good, the first communication apparatus may use an MCS corresponding to high spectral efficiency. When system performance is poor, the first communication apparatus may use an MCS corresponding to low spectral efficiency. Because a QAM modulation order defined in a communication protocol is an even integer order of 2, 4, 6, or 8, and a coding rate also has some specific configurations, different spectral efficiency formed by different combinations is limited. In other words, a granularity of spectral efficiency corresponding to an MCS in Table 2 is limited. For example, when spectral efficiency supported by a channel condition is between spectral efficiency corresponding to an MCS 22 and spectral efficiency corresponding to an MCS 23, the first communication apparatus can select only a configuration of the MCS 22 to ensure a block error rate requirement. Specifically, in this application, the Maxwell-Boltzmann distribution parameter may be used as a third-dimensional parameter of an MCS in Table 4, to achieve spectral efficiency at a finer granularity.

For example, when the maximum spectral efficiency that can be supported is 0.25, the maximum spectral efficiency that can be achieved based on the configuration in Table 2 is 0.2344. However, if the Maxwell-Boltzmann distribution parameter is added on a basis of Table 2, achieved spectral efficiency is greater than 0.2344, that is, a range of spectral efficiency that can be achieved is wider.

The following describes a determining manner 2 with reference to step a21 to step a23.

Step a21: The first communication apparatus obtains a channel state parameter.

Step a21 is similar to step a11. For details, refer to the foregoing related descriptions.

Step a22: The first communication apparatus determines supported maximum spectral efficiency SE based on the channel state parameter.

Step a23: The first communication apparatus determines, based on the maximum spectral efficiency SE, a Maxwell-Boltzmann distribution parameter corresponding to the target probabilistic shaping constellation diagram.

The first coding rate used by the first communication apparatus and the first modulation order corresponding to the target probabilistic shaping constellation diagram remain unchanged. In other words, when the first coding rate and the first modulation order remain unchanged, different spectral efficiency is implemented by changing the Maxwell-Boltzmann distribution parameter corresponding to the target probabilistic shaping constellation diagram. The first communication apparatus changes *H_{PCS}* in the foregoing formula (16) by adjusting a value of the Maxwell-Boltzmann distribution parameter corresponding to the target probabilistic shaping constellation diagram, to change *SE_{PCS}.* In this case, if the first modulation order *M_{PCS}* remains unchanged, a modulation order of probabilistic constellation shaping modulation is fixed, that is, only one type of probabilistic constellation shaping constellation diagram, for example, 64QAM, is required. If the first coding rate *R_{PCS}* remains unchanged, the LDPC encoder has a fixed coding rate, and does not need to adapt to a plurality of coding rates, thereby reducing complexity caused by coding rate matching.

It can be learned that, the first communication apparatus determines supported maximum spectral efficiency based on the channel state parameter, so that the Maxwell-Boltzmann distribution parameter v is adjusted while the first coding rate *R_{PCS}* and the first modulation order *M_{PCS}* remain unchanged. This helps flexibly adjust spectral efficiency and achieve spectral efficiency at a finer granularity.

The following describes a determining manner 3 with reference to step a31 to step a33.

Step a31: The first communication apparatus obtains a channel state parameter.

Step a31 is similar to step a12. For details, refer to the foregoing related descriptions.

Step a32: The first communication apparatus determines, based on the channel state parameter and a first correspondence, the first coding rate, and the first modulation order and the Maxwell-Boltzmann distribution parameter that correspond to the target probabilistic shaping constellation diagram.

The first correspondence is a correspondence between the channel state parameter and a modulation and coding parameter. The modulation and coding parameter includes a coding rate, a modulation order corresponding to a probabilistic shaping constellation diagram, and the Maxwell-Boltzmann distribution parameter.

For example, the first correspondence may be represented in the following Table 9. The following Table 9 uses an example in which the channel state parameter is a CQI for description.

**Table 5**

| channel state parameter | Modulation and coding parameter |
|---|---|
| CQI 1 | Modulation and coding parameter 1 |
| CQI 2 | Modulation and coding parameter 2 |
| CQI 3 | Modulation and coding parameter 3 |
| CQI 4 | Modulation and coding parameter 4 |

The first communication apparatus determines, with reference to Table 9, the modulation and coding parameter corresponding to the channel state parameter. The modulation and coding parameter corresponding to the channel state parameter includes the first coding rate, and the first modulation order and the Maxwell-Boltzmann distribution parameter that correspond to the target probabilistic shaping constellation diagram.

The following describes a determining manner 4 with reference to step a41 to step a43.

Step a41: The first communication apparatus sets a second modulation order to the first modulation order corresponding to the target probabilistic shaping constellation diagram.

The second modulation order is a modulation order used by the first communication apparatus for uniform modulation.

Specifically, a net transmission rate under the uniform modulation may be expressed as: ${NTR}_{uniform} = {H}_{uniform} {R}_{{c}_{uniform}} = {M}_{uniform} {R}_{{c}_{uniform}} = {SE}_{uniform}$

*M_{uniform}* is a second modulation order for the uniform modulation, and *R_{c_{uniform}}* is a second coding rate for the uniform modulation. *SE_{uniform}* is spectral efficiency for the uniform modulation, and *H_{uniform}* is a source entropy for the uniform modulation.

With reference to the foregoing formula (14), it can be learned that a net transmission rate of the probabilistic constellation shaping modulation may be expressed as: ${NTR}_{PCS} = {H}_{PCS} - \left(1-{R}_{PCS}\right) {M}_{PCS}$

*H_{PCS}* is a source entropy of the target probabilistic shaping constellation diagram, *M_{PCS}* is the first modulation order corresponding to the target probabilistic shaping constellation diagram, and *R*_{PCS} is the first coding rate for the probabilistic constellation shaping modulation.

Step a42: The first communication apparatus sets a first net transmission rate to a net transmission rate corresponding to a case in which the first communication apparatus uses the probabilistic constellation shaping modulation.

When the probabilistic constellation shaping modulation is used, to perform fair comparison with the uniform modulation, a net transmission rate needs to be used for measurement. The first communication apparatus constructs a connection between the probabilistic constellation shaping modulation and the uniform modulation, that is, the two modulation schemes correspond to a same net transmission rate.

Step a43: The first communication apparatus obtains, through calculation based on the first net transmission rate and the second modulation order, the first coding rate and the Maxwell-Boltzmann distribution parameter corresponding to the target probabilistic shaping constellation diagram.

Specifically, with reference to step a41 and step a42, the following formula (19) and formula (20) may be obtained: ${H}_{PCS} - \left(1-{R}_{PCS}\right) {M}_{PCS} = {M}_{uniform} {R}_{{c}_{uniform}}$ ${M}_{PCS} = {M}_{uniform}$

The first communication apparatus may obtain the first coding rate *R*_{PCS} and the source entropy *H_{PCS}* of the target probabilistic shaping constellation diagram through calculation with reference to the foregoing formula (19) and formula (20), and then obtain the Maxwell-Boltzmann distribution parameter v based on *H_{PCS}* through calculation. Alternatively, the first communication apparatus obtains the first coding rate *R_{PCS}* and the Maxwell-Boltzmann distribution parameter v through calculation with reference to the foregoing formula (19) and formula (20).

A process of the determining manner 4 may also be referred to as an equal-order coding rate increase scheme. When the probabilistic constellation shaping modulation and the uniform modulation have a same net transmission rate, the first communication apparatus may implement a lower signal-to-noise ratio by adjusting the first coding rate, or achieve higher spectral efficiency under a same signal-to-noise ratio requirement. In this way, a shaping gain brought by the probabilistic constellation shaping modulation is increased, and system performance is improved.

The following describes a determining manner 5 with reference to step a51 to step a53.

Step a51: The first communication apparatus sets a second coding rate to a first coding rate used when the first communication apparatus uses probabilistic constellation shaping modulation.

The second coding rate is a coding rate used by the first communication apparatus in uniform modulation.

Step a52: The first communication apparatus sets the first modulation order corresponding to the target probabilistic shaping constellation diagram to be equal to a second modulation order plus a first preset value.

The second modulation order is a modulation order used by the first communication apparatus for uniform modulation. The first preset value may be 2, 4, or the like. For example, the second modulation order *M_{PCs}*=*M_{uniform}* +2*.*

Step a53: The first communication apparatus sets a first net transmission rate to a net transmission rate corresponding to a case in which the first communication apparatus uses the probabilistic constellation shaping modulation.

When the probabilistic constellation shaping modulation is used, to perform fair comparison with the uniform modulation, a net transmission rate needs to be used for measurement. The first communication apparatus constructs a connection between the probabilistic constellation shaping modulation and the uniform modulation, that is, the two modulation schemes correspond to a same net transmission rate.

Step a54: The first communication apparatus determines, based on the first net transmission rate and the first modulation order, the Maxwell-Boltzmann distribution parameter corresponding to the target probabilistic shaping constellation diagram.

With reference to step a51 to step a53, the following formula (21) to formula (23) may be obtained: ${H}_{PCS} - \left(1-{R}_{PCS}\right) {M}_{PCS} = {M}_{uniform} {R}_{{c}_{uniform}}$ ${R}_{{c}_{uniform}} = {R}_{PCS}$ ${M}_{PCS} = {M}_{uniform}$

The first communication apparatus may obtain the first coding rate *R_{PCS}* and the Maxwell-Boltzmann distribution parameter v through calculation with reference to the foregoing formula (21) to formula (23). Alternatively, the first communication apparatus may obtain the first coding rate *R_{PCS}* and the source entropy *H_{PCS}* of the target probabilistic shaping constellation diagram through calculation with reference to the foregoing formula (19) and formula (20), and then obtain the Maxwell-Boltzmann distribution parameter v based on *H_{PCS}* through calculation.

A process of the determining manner 5 may also be referred to as an order-increase equal-entropy scheme. When the probabilistic constellation shaping modulation and the uniform modulation have a same net transmission rate, a lower demodulation threshold may be implemented by increasing the first modulation order corresponding to the target probabilistic shaping constellation diagram; or higher spectral efficiency is achieved under a same signal-to-noise ratio requirement. In this way, a shaping gain brought by the probabilistic constellation shaping modulation is increased, and system performance is improved.

802: The first communication apparatus determines, based on the first modulation order and the Maxwell-Boltzmann distribution parameter, a symbol type quantity, a probability distribution corresponding to a first symbol of each symbol type, and a bit quantity corresponding to each first symbol.

The first communication apparatus determines, based on the first modulation order, a quantity of bits required for a constellation point in the target probabilistic shaping constellation diagram and a signal amplitude of the constellation point. The first communication apparatus determines the probability distribution of the constellation point in the target probabilistic shaping constellation diagram based on the Maxwell-Boltzmann distribution parameter. The first communication apparatus determines the symbol type quantity, the probability distribution corresponding to the first symbol of each symbol type, and the bit quantity corresponding to each first symbol based on the quantity of bits required for the constellation point in the target probabilistic shaping constellation diagram, the signal amplitude of the constellation points, and the probability distribution of the constellation point. For a specific related example, refer to related descriptions in the example 1 and the example 2. Details are not described herein again.

It should be noted that the first coding rate in step 801 is used by the first communication apparatus to generate a first symbol stream. Specifically, step 201 in the embodiment shown in FIG. 2 specifically includes: The first communication apparatus generates the first symbol stream based on the first coding rate, the symbol type quantity, the probability distribution corresponding to the first symbol of each symbol type, the bit quantity corresponding to each first symbol, and a first original bit stream. Specifically, the first communication apparatus determines, based on the first coding rate, the symbol type quantity, the probability distribution corresponding to the first symbol of each symbol type, the bit quantity corresponding to each first symbol, and the first original bit stream, a quantity of first symbols included in the first symbol stream and a quantity in each symbol type.

For example, as shown in FIG. 4, the first original bit stream is an Sb1 bit stream, and a second original bit stream is a U4 bit stream. A total quantity of bits included in the Sb1 bit stream and the U4 bit stream is K, and a total quantity of bits included in the Sb1 bit stream, the U4 bit stream, and a first check bit stream is W. K=41412, W=48576, *M_{PCS}* =64, and a= log₂ 2(*M_{PCS}*)/2-1. As shown in FIG. 4, a quantity of bits in the Sb1 bit stream is Sb1, and a quantity of bits of the U4 bit stream is U4. A quantity of first symbols included in the first symbol stream is V1=W-K+U4, the quantity of bits in the Sb1 bit stream is Sb1=a*V1, and the quantity of bits in the U4 bit stream is U4=K-Sb1. It can be learned that the first communication apparatus may obtain V1 through calculation.

803: The first communication apparatus sends first indication information to a second communication apparatus. Correspondingly, the second communication apparatus receives the first indication information from the first communication apparatus.

In a possible implementation, the first indication information indicates a first MCS and the Maxwell-Boltzmann distribution parameter corresponding to the target probabilistic shaping constellation diagram, and the first MCS indicates the first coding rate and the first modulation order.

In this implementation, the first communication apparatus indicates the first MCS in an existing manner, and the first MCS indicates the first coding rate and the first modulation order. Specifically, a representation of the first MCS may be shown in Table 2. In addition to indicating the first MCS, the first communication apparatus further indicates the Maxwell-Boltzmann distribution parameter corresponding to the target probabilistic shaping constellation diagram. The first communication apparatus indicates the first coding rate, the first modulation order, and the Maxwell-Boltzmann distribution parameter, so that the second communication apparatus is enabled to perform demodulation, decoding, and the like based on these parameters.

In another possible implementation, the first indication information indicates the first coding rate, the first modulation order, and the Maxwell-Boltzmann distribution parameter. Therefore, the second communication apparatus is enabled to perform demodulation, decoding, and the like based on these parameters.

804: The second communication apparatus determines, based on the first modulation order and the Maxwell-Boltzmann distribution parameter that correspond to the target probabilistic shaping constellation diagram, the symbol type quantity, the probability distribution corresponding to the second symbol of each symbol type, and the bit quantity corresponding to each second symbol.

Step 804 is similar to step 802. For details, refer to related descriptions of step 802.

It should be noted that the first coding rate in step 804 is used by the second communication apparatus to determine a sixth bit stream. Specifically, step 513 in the embodiment shown in FIG. 5 specifically includes:

The second communication apparatus parses the second symbol stream based on the first coding rate, the symbol type quantity, the bit quantity corresponding to each second symbol, and the probability distribution corresponding to each symbol type, to obtain the sixth bit stream.

It can be learned from the foregoing related example that the second communication apparatus may obtain, through inverse deduction based on the first coding rate and a quantity of second symbols included in the second symbol stream, a quantity of bits included in the sixth bit stream.

In this embodiment of this application, the first communication apparatus determines the first coding rate and the first modulation order and the Maxwell-Boltzmann distribution parameter that correspond to the target probabilistic shaping constellation diagram. Then, the first communication apparatus determines, based on the first coding rate and the first modulation order and the Maxwell-Boltzmann distribution parameter that correspond to the target probabilistic shaping constellation diagram, the symbol type quantity, the probability distribution corresponding to the first symbol of each symbol type, and the bit quantity corresponding to each first symbol. The first communication apparatus sends the first indication information to the second communication apparatus, to indicate the first coding rate and the first modulation order and the Maxwell-Boltzmann distribution parameter that correspond to the target probabilistic shaping constellation diagram, to indicate the second communication apparatus to perform demodulation, decoding, and the like based on these parameters.

It should be noted that the embodiment shown in FIG. 8 is a possible implementation. In actual application, the second communication apparatus may alternatively determine, based on the channel state parameter and the first correspondence, the first coding rate and the first modulation order and the Maxwell-Boltzmann distribution parameter that correspond to the target probabilistic shaping constellation diagram. That is, the first communication apparatus and the second communication apparatus determine the modulation and coding parameters based on the predefined first correspondence, and the first communication apparatus does not need to indicate these parameters to the second communication apparatus.

FIG. 9 is a diagram of another embodiment of a modulation method according to an embodiment of this application. Refer to FIG. 9. The method includes the following steps.

901: A first communication apparatus determines a first coding rate and a first modulation order and a Maxwell-Boltzmann distribution parameter that correspond to a target probabilistic shaping constellation diagram.

In step 901, the first communication apparatus determines, in the determining manner 4 or the determining manner 5 shown in step 801 in the embodiment shown in FIG. 8, the first coding rate and the first modulation order and the Maxwell-Boltzmann distribution parameter that correspond to the target probabilistic shaping constellation diagram. In other words, the first communication apparatus determines, by using an equal-order coding rate increase scheme or an order-increase equal-entropy scheme, the first coding rate and the first modulation order and the Maxwell-Boltzmann distribution parameter that correspond to the target probabilistic shaping constellation diagram.

902: The first communication apparatus determines, based on the first modulation order and the Maxwell-Boltzmann distribution parameter that correspond to the target probabilistic shaping constellation diagram, a symbol type quantity, a probability distribution corresponding to a first symbol of each symbol type, and a bit quantity corresponding to each first symbol.

Step 902 is similar to step 802 in the embodiment shown in FIG. 8. For details, refer to related descriptions of step 802 in the embodiment shown in FIG. 8.

It should be noted that the first coding rate in step 801 is used by the first communication apparatus to generate a first symbol stream. Specifically, step 201 in the embodiment shown in FIG. 2 specifically includes: The first communication apparatus generates the first symbol stream based on the first coding rate, the symbol type quantity, the probability distribution corresponding to the first symbol of each symbol type, the bit quantity corresponding to each first symbol, and a first original bit stream. Specifically, the first communication apparatus determines, based on the first coding rate, the symbol type quantity, the probability distribution corresponding to the first symbol of each symbol type, the bit quantity corresponding to each first symbol, and the first original bit stream, a quantity of first symbols included in the first symbol stream and a quantity in each symbol type. For a specific related example, refer to the foregoing related descriptions.

903: The first communication apparatus sends second indication information to a second communication apparatus.

In a possible implementation, the second indication information indicates a second MCS and the order-increase equal-entropy scheme, or indicates a second MCS and the equal-order coding rate increase scheme. The second MCS indicates a second modulation order corresponding to a uniform modulation scheme and a corresponding second coding rate.

If the first communication apparatus determines, by using the equal-order coding rate increase scheme in step 901, the first coding rate and the first modulation order and the Maxwell-Boltzmann distribution parameter that correspond to the target probabilistic shaping constellation diagram, the second indication information indicates the second MCS and the equal-order coding rate increase scheme.

If the first communication apparatus determines the first coding rate, the first modulation order corresponding to the target probabilistic shaping constellation diagram, and the Maxwell-Boltzmann distribution parameter by using the order-increase equal-entropy scheme in step 901, the second indication information indicates the second MCS and the order-increase equal-entropy scheme.

904: The second communication apparatus determines, by using the equal-order coding rate increase scheme or the order-increase equal-entropy scheme, the first coding rate and the first modulation order and the Maxwell-Boltzmann distribution parameter that correspond to the target probabilistic shaping constellation diagram.

In a possible implementation, if the second indication information indicates the second MCS and the equal-order coding rate increase scheme, the second communication apparatus determines, by using the equal-order coding rate increase scheme, the first coding rate and the first modulation order and the Maxwell-Boltzmann distribution parameter that correspond to the target probabilistic shaping constellation diagram.

A process in which the second communication apparatus determines, by using the equal-order coding rate increase scheme, the first coding rate and the first modulation order and the Maxwell-Boltzmann distribution parameter that correspond to the target probabilistic shaping constellation diagram is similar to the process in step a41 to step a43 of the determining manner 4 in step 801 in the embodiment shown in FIG. 8. For details, refer to the foregoing related descriptions.

In another possible implementation, if the second indication information indicates the second MCS and the order-increase equal-entropy scheme, the second communication apparatus determines, by using the order-increase equal-entropy scheme, the first coding rate and the first modulation order and the Maxwell-Boltzmann distribution parameter that correspond to the target probabilistic shaping constellation diagram.

A process in which the second communication apparatus determines, by using the equal-order coding rate increase scheme, the first coding rate and the first modulation order and the Maxwell-Boltzmann distribution parameter that correspond to the target probabilistic shaping constellation diagram is similar to the process in step a51 to step a53 of the determining manner 5 in step 801 in the embodiment shown in FIG. 8. For details, refer to the foregoing related descriptions.

905: The second communication apparatus determines, based on the first modulation order and the Maxwell-Boltzmann distribution parameter that correspond to the target probabilistic shaping constellation diagram, a symbol type quantity, a probability distribution corresponding to a second symbol of each symbol type, and a bit quantity corresponding to each second symbol.

Step 905 is similar to step 802. For details, refer to related descriptions of step 802.

It should be noted that the first coding rate in step 804 is used by the second communication apparatus to determine a sixth bit stream. Specifically, step 513 in the embodiment shown in FIG. 5 specifically includes:

The second communication apparatus parses a second symbol stream based on the first coding rate, the symbol type quantity, the bit quantity corresponding to each second symbol, and the probability distribution corresponding to each symbol type, to obtain the sixth bit stream.

It can be learned from the foregoing related example that the second communication apparatus may obtain, through inverse deduction based on the first coding rate and a quantity of second symbols included in the second symbol stream, a quantity of bits included in the sixth bit stream.

In this embodiment of this application, the first communication apparatus determines the first coding rate and the first modulation order and the Maxwell-Boltzmann distribution parameter that correspond to the target probabilistic shaping constellation diagram. Then, the first communication apparatus determines, based on the first modulation order and the Maxwell-Boltzmann distribution parameter that correspond to the target probabilistic shaping constellation diagram, the symbol type quantity, the probability distribution corresponding to the first symbol of each symbol type, and the bit quantity corresponding to each first symbol. The first communication apparatus sends the second indication information to the second communication apparatus, to indicate the second MCS and the order-increase equal-entropy scheme, or indicate the second MCS and the equal-order coding rate increase scheme. Therefore, the second communication apparatus determines, based on the second indication information, the symbol type quantity, the probability distribution corresponding to the second symbol of each symbol type, and the bit quantity corresponding to each second symbol, and performs probabilistic constellation shaping demodulation and decoding based on these parameters.

In this application, optionally, the first communication apparatus is a terminal device, and the second communication apparatus is a network device. The second communication apparatus may determine the first coding rate and the first modulation order and the Maxwell-Boltzmann distribution parameter that correspond to the target probabilistic shaping constellation diagram. For a specific determining manner for the second communication apparatus, refer to related descriptions of step 801 in the embodiment shown in FIG. 8. Then, the second communication apparatus sends third indication information to the first communication apparatus. The third indication information indicates the first MCS and the Maxwell-Boltzmann distribution parameter corresponding to the target probabilistic shaping constellation diagram; or the third indication information indicates the first coding rate and the first modulation order and the Maxwell-Boltzmann distribution parameter that correspond to the target probabilistic shaping constellation diagram.

Optionally, if the second communication apparatus determines, by using the equal-order coding rate increase scheme, the first coding rate and the first modulation order and the Maxwell-Boltzmann distribution parameter that correspond to the target probabilistic shaping constellation diagram, the second communication apparatus may send fourth indication information to the first communication apparatus, where the fourth indication information indicates the second MCS and the equal-order coding rate increase scheme. The second MCS indicates a second modulation order corresponding to a uniform modulation scheme and a corresponding second coding rate. If the second communication apparatus determines, by using the order-increase equal-entropy scheme, the first coding rate and the first modulation order and the Maxwell-Boltzmann distribution parameter that correspond to the target probabilistic shaping constellation diagram, the second communication apparatus may send fourth indication information to the first communication apparatus, where the fourth indication information indicates the second MCS and the order-increase equal-entropy scheme. The second MCS indicates a second modulation order corresponding to a uniform modulation scheme and a corresponding second coding rate.

The following describes a first communication apparatus provided in an embodiment of this application. Refer to FIG. 10. FIG. 10 is a diagram of a structure of a first communication apparatus according to an embodiment of this application. The first communication apparatus may be configured to perform steps performed by the first communication apparatus in the embodiments shown in FIG. 2, FIG. 5, FIG. 8, and FIG. 9. For details, refer to related descriptions in the foregoing method embodiments.

The first communication apparatus includes a processing module 1001. The first communication apparatus includes a transceiver module 1002.

The processing module 1001 is configured to: generate a first symbol stream based on a symbol type quantity, a probability distribution corresponding to a first symbol of each symbol type, a bit quantity corresponding to each first symbol, and a first original bit stream, where the symbol type quantity and the probability distribution corresponding to the first symbol of each symbol type indicate a probability distribution and a signal amplitude of a quadrature signal of a constellation point in a target probabilistic shaping constellation diagram and a probability distribution and a signal amplitude of an inphase signal of the constellation point, the bit quantity corresponding to each first symbol is a bit quantity required by each first symbol that is represented by using a bit, and first symbols of different symbol types correspond to different probability distributions and/or different signal amplitudes; and generate a first QAM symbol stream based on the first symbol stream and a second original bit stream, where the first QAM symbol stream includes one or more QAM symbols.

In a possible implementation, a first symbol in the first symbol stream is a complex-valued symbol in which a value of a real part and a value of an imaginary part are both greater than or equal to 0.

In another possible implementation, the processing module 1001 is further configured to:
interleave and separate, according to a first interleaving and separation rule, a plurality of first symbols included in the first symbol stream, to obtain an interleaved first symbol stream.

The processing module 1001 is specifically configured to:
generate the first QAM symbol stream based on the interleaved first symbol stream and the second original bit stream.

In another possible implementation, the processing module 1001 is specifically configured to:
map the first symbol stream into a first bit stream according to a first mapping rule, where the first mapping rule is a mapping relationship between a first symbol and a bit, and a quantity of bits to which each first symbol is mapped is the bit quantity corresponding to each first symbol;
perform encoding based on the first bit stream and the second original bit stream to obtain a first check bit stream;
determine a second bit stream based on the first check bit stream and the second original bit stream; and
generate the first QAM symbol stream based on the first symbol stream and the second bit stream.

In another possible implementation, each first symbol in the first symbol stream corresponds to one constellation point in the target probabilistic shaping constellation diagram; and
each first symbol in the first symbol stream indicates a signal amplitude of a constellation point corresponding to the first symbol, and the second bit stream indicates a sign bit of a quadrature signal of the constellation point corresponding to each first symbol in the first symbol stream and a sign bit of an inphase signal of the constellation point.

In another possible implementation, each first symbol in the first symbol stream indicates the signal amplitude of the constellation point corresponding to the first symbol, a (2i-1)^{th} bit in the second bit stream indicates a sign bit of a quadrature signal of a constellation point corresponding to an i^{th} first symbol in the first symbol stream, a 2i^{th} bit in the second bit stream indicates a sign bit of an inphase signal of the constellation point corresponding to the i^{th} first symbol in the first symbol stream, and i is an integer greater than or equal to 1.

In another possible implementation, each first symbol in the first symbol stream corresponds to a quadrature signal or an inphase signal of one constellation point in the target probabilistic shaping constellation diagram; and
each first symbol in the first symbol stream indicates a signal amplitude of the quadrature signal or the inphase signal corresponding to the first symbol, and the second bit stream indicates a sign bit of the quadrature signal or the inphase signal corresponding to each first symbol in the first symbol stream.

In another possible implementation, an odd-numbered first symbol in the first symbol stream corresponds to a quadrature signal of a constellation point in the target probabilistic shaping constellation diagram, and an even-numbered first symbol in the first symbol stream corresponds to an inphase signal of a constellation point in the target probabilistic shaping constellation diagram.

The odd-numbered first symbol in the first symbol stream indicates a signal amplitude of the quadrature signal corresponding to the first symbol, the even-numbered first symbol in the first symbol stream indicates a signal amplitude of the inphase signal corresponding to the first symbol, an odd-numbered bit in the second bit stream indicates a sign bit of a quadrature signal corresponding to the odd-numbered first symbol, and an even-numbered bit in the second bit stream indicates a sign bit of an inphase signal corresponding to the even-numbered first symbol.

In another possible implementation, the first bit stream and the second original bit stream are located in a first code block, a length of the first code block is greater than a code block length supported by the first communication apparatus, the first bit stream includes a plurality of first bits, and the second original bit stream includes a plurality of second bits.

The processing module 1001 is specifically configured to:
determine a first TB CRC bit based on the first bit stream and the second original bit stream;
determine the first code block as M code subblocks;
separately encode the M code subblocks, to obtain CB CRC bits corresponding to the M code subblocks; and
determine the first check bit stream based on the CB CRC bits corresponding to the M code subblocks and the first TB CRC bit.

The first check bit stream includes check bits corresponding to the M code subblocks, check bits corresponding to an M^{th} code subblock in the M code subblocks include a CB CRC bit corresponding to the M^{th} code subblock and the first TB CRC bit, each of the M code subblocks includes a part of the plurality of first bits and a part of the plurality of second bits, and different code subblocks include different first bits and different second bits; M is equal to a rounded-up ratio of the length of the first code block to the code block length supported by the first communication apparatus; and a ratio of a quantity of first bits included in each of the M code subblocks to a first value is equal to a first ratio, the first value is equal to a sum of a quantity of second bits included in each code subblock and a quantity of check bits included in each code subblock, and the first ratio is a ratio of a quantity of bits required for representing a signal amplitude corresponding to each constellation point in the target probabilistic shaping constellation diagram to a quantity of bits required for representing a sign bit of a signal corresponding to each constellation point in the target probabilistic shaping constellation diagram.

In another possible implementation, the processing module 1001 is further configured to:
obtain a channel state parameter;
determine supported maximum spectral efficiency based on the channel state parameter;
determine, based on the maximum spectral efficiency, a first coding rate and a first modulation order and a Maxwell-Boltzmann distribution parameter that correspond to the target probabilistic shaping constellation diagram; and
determine, based on the first modulation order and the Maxwell-Boltzmann distribution parameter, the symbol type quantity, the probability distribution corresponding to the first symbol of each symbol type, and the bit quantity corresponding to each first symbol.

The processing module 1001 is specifically configured to:
generate the first symbol stream based on the first coding rate, the symbol type quantity, the probability distribution corresponding to the first symbol of each symbol type, the bit quantity corresponding to each first symbol, and the first original bit stream.

In another possible implementation, when a first coding rate used by the first communication apparatus and a first modulation order corresponding to the target probabilistic shaping constellation diagram remain unchanged, the processing module 1001 is further configured to:
obtain a channel state parameter;
determine supported maximum spectral efficiency based on the channel state parameter;
determine, based on the maximum spectral efficiency, a Maxwell-Boltzmann distribution parameter corresponding to the target probabilistic shaping constellation diagram; and
determine, based on the first coding rate, the first modulation order, and the Maxwell-Boltzmann distribution parameter, the symbol type quantity, the probability distribution corresponding to the first symbol of each symbol type, and the bit quantity corresponding to each first symbol.

In another possible implementation, the processing module 1001 is further configured to:
obtain a channel state parameter;
determine, based on the channel state parameter and a first correspondence, a first coding rate and a first modulation order and a Maxwell-Boltzmann distribution parameter that correspond to the target probabilistic shaping constellation diagram, where the first correspondence is a correspondence between the channel state parameter and a modulation and coding parameter, and the modulation and coding parameter includes a coding rate, a modulation order corresponding to a probabilistic shaping constellation diagram, and the Maxwell-Boltzmann distribution parameter; and
determine, based on the first coding rate, the first modulation order, and the Maxwell-Boltzmann distribution parameter, the symbol type quantity, the probability distribution corresponding to the first symbol of each symbol type, and the bit quantity corresponding to each first symbol.

The processing module 1001 is specifically configured to:
generate the first symbol stream based on the first coding rate, the symbol type quantity, the probability distribution corresponding to the first symbol of each symbol type, the bit quantity corresponding to each first symbol, and the first original bit stream.

In another possible implementation, a first net transmission rate corresponding to a case in which the first communication apparatus performs modulation by using a uniform modulation scheme is equal to a product of a second modulation order used in the uniform modulation scheme and a second coding rate; and the processing module 1001 is further configured to:
set the second modulation order to a first modulation order corresponding to the target probabilistic shaping constellation diagram;
set the first net transmission rate to a net transmission rate corresponding to a case in which the first communication apparatus uses probabilistic constellation shaping modulation;
obtain, through calculation based on the first net transmission rate and the second modulation order, a first coding rate and a Maxwell-Boltzmann distribution parameter corresponding to the target probabilistic shaping constellation diagram; and
determine, based on the first modulation order and the Maxwell-Boltzmann distribution parameter, the symbol type quantity, the probability distribution corresponding to the first symbol of each symbol type, and the bit quantity corresponding to each first symbol.

The processing module 1001 is specifically configured to:
generate the first symbol stream based on the first coding rate, the symbol type quantity, the probability distribution corresponding to the first symbol of each symbol type, the bit quantity corresponding to each first symbol, and the first original bit stream.

In another possible implementation, a first net transmission rate corresponding to a case in which the first communication apparatus performs modulation by using a uniform modulation scheme is equal to a product of a second modulation order corresponding to the uniform modulation scheme and a corresponding second coding rate. The processing module 1001 is further configured to:
set the second coding rate to a first coding rate used when the first communication apparatus uses probabilistic constellation shaping modulation;
set the first modulation order corresponding to the target probabilistic shaping constellation diagram to the second modulation order plus a first preset value;
set the first net transmission rate to a net transmission rate corresponding to a case in which the first communication apparatus uses the probabilistic constellation shaping modulation;
determine, based on the first net transmission rate and the first modulation order, the Maxwell-Boltzmann distribution parameter corresponding to the target probabilistic shaping constellation diagram; and
determine, based on the first modulation order and the Maxwell-Boltzmann distribution parameter, the symbol type quantity, the probability distribution corresponding to the first symbol of each symbol type, and the bit quantity corresponding to each first symbol.

The processing module 1001 is specifically configured to:
generate the first symbol stream based on the first coding rate, the symbol type quantity, the probability distribution corresponding to the first symbol of each symbol type, the bit quantity corresponding to each first symbol, and the first original bit stream.

In another possible implementation, the transceiver module 1002 is configured to:
send first indication information to a second communication apparatus, where
the first indication information indicates a first MCS and the Maxwell-Boltzmann distribution parameter corresponding to the target probabilistic shaping constellation diagram, and the first MCS indicates the first coding rate and the first modulation order, or the first indication information is for the first coding rate, the first modulation order, and the Maxwell-Boltzmann distribution parameter.

In another possible implementation, the transceiver module 1002 is configured to:
send second indication information to a second communication apparatus, where the second indication information indicates a second MCS and an order-increase equal-entropy scheme, or indicates a second MCS and an equal-order coding rate increase scheme, and the second MCS indicates the second modulation order and the second coding rate.

In another possible implementation, the processing module 1001 is further configured to:
obtain a channel state parameter; and
if a value of the channel state parameter is greater than or equal to a first threshold, perform modulation by using a probabilistic constellation shaping scheme.

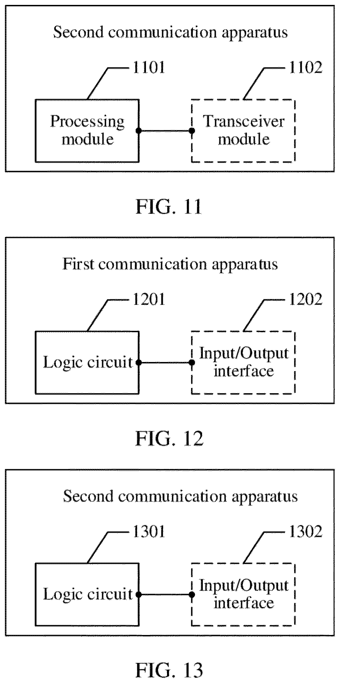

The following describes a second communication apparatus provided in an embodiment of this application. Refer to FIG. 11. FIG. 11 is a diagram of a structure of a second communication apparatus according to an embodiment of this application. The second communication apparatus may be configured to perform steps performed by the second communication apparatus in the embodiments shown in FIG. 5, FIG. 8, and FIG. 9. For details, refer to related descriptions in the foregoing method embodiments.

The second communication apparatus includes a processing module 1101. Optionally, the second communication apparatus further includes a transceiver module 1102.

The processing module 1101 is configured to: obtain a second QAM symbol stream; demodulate the second QAM symbol stream to obtain a third bit stream; parse the third bit stream to obtain a system bit stream and a second check bit stream; perform decoding based on the system bit stream and the second check bit stream to obtain a fourth bit stream and a fifth bit stream; map the fourth bit stream into a second symbol stream according to a second mapping rule, where the second mapping rule is a mapping relationship between a bit and a second symbol, a bit quantity corresponding to each second symbol in the second symbol stream is a bit quantity required by each second symbol that are represented by using a bit, a symbol type quantity of second symbols included in the second symbol stream and a probability distribution corresponding to a second symbol of each symbol type indicate a probability distribution and a signal amplitude of a quadrature signal of a constellation point in a target probabilistic shaping constellation diagram and a probability distribution and a signal amplitude of the constellation point, and symbols of different symbol types correspond to different probability distributions and/or different signal amplitudes; and parse the second symbol stream based on the symbol type quantity, the bit quantity corresponding to each second symbol, and the probability distribution corresponding to each symbol type, to obtain a sixth bit stream.

In a possible implementation, the processing module 1101 is further configured to:
perform, according to a first de-interleaving and separation rule, de-interleaving and separation processing on a plurality of second symbols included in the second symbol stream, to obtain a de-interleaved second symbol stream.

The processing module 1101 is specifically configured to:
parse the de-interleaved second symbol stream based on the symbol type quantity, the bit quantity corresponding to each second symbol, and the probability distribution corresponding to each symbol type, to obtain the sixth bit stream.

In another possible implementation, a second symbol in the second symbol stream is a complex-valued symbol in which a value of a real part and a value of an imaginary part are both greater than or equal to 0.

In another possible implementation, the system bit stream includes a plurality of third bits and a plurality of fourth bits, the system bit stream is located in a second code block, and a length of the second code block is greater than a code block length supported by the second communication apparatus; and the processing module 1101 is further configured to:
determine the second code block as M code subblocks, where each of the M code subblocks includes a part of the third bits and a part of the fourth bits, and different code subblocks include different third bits and fourth bits; and
determine the second check bit stream as M portions of check bits, where the M portions of check bits one-to-one correspond to the M code subblocks; check bits corresponding to an M^{th} code subblock in the M code subblocks include a first TB CRC bit; M is equal to a rounded-up ratio of the length of the second code block to the code block length supported by the second communication apparatus; and a ratio of a quantity of third bits in the M code subblocks to a second value is equal to a first ratio, the second value is equal to a sum of a quantity of fourth bits included in each code subblock and a quantity of check bits corresponding to each code subblock, and the first ratio is a ratio of a quantity of bits required for representing a signal amplitude corresponding to each constellation point in the target probabilistic shaping constellation diagram to a quantity of bits required for representing a sign bit of a signal corresponding to each constellation point in the target probabilistic shaping constellation diagram.

The processing module 1101 is specifically configured to:
decode each code subblock and the check bits corresponding to each code subblock, to obtain a fifth bit corresponding to each code subblock and a sixth bit corresponding to each code subblock; and
determine the fifth bit corresponding to each code subblock as the fourth bit stream, and determine the sixth bit corresponding to each code subblock as the fifth bit stream.

In another possible implementation, the transceiver module 1102 is configured to:
receive first indication information of a first communication apparatus, where
the first indication information indicates a first MCS and the Maxwell-Boltzmann distribution parameter corresponding to the target probabilistic shaping constellation diagram, and the first MCS indicates a first coding rate used when the first communication apparatus uses probabilistic constellation shaping modulation and a first modulation order corresponding to the target probabilistic shaping constellation diagram; or the first indication information is for the first coding rate and the first modulation order and the Maxwell-Boltzmann distribution parameter that correspond to the target probabilistic shaping constellation diagram.

The processing module 1101 is further configured to:
determine, based on the first modulation order and the Maxwell-Boltzmann distribution parameter, the symbol type quantity, the probability distribution corresponding to the second symbol of each symbol type, and the bit quantity corresponding to each second symbol.

The processing module 1101 is specifically configured to:
parse the second symbol stream based on the first coding rate, the symbol type quantity, the bit quantity corresponding to each second symbol, and the probability distribution corresponding to each symbol type, to obtain the sixth bit stream.

In another possible implementation, the transceiver module 1102 is configured to:
receive second indication information from a first communication apparatus, where
the second indication information indicates a second MCS and an order-increase equal-entropy scheme, or indicates a second MCS and an equal-order coding rate increase scheme, and the second MCS indicates a second modulation order corresponding to a uniform modulation scheme and a corresponding second coding rate.

In another possible implementation, if the second indication information indicates the equal-order coding rate increase scheme, the processing module 1101 is further configured to:
determine, by using the equal-order coding rate increase scheme, a first coding rate used when the second communication apparatus uses probabilistic constellation shaping modulation, and a first modulation order and a Maxwell-Boltzmann distribution parameter that correspond to the target probabilistic shaping constellation diagram; and
determine, based on the first modulation order and the Maxwell-Boltzmann distribution parameter, the symbol type quantity, the probability distribution corresponding to the second symbol of each symbol type, and the bit quantity corresponding to each second symbol.

The processing module 1101 is specifically configured to:
parse the second symbol stream based on the first coding rate, the symbol type quantity, the bit quantity corresponding to each second symbol, and the probability distribution corresponding to each symbol type, to obtain the sixth bit stream.

In another possible implementation, a first net transmission rate corresponding to a case in which the first communication apparatus performs modulation by using a uniform modulation scheme is equal to a product of a second modulation order corresponding to the uniform modulation scheme and a corresponding second coding rate.

The processing module 1101 is specifically configured to:
set the second modulation order to a first modulation order corresponding to the target probabilistic shaping constellation diagram;
set the first net transmission rate to a net transmission rate corresponding to a case in which the first communication apparatus uses the probabilistic constellation shaping modulation; and
obtain, through calculation based on the first net transmission rate and the first modulation order, the first coding rate and the Maxwell-Boltzmann distribution parameter corresponding to the target probabilistic shaping constellation diagram.

In another possible implementation, if the second indication information indicates the order-increase equal-entropy scheme, the processing module 1101 is further configured to:
determine, by using the order-increase equal-entropy scheme, a first coding rate used when the second communication apparatus uses probabilistic constellation shaping modulation, and a first modulation order and a Maxwell-Boltzmann distribution parameter that correspond to the target probabilistic shaping constellation diagram; and
determine, based on the first modulation order and the Maxwell-Boltzmann distribution parameter, the symbol type quantity, the probability distribution corresponding to the second symbol of each symbol type, and the bit quantity corresponding to each second symbol.

The processing module 1101 is specifically configured to:
parse the second symbol stream based on the first coding rate, the symbol type quantity, the bit quantity corresponding to each second symbol, and the probability distribution corresponding to each symbol type, to obtain the sixth bit stream.

In another possible implementation, a first net transmission rate corresponding to a case in which the first communication apparatus performs modulation by using a uniform modulation scheme is equal to a product of a second modulation order corresponding to the uniform modulation scheme and a corresponding second coding rate.

The processing module 1101 is specifically configured to:
set the second coding rate to a first coding rate used when the first communication apparatus uses the probabilistic constellation shaping modulation;
set the first modulation order corresponding to the target probabilistic shaping constellation diagram to the second modulation order plus a first preset value;
set the first net transmission rate to a net transmission rate corresponding to a case in which the second communication apparatus uses the probabilistic constellation shaping modulation; and
determine, based on the first net transmission rate and the first modulation order, the Maxwell-Boltzmann distribution parameter corresponding to the target probabilistic shaping constellation diagram.

FIG. 12 is a diagram of another structure of a first communication apparatus according to an embodiment of this application. Refer to FIG. 12. The first communication apparatus includes a logic circuit 1201. Optionally, the first communication apparatus further includes an input/output interface 1202.

The first communication apparatus shown in FIG. 12 may be configured to perform steps performed by the first communication apparatus in the embodiments shown in FIG. 2, FIG. 5, FIG. 8, and FIG. 9.

Optionally, the logic circuit 1201 may have a function of the processing module 1001 in the embodiment shown in FIG. 10. The input/output interface 1202 may have a function of the transceiver module 1002 in the embodiment shown in FIG. 10.

The first communication apparatus shown in FIG. 12 may perform the technical solutions shown in the foregoing method embodiments. Implementation principles and beneficial effects of the apparatus are similar to those of the method embodiments. Details are not described herein again.

FIG. 13 is a diagram of another structure of a second communication apparatus according to an embodiment of this application. Refer to FIG. 13. The second communication apparatus includes a logic circuit 1301. Optionally, the second communication apparatus further includes an input/output interface 1302.

The second communication apparatus shown in FIG. 13 may be configured to perform steps performed by the second communication apparatus in the embodiments shown in FIG. 5, FIG. 8, and FIG. 9.

Optionally, the logic circuit 1301 may have a function of the processing module 1101 in the embodiment shown in FIG. 11. The input/output interface 1302 may have a function of the transceiver module 1102 in the embodiment shown in FIG. 11.

The second communication apparatus shown in FIG. 13 may perform the technical solutions shown in the foregoing method embodiments. Implementation principles and beneficial effects of the apparatus are similar to those of the method embodiments. Details are not described herein again.

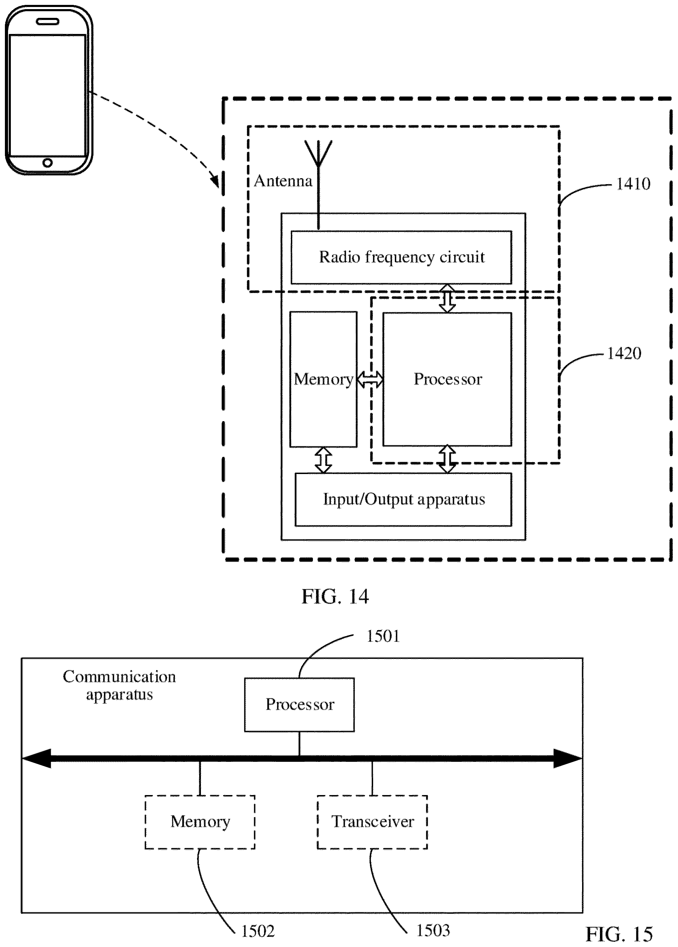

FIG. 14 is a diagram of a possible structure of a first communication apparatus or a second communication apparatus serving as a terminal device below.

FIG. 14 is a diagram of a simplified structure of the terminal device. For ease of understanding and illustration, an example in which the terminal device is a mobile phone is used in FIG. 14. As shown in FIG. 14, the terminal device includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave.

The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 14 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device. As shown in FIG. 14, the terminal device includes a transceiver unit 1410 and a processing unit 1420. The transceiver unit may also be referred to as a transceiver, a transceiver machine, a transceiver apparatus, or the like. The processing unit may also be referred to as a processor, a processing board, a processing module, a processing apparatus, or the like. Optionally, a device for implementing a receiving function in the transceiver unit 1410 may be considered as a receiving unit, and a device for implementing a sending function in the transceiver unit 1410 may be considered as a sending unit. In other words, the transceiver unit 1410 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1410 is configured to perform a sending operation and a receiving operation of the first communication apparatus or the second communication apparatus in the foregoing method embodiments, and the processing unit 1420 is configured to perform other operations than the sending and receiving operations of the first communication apparatus or the second communication apparatus in the foregoing method embodiments.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip.

This application further provides a communication apparatus. FIG. 15 is another diagram of a structure of a communication apparatus according to an embodiment of this application. The communication apparatus may be configured to perform steps performed by the first communication apparatus in the embodiments shown in FIG. 2, FIG. 5, FIG. 8, and FIG. 9, or configured to perform steps performed by the second communication apparatus in the embodiments shown in FIG. 5, FIG. 8, and FIG. 9. For details, refer to related descriptions in the foregoing method embodiments.

The communication apparatus includes a processor 1501. Optionally, the communication apparatus further includes a memory 1502 and a transceiver 1503.

In a possible implementation, the processor 1501, the memory 1502, and the transceiver 1503 are separately connected by using a bus, and the memory stores computer instructions.

The processing module 1101 or the processing module 1001 in the foregoing embodiments may be specifically the processor 1501 in this embodiment. Therefore, specific implementation of the processor 1501 is not described again. The transceiver module 1102 or the transceiver module 1101 in the foregoing embodiments may be specifically the transceiver 1503 in this embodiment. Therefore, specific implementation of the transceiver 1503 is not described again.

An embodiment of this application further provides a communication system. The communication system includes the first communication apparatus shown in FIG. 10 and the second communication apparatus shown in FIG. 11.

The first communication apparatus shown in FIG. 10 may be configured to perform all or some of steps performed by the first communication apparatus in the embodiments shown in FIG. 2, FIG. 5, FIG. 8, and FIG. 9. The second communication apparatus shown in FIG. 11 may be configured to perform all or some of steps performed by the second communication apparatus in the embodiments shown in FIG. 5, FIG. 8, and FIG. 9.

An embodiment of this application further provides a computer program product including instructions. When the instructions are on a computer, the computer is enabled to perform the methods provided in the embodiments shown in FIG. 2, FIG. 5, FIG. 8, and FIG. 9.

An embodiment of this application further provides a computer-readable storage medium, including computer instructions. When the computer instructions are run on a computer, the computer is enabled to perform the methods provided in the embodiments shown in FIG. 2, FIG. 5, FIG. 8, and FIG. 9.

An embodiment of this application further provides a chip apparatus, including a processor, connected to a memory, and configured to invoke a program stored in the memory, so that the processor performs the methods provided in the embodiments shown in FIG. 2, FIG. 5, FIG. 8, and FIG. 9.

The processor mentioned anywhere above may be a general-purpose central processing unit, a microprocessor, an application-specific integrated circuit (application-specific integrated circuit, ASIC), or one or more integrated circuits configured to control program execution of the methods provided in the embodiments shown in FIG. 2, FIG. 5, FIG. 8, and FIG. 9. The memory mentioned in any one of the foregoing may be a read-only memory (read-only memory, ROM), another type of static storage device that can store static information and instructions, a random access memory (random access memory, RAM), or the like.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes: any medium that can store program code, a USB flash drive, a removable hard disk, a read-only memory (read-only memory, ROM), a random access memory (random access memory, RAM), a magnetic disk, an optical disc, and the like.

In this application, unless otherwise specified, for same or similar parts in embodiments, refer to each other. In embodiments of this application and the implementations/implementation methods in embodiments, unless otherwise specified or a logical collision occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship of the technical features. The following implementations of this application are not intended to limit the protection scope of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A modulation method, wherein the method comprises:
generating, by a first communication apparatus, a first symbol stream based on a symbol type quantity, a probability distribution corresponding to a first symbol of each symbol type, a bit quantity corresponding to each first symbol, and a first original bit stream, wherein the symbol type quantity and the probability distribution corresponding to the first symbol of each symbol type indicate a probability distribution and a signal amplitude of a quadrature signal of a constellation point in a target probabilistic shaping constellation diagram and a probability distribution and a signal amplitude of an inphase signal of the constellation point, the bit quantity corresponding to each first symbol is a bit quantity required by each first symbol that is represented by using a bit, and first symbols of different symbol types correspond to different probability distributions and/or different signal amplitudes; and
generating, by the first communication apparatus, a first quadrature amplitude modulation QAM symbol stream based on the first symbol stream and a second original bit stream, wherein the first QAM symbol stream comprises one or more QAM symbols.

2. The method according to claim 1, wherein a first symbol in the first symbol stream is a complex-valued symbol in which a value of a real part and a value of an imaginary part are both greater than or equal to 0.

3. The method according to claim 1 or 2, wherein the method further comprises:
interleaving and separating, by the first communication apparatus according to a first interleaving and separation rule, a plurality of first symbols comprised in the first symbol stream, to obtain an interleaved first symbol stream; and
the generating, by the first communication apparatus, a first quadrature amplitude modulation QAM symbol stream based on the first symbol stream and a second original bit stream comprises:
generating, by the first communication apparatus, the first QAM symbol stream based on the interleaved first symbol stream and the second original bit stream.

4. The method according to any one of claims 1 to 3, wherein the generating, by the first communication apparatus, a first quadrature amplitude modulation QAM symbol stream based on the first symbol stream and a second original bit stream comprises:
mapping, by the first communication apparatus, the first symbol stream into a first bit stream according to a first mapping rule, wherein the first mapping rule is a mapping relationship between a first symbol and a bit, and a quantity of bits to which each first symbol is mapped is the bit quantity corresponding to each first symbol;
performing, by the first communication apparatus, encoding based on the first bit stream and the second original bit stream to obtain a first check bit stream;
determining, by the first communication apparatus, a second bit stream based on the first check bit stream and the second original bit stream; and
generating, by the first communication apparatus, the first QAM symbol stream based on the first symbol stream and the second bit stream.

5. The method according to claim 4, wherein each first symbol in the first symbol stream corresponds to one constellation point in the target probabilistic shaping constellation diagram; and
each first symbol in the first symbol stream indicates a signal amplitude of a constellation point corresponding to the first symbol, and the second bit stream indicates a sign bit of a quadrature signal of the constellation point corresponding to each first symbol in the first symbol stream and a sign bit of an inphase signal of the constellation point.

6. The method according to claim 5, wherein each first symbol in the first symbol stream indicates the signal amplitude of the constellation point corresponding to the first symbol, a (2i-1)^{th} bit in the second bit stream indicates a sign bit of a quadrature signal of a constellation point corresponding to an i^{th} first symbol in the first symbol stream, a 2i^{th} bit in the second bit stream indicates a sign bit of an inphase signal of the constellation point corresponding to the i^{th} first symbol in the first symbol stream, and i is an integer greater than or equal to 1.

7. The method according to claim 4, wherein each first symbol in the first symbol stream corresponds to a quadrature signal or an inphase signal of one constellation point in the target probabilistic shaping constellation diagram; and
each first symbol in the first symbol stream indicates a signal amplitude of the quadrature signal or the inphase signal corresponding to the first symbol, and the second bit stream indicates a sign bit of the quadrature signal or the inphase signal corresponding to each first symbol in the first symbol stream.

8. The method according to claim 7, wherein an odd-numbered first symbol in the first symbol stream corresponds to a quadrature signal of a constellation point in the target probabilistic shaping constellation diagram, and an even-numbered first symbol in the first symbol stream corresponds to an inphase signal of a constellation point in the target probabilistic shaping constellation diagram; and
the odd-numbered first symbol in the first symbol stream indicates a signal amplitude of the quadrature signal corresponding to the first symbol, the even-numbered first symbol in the first symbol stream indicates a signal amplitude of the inphase signal corresponding to the first symbol, an odd-numbered bit in the second bit stream indicates a sign bit of a quadrature signal corresponding to the odd-numbered first symbol, and an even-numbered bit in the second bit stream indicates a sign bit of an inphase signal corresponding to the even-numbered first symbol.

9. The method according to any one of claims 4 to 8, wherein the first bit stream and the second original bit stream are located in a first code block, a length of the first code block is greater than a code block length supported by the first communication apparatus, the first bit stream comprises a plurality of first bits, and the second original bit stream comprises a plurality of second bits; and
the performing, by the first communication apparatus, encoding based on the first bit stream and the second original bit stream to obtain a first check bit stream comprises:
determining, by the first communication apparatus, a first transport block cyclic redundancy check TB CRC bit based on the first bit stream and the second original bit stream;
determining, by the first communication apparatus, the first code block as M code subblocks;
separately encoding, by the first communication apparatus, the M code subblocks, to obtain code block cyclic redundancy check CB CRC bits corresponding to the M code subblocks; and
determining, by the first communication apparatus, the first check bit stream based on the code block cyclic redundancy check CB CRC bits corresponding to the M code subblocks and the first TB CRC bit, wherein
the first check bit stream comprises check bits corresponding to the M code subblocks, check bits corresponding to an M^{th} code subblock in the M code subblocks comprise a CB CRC bit corresponding to the M^{th} code subblock and the first TB CRC bit, each of the M code subblocks comprises a part of the plurality of first bits and a part of the plurality of second bits, and different code subblocks comprise different first bits and different second bits; M is equal to a rounded-up ratio of the length of the first code block to the code block length supported by the first communication apparatus; and a ratio of a quantity of first bits comprised in each of the M code subblocks to a first value is equal to a first ratio, the first value is equal to a sum of a quantity of second bits comprised in each code subblock and a quantity of check bits comprised in each code subblock, and the first ratio is a ratio of a quantity of bits required for representing a signal amplitude corresponding to each constellation point in the target probabilistic shaping constellation diagram to a quantity of bits required for representing a sign bit of a signal corresponding to each constellation point in the target probabilistic shaping constellation diagram.

10. The method according to any one of claims 1 to 9, wherein the method further comprises:
obtaining, by the first communication apparatus, a channel state parameter;
determining, by the first communication apparatus, supported maximum spectral efficiency SE based on the channel state parameter;
determining, by the first communication apparatus based on the maximum spectral efficiency, a first coding rate and a first modulation order and a Maxwell-Boltzmann distribution parameter that correspond to the target probabilistic shaping constellation diagram; and
determining, by the first communication apparatus based on the first modulation order and the Maxwell-Boltzmann distribution parameter, the symbol type quantity, the probability distribution corresponding to the first symbol of each symbol type, and the bit quantity corresponding to each first symbol; and
the generating, by a first communication apparatus, a first symbol stream based on a symbol type quantity, a probability distribution corresponding to a first symbol of each symbol type, a bit quantity corresponding to each first symbol, and a first original bit stream comprises:
generating, by the first communication apparatus, the first symbol stream based on the first coding rate, the symbol type quantity, the probability distribution corresponding to the first symbol of each symbol type, the bit quantity corresponding to each first symbol, and the first original bit stream.

11. The method according to any one of claims 1 to 9, wherein when a first coding rate used by the first communication apparatus and a first modulation order corresponding to the target probabilistic shaping constellation diagram remain unchanged, the method further comprises:
obtaining, by the first communication apparatus, a channel state parameter;
determining, by the first communication apparatus, supported maximum spectral efficiency SE based on the channel state parameter;
determining, by the first communication apparatus based on the maximum spectral efficiency SE, a Maxwell-Boltzmann distribution parameter corresponding to the target probabilistic shaping constellation diagram; and
determining, by the first communication apparatus based on the first modulation order and the Maxwell-Boltzmann distribution parameter, the symbol type quantity, the probability distribution corresponding to the first symbol of each symbol type, and the bit quantity corresponding to each first symbol; and
the generating, by a first communication apparatus, a first symbol stream based on a symbol type quantity, a probability distribution corresponding to a first symbol of each symbol type, a bit quantity corresponding to each first symbol, and a first original bit stream comprises:
generating, by the first communication apparatus, the first symbol stream based on the first coding rate, the symbol type quantity, the probability distribution corresponding to the first symbol of each symbol type, the bit quantity corresponding to each first symbol, and the first original bit stream.

12. The method according to any one of claims 1 to 9, wherein the method further comprises:
obtaining, by the first communication apparatus, a channel state parameter;
determining, by the first communication apparatus based on the channel state parameter and a first correspondence, a first coding rate and a first modulation order and a Maxwell-Boltzmann distribution parameter that correspond to the target probabilistic shaping constellation diagram, wherein the first correspondence is a correspondence between the channel state parameter and a modulation and coding parameter, and the modulation and coding parameter comprises a coding rate, a modulation order corresponding to a probabilistic shaping constellation diagram, and the Maxwell-Boltzmann distribution parameter; and
determining, by the first communication apparatus based on the first modulation order and the Maxwell-Boltzmann distribution parameter that correspond to the target probabilistic shaping constellation diagram, the symbol type quantity, the probability distribution corresponding to the first symbol of each symbol type, and the bit quantity corresponding to each first symbol; and
the generating, by a first communication apparatus, a first symbol stream based on a symbol type quantity, a probability distribution corresponding to a first symbol of each symbol type, a bit quantity corresponding to each first symbol, and a first original bit stream comprises:
generating, by the first communication apparatus, the first symbol stream based on the first coding rate, the symbol type quantity, the probability distribution corresponding to the first symbol of each symbol type, the bit quantity corresponding to each first symbol, and the first original bit stream.

13. The method according to any one of claims 1 to 9, wherein a first net transmission rate corresponding to a case in which the first communication apparatus performs modulation by using a uniform modulation scheme is equal to a product of a second modulation order and a second coding rate; and the method further comprises:
setting, by the first communication apparatus, the second modulation order to a first modulation order corresponding to the target probabilistic shaping constellation diagram;
setting, by the first communication apparatus, the first net transmission rate to a net transmission rate corresponding to a case in which the first communication apparatus uses probabilistic constellation shaping modulation;
obtaining, by the first communication apparatus through calculation based on the first net transmission rate and the first modulation order, a first coding rate and a Maxwell-Boltzmann distribution parameter corresponding to the target probabilistic shaping constellation diagram; and
determining, by the first communication apparatus based on the first modulation order and the Maxwell-Boltzmann distribution parameter corresponding to the target probabilistic shaping constellation diagram, the symbol type quantity, the probability distribution corresponding to the first symbol of each symbol type, and the bit quantity corresponding to each first symbol; and
the generating, by a first communication apparatus, a first symbol stream based on a symbol type quantity, a probability distribution corresponding to a first symbol of each symbol type, a bit quantity corresponding to each first symbol, and a first original bit stream comprises:
generating, by the first communication apparatus, the first symbol stream based on the first coding rate, the symbol type quantity, the probability distribution corresponding to the first symbol of each symbol type, the bit quantity corresponding to each first symbol, and the first original bit stream.

14. The method according to any one of claims 1 to 9, wherein a first net transmission rate corresponding to a case in which the first communication apparatus performs modulation by using a uniform modulation scheme is equal to a product of a second modulation order corresponding to the uniform modulation scheme and a corresponding second coding rate; and the method further comprises:
setting, by the first communication apparatus, the second coding rate to a first coding rate used when the first communication apparatus uses probabilistic constellation shaping modulation;
setting, by the first communication apparatus, a first modulation order corresponding to the target probabilistic shaping constellation diagram to the second modulation order plus a first preset value;
setting, by the first communication apparatus, the first net transmission rate to a net transmission rate corresponding to a case in which the first communication apparatus uses the probabilistic constellation shaping modulation;
determining, by the first communication apparatus based on the first net transmission rate and the first modulation order, the Maxwell-Boltzmann distribution parameter corresponding to the target probabilistic shaping constellation diagram; and
determining, by the first communication apparatus based on the first modulation order and the Maxwell-Boltzmann distribution parameter, the symbol type quantity, the probability distribution corresponding to the first symbol of each symbol type, and the bit quantity corresponding to each first symbol; and
the generating, by a first communication apparatus, a first symbol stream based on a symbol type quantity, a probability distribution corresponding to a first symbol of each symbol type, a bit quantity corresponding to each first symbol, and a first original bit stream comprises:
generating, by the first communication apparatus, the first symbol stream based on the first coding rate, the symbol type quantity, the probability distribution corresponding to the first symbol of each symbol type, the bit quantity corresponding to each first symbol, and the first original bit stream.

15. The method according to any one of claims 10 to 14, wherein the method further comprises:
sending, by the first communication apparatus, first indication information to a second communication apparatus, wherein
the first indication information indicates a first modulation and coding scheme MCS and/or the Maxwell-Boltzmann distribution parameter corresponding to the target probabilistic shaping constellation diagram, and the first MCS indicates the first coding rate and the first modulation order, or the first indication information is for the first coding rate, the first modulation order, and the Maxwell-Boltzmann distribution parameter.

16. The method according to claim 13 or 14, wherein the method further comprises:
sending, by the first communication apparatus, second indication information to a second communication apparatus, wherein the second indication information indicates a second modulation and coding scheme MCS and an order-increase equal-entropy scheme, or indicates a second MCS and an equal-order coding rate increase scheme, and the second MCS indicates the second modulation order and the second coding rate.

17. The method according to any one of claims 1 to 16, wherein the method further comprises:
obtaining, by the first communication apparatus, the channel state parameter; and
if a value of the channel state parameter is greater than or equal to a first threshold, performing, by the first communication apparatus, modulation by using a probabilistic constellation shaping scheme.

18. A demodulation method, wherein the method comprises:
obtaining, by a second communication apparatus, a second quadrature amplitude modulation QAM symbol stream;
demodulating, by the second communication apparatus, the second QAM symbol stream to obtain a third bit stream;
parsing, by the second communication apparatus, the third bit stream to obtain a system bit stream and a second check bit stream;
performing, by the second communication apparatus, decoding based on the system bit stream and the second check bit stream to obtain a fourth bit stream and a fifth bit stream;
mapping, by the second communication apparatus, the fourth bit stream into a second symbol stream according to a second mapping rule, wherein the second mapping rule is a mapping relationship between a bit and a second symbol, a bit quantity corresponding to each second symbol in the second symbol stream is a bit quantity required by each second symbol that are represented by using a bit, a symbol type quantity of second symbols comprised in the second symbol stream and a probability distribution corresponding to a second symbol of each symbol type indicate a probability distribution and a signal amplitude of a quadrature signal of a constellation point in a target probabilistic shaping constellation diagram and a probability distribution and a signal amplitude of the constellation point, and symbols of different symbol types correspond to different probability distributions and/or different signal amplitudes; and
parsing, by the second communication apparatus, the second symbol stream based on the symbol type quantity, the bit quantity corresponding to each second symbol, and the probability distribution corresponding to each symbol type, to obtain a sixth bit stream.

19. The method according to claim 18, wherein the method further comprises:
performing, by the second communication apparatus according to a first de-interleaving and separation rule, de-interleaving and separation processing on a plurality of second symbols comprised in the second symbol stream, to obtain a de-interleaved second symbol stream; and
the parsing, by the second communication apparatus, the second symbol stream based on the symbol type quantity, the bit quantity corresponding to each second symbol, and the probability distribution corresponding to each symbol type, to obtain a sixth bit stream comprises:
parsing, by the second communication apparatus, the de-interleaved second symbol stream based on the symbol type quantity, the bit quantity corresponding to each second symbol, and the probability distribution corresponding to each symbol type, to obtain the sixth bit stream.

20. The method according to claim 18 or 19, wherein the second symbol in the second symbol stream is a complex-valued symbol in which a value of a real part and a value of an imaginary part are both greater than or equal to 0.

21. The method according to any one of claims 18 to 20, wherein the system bit stream comprises a plurality of third bits and a plurality of fourth bits, the system bit stream is located in a second code block, and a length of the second code block is greater than a code block length supported by the second communication apparatus; and the method further comprises:
determining, by the second communication apparatus, the second code block as M code subblocks, wherein each of the M code subblocks comprises a part of the third bits and a part of the fourth bits, and different code subblocks comprise different third bits and different fourth bits; and
determining, by the second communication apparatus, the second check bit stream as M portions of check bits, wherein
the M portions of check bits one-to-one correspond to the M code subblocks; check bits corresponding to an M^{th} code subblock in the M code subblocks comprise a first transport block cyclic redundancy check TB CRC bit; M is equal to a rounded-up ratio of the length of the second code block to the code block length supported by the second communication apparatus; and a ratio of a quantity of third bits in the M code subblocks to a second value is equal to a first ratio, the second value is equal to a sum of a quantity of fourth bits comprised in each code subblock and a quantity of check bits corresponding to each code subblock, and the first ratio is a ratio of a quantity of bits required for representing a signal amplitude corresponding to each constellation point in the target probabilistic shaping constellation diagram to a quantity of bits required for representing a sign bit of a signal corresponding to each constellation point in the target probabilistic shaping constellation diagram; and
the performing, by the second communication apparatus, decoding based on the system bit stream and the second check bit stream to obtain a fourth bit stream and a fifth bit stream comprises:
decoding, by the second communication apparatus, each code subblock and the check bits corresponding to each code subblock, to obtain a fifth bit corresponding to each code subblock and a sixth bit corresponding to each code subblock; and
determining, by the second communication apparatus, the fifth bit corresponding to each code subblock as the fourth bit stream, and determining the sixth bit corresponding to each code subblock as the fifth bit stream.

22. The method according to any one of claims 18 to 21, wherein the method further comprises:
receiving, by the second communication apparatus, first indication information of a first communication apparatus, wherein
the first indication information indicates a first modulation and coding scheme MCS and/or the Maxwell-Boltzmann distribution parameter corresponding to the target probabilistic shaping constellation diagram, and the first MCS indicates a first coding rate used when the first communication apparatus uses probabilistic constellation shaping modulation and a first modulation order corresponding to the target probabilistic shaping constellation diagram; or the first indication information is for the first coding rate and the first modulation order and the Maxwell-Boltzmann distribution parameter that correspond to the target probabilistic shaping constellation diagram; and
determining, by the second communication apparatus based on the first modulation order and the Maxwell-Boltzmann distribution parameter, the symbol type quantity, the probability distribution corresponding to the second symbol of each symbol type, and the bit quantity corresponding to each second symbol; and
the parsing, by the second communication apparatus, the second symbol stream based on the symbol type quantity, the bit quantity corresponding to each second symbol, and the probability distribution corresponding to each symbol type, to obtain a sixth bit stream comprises:
parsing, by the second communication apparatus, the second symbol stream based on the first coding rate, the symbol type quantity, the bit quantity corresponding to each second symbol, and the probability distribution corresponding to each symbol type, to obtain the sixth bit stream.

23. The method according to any one of claims 18 to 21, wherein the method further comprises:
receiving, by the second communication apparatus, second indication information from a first communication apparatus, wherein
the second indication information indicates a second modulation and coding scheme MCS and an equal-order coding rate increase scheme, or indicates a second MCS and an order-increase equal-entropy scheme, and the second MCS indicates a second modulation order used when the first communication apparatus uses uniform modulation and a second coding rate.

24. The method according to claim 23, wherein if the second indication information indicates the equal-order coding rate increase scheme, the method further comprises:
determining, by the second communication apparatus by using the equal-order coding rate increase scheme, a first coding rate used when the second communication apparatus uses probabilistic constellation shaping modulation, and a first modulation order and a Maxwell-Boltzmann distribution parameter that correspond to the target probabilistic shaping constellation diagram; and
determining, by the second communication apparatus based on the first modulation order and the Maxwell-Boltzmann distribution parameter, the symbol type quantity, the probability distribution corresponding to the second symbol of each symbol type, and the bit quantity corresponding to each second symbol; and
the parsing, by the second communication apparatus, the second symbol stream based on the symbol type quantity, the bit quantity corresponding to each second symbol, and the probability distribution corresponding to each symbol type, to obtain a sixth bit stream comprises:
parsing, by the second communication apparatus, the second symbol stream based on the first coding rate, the symbol type quantity, the bit quantity corresponding to each second symbol, and the probability distribution corresponding to each symbol type, to obtain the sixth bit stream.

25. The method according to claim 24, wherein a first net transmission rate corresponding to a case in which the first communication apparatus performs modulation by using the uniform modulation is equal to a product of the second modulation order used when the first communication apparatus uses the uniform modulation and the corresponding second coding rate; and
the determining, by the second communication apparatus by using the equal-order coding rate increase scheme, a first coding rate used when the second communication apparatus uses probabilistic constellation shaping modulation, a first modulation order, and a Maxwell-Boltzmann distribution parameter comprises:
setting, by the second communication apparatus, the second modulation order to the first modulation order corresponding to the target probabilistic shaping constellation diagram;
setting, by the second communication apparatus, the first net transmission rate to a net transmission rate corresponding to a case in which the first communication apparatus uses the probabilistic constellation shaping modulation; and
obtaining, by the second communication apparatus through calculation based on the first net transmission rate and the first modulation order, the first coding rate and the Maxwell-Boltzmann distribution parameter corresponding to the target probabilistic shaping constellation diagram.

26. The method according to claim 23, wherein if the second indication information indicates the equal-order coding rate increase scheme, the method further comprises:
determining, by the second communication device by using the order-increase equal-entropy scheme, a first coding rate used when the second communication apparatus uses probabilistic constellation shaping modulation, and a first modulation order and a Maxwell-Boltzmann distribution parameter that correspond to the target probabilistic shaping constellation diagram; and
determining, by the second communication apparatus based on the first modulation order and the Maxwell-Boltzmann distribution parameter, the symbol type quantity, the probability distribution corresponding to the second symbol of each symbol type, and the bit quantity corresponding to each second symbol; and
the parsing, by the second communication apparatus, the second symbol stream based on the symbol type quantity, the bit quantity corresponding to each second symbol, and the probability distribution corresponding to each symbol type, to obtain a sixth bit stream comprises:
parsing, by the second communication apparatus, the second symbol stream based on the first coding rate, the symbol type quantity, the bit quantity corresponding to each second symbol, and the probability distribution corresponding to each symbol type, to obtain the sixth bit stream.

27. The method according to claim 26, wherein a first net transmission rate corresponding to a case in which the first communication apparatus performs modulation by using a uniform modulation scheme is equal to a product of the second modulation order used when the first communication apparatus uses the uniform modulation and the corresponding second coding rate; and
the determining, by the second communication apparatus by using the order-increase equal-entropy scheme, a first coding rate used when the second communication apparatus uses probabilistic constellation shaping modulation, and a first modulation order and a Maxwell-Boltzmann distribution parameter that correspond to the target probabilistic shaping constellation diagram comprises:
setting, by the second communication apparatus, the second coding rate to a first coding rate used when the first communication apparatus uses the probabilistic constellation shaping modulation;
setting, by the second communication apparatus, the first modulation order corresponding to the target probabilistic shaping constellation diagram to the second modulation order plus a first preset value;
setting, by the second communication apparatus, the first net transmission rate to a net transmission rate corresponding to a case in which the second communication apparatus uses the probabilistic constellation shaping modulation; and
determining, by the second communication apparatus based on the first net transmission rate and the first modulation order, the Maxwell-Boltzmann distribution parameter corresponding to the target probabilistic shaping constellation diagram.

28. A first communication apparatus, wherein the first communication apparatus comprises a processing module, wherein
the processing module is configured to: generate a first symbol stream based on a symbol type quantity, a probability distribution corresponding to a first symbol of each symbol type, a bit quantity corresponding to each first symbol, and a first original bit stream, wherein the symbol type quantity and the probability distribution corresponding to the first symbol of each symbol type indicate a probability distribution and a signal amplitude of a quadrature signal of a constellation point in a target probabilistic shaping constellation diagram and a probability distribution and a signal amplitude of an inphase signal of the constellation point, the bit quantity corresponding to each first symbol is a bit quantity required by each first symbol that is represented by using a bit, and first symbols of different symbol types correspond to different probability distributions and/or different signal amplitudes; and generate a first quadrature amplitude modulation QAM symbol stream based on the first symbol stream and a second original bit stream, wherein the first QAM symbol stream comprises one or more QAM symbols.

29. The first communication apparatus according to claim 28, wherein a first symbol in the first symbol stream is a complex-valued symbol in which a value of a real part and a value of an imaginary part are both greater than or equal to 0.

30. The first communication apparatus according to claim 28 or 29, wherein the processing module is further configured to:
interleave and separate, according to a first interleaving and separation rule, a plurality of first symbols comprised in the first symbol stream, to obtain an interleaved first symbol stream; and
the processing module is specifically configured to:
generate the first QAM symbol stream based on the interleaved first symbol stream and the second original bit stream.

31. The first communication apparatus according to any one of claims 28 to 30, wherein the processing module is specifically configured to:
map the first symbol stream into a first bit stream according to a first mapping rule, wherein the first mapping rule is a mapping relationship between a first symbol and a bit, and a quantity of bits to which each first symbol is mapped is the bit quantity corresponding to each first symbol;
perform encoding based on the first bit stream and the second original bit stream to obtain a first check bit stream;
determine a second bit stream based on the first check bit stream and the second original bit stream; and
generate the first QAM symbol stream based on the first symbol stream and the second bit stream.

32. The first communication apparatus according to claim 31, wherein each first symbol in the first symbol stream corresponds to one constellation point in the target probabilistic shaping constellation diagram; and
each first symbol in the first symbol stream indicates a signal amplitude of a constellation point corresponding to the first symbol, and the second bit stream indicates a sign bit of a quadrature signal of the constellation point corresponding to each first symbol in the first symbol stream and a sign bit of an inphase signal of the constellation point.

33. The first communication apparatus according to claim 32, wherein each first symbol in the first symbol stream indicates the signal amplitude of the constellation point corresponding to the first symbol, a (2i-1)^{th} bit in the second bit stream indicates a sign bit of a quadrature signal of a constellation point corresponding to an i^{th} first symbol in the first symbol stream, a 2i^{th} bit in the second bit stream indicates a sign bit of an inphase signal of a constellation point corresponding to the i^{th} first symbol in the first symbol stream, and i is an integer greater than or equal to 1.

34. The first communication apparatus according to claim 31, wherein each first symbol in the first symbol stream corresponds to a quadrature signal or an inphase signal of one constellation point in the target probabilistic shaping constellation diagram; and
each first symbol in the first symbol stream indicates a signal amplitude of the quadrature signal or the inphase signal corresponding to the first symbol, and the second bit stream indicates a sign bit of the quadrature signal or the inphase signal corresponding to each first symbol in the first symbol stream.

35. The first communication apparatus according to claim 34, wherein an odd-numbered first symbol in the first symbol stream corresponds to a quadrature signal of a constellation point in the target probabilistic shaping constellation diagram, and an even-numbered first symbol in the first symbol stream corresponds to an inphase signal of a constellation point in the target probabilistic shaping constellation diagram; and
the odd-numbered first symbol in the first symbol stream indicates a signal amplitude of the quadrature signal corresponding to the first symbol, the even-numbered first symbol in the first symbol stream indicates a signal amplitude of the inphase signal corresponding to the first symbol, an odd-numbered bit in the second bit stream indicates a sign bit of a quadrature signal corresponding to the odd-numbered first symbol, and an even-numbered bit in the second bit stream indicates a sign bit of an inphase signal corresponding to the even-numbered first symbol.

36. The first communication apparatus according to any one of claims 31 to 35, wherein the first bit stream and the second original bit stream are located in a first code block, a length of the first code block is greater than a code block length supported by the first communication apparatus, the first bit stream comprises a plurality of first bits, and the second original bit stream comprises a plurality of second bits; and
the processing module is specifically configured to:
determine a first transport block cyclic redundancy check TB CRC bit based on the first bit stream and the second original bit stream;
determine the first code block as M code subblocks;
separately encode the M code subblocks, to obtain code block cyclic redundancy check CB CRC bits corresponding to the M code subblocks; and
determine the first check bit stream based on the code block cyclic redundancy check CB CRC bits corresponding to the M code subblocks and the first TB CRC bit, wherein
the first check bit stream comprises check bits corresponding to the M code subblocks, check bits corresponding to an M^{th} code subblock in the M code subblocks comprise a CB CRC bit corresponding to the M^{th} code subblock and the first TB CRC bit, each of the M code subblocks comprises a part of the plurality of first bits and a part of the plurality of second bits, and different code subblocks comprise different first bits and different second bits; M is equal to a rounded-up ratio of the length of the first code block to the code block length supported by the first communication apparatus; and a ratio of a quantity of first bits comprised in each of the M code subblocks to a first value is equal to a first ratio, the first value is equal to a sum of a quantity of second bits comprised in each code subblock and a quantity of check bits comprised in each code subblock, and the first ratio is a ratio of a quantity of bits required for representing a signal amplitude corresponding to each constellation point in the target probabilistic shaping constellation diagram to a quantity of bits required for representing a sign bit of a signal corresponding to each constellation point in the target probabilistic shaping constellation diagram.

37. The first communication apparatus according to any one of claims 28 to 36, wherein the processing module is further configured to:
obtain a channel state parameter;
determine supported maximum spectral efficiency SE based on the channel state parameter;
determine, based on the maximum spectral efficiency, a first coding rate and a first modulation order and a Maxwell-Boltzmann distribution parameter that correspond to the target probabilistic shaping constellation diagram; and
determine, based on the first modulation order and the Maxwell-Boltzmann distribution parameter, the symbol type quantity, the probability distribution corresponding to the first symbol of each symbol type, and the bit quantity corresponding to each first symbol; and
the processing module is specifically configured to:
generate the first symbol stream based on the first coding rate, the symbol type quantity, the probability distribution corresponding to the first symbol of each symbol type, the bit quantity corresponding to each first symbol, and the first original bit stream.

38. The first communication apparatus according to any one of claims 28 to 36, wherein when a first coding rate used by the first communication apparatus and a first modulation order corresponding to the target probabilistic shaping constellation diagram remain unchanged, the processing module is further configured to:
obtain a channel state parameter;
determine supported maximum spectral efficiency SE based on the channel state parameter;
determine, based on the maximum spectral efficiency SE, a Maxwell-Boltzmann distribution parameter corresponding to the target probabilistic shaping constellation diagram; and
determine, based on the first modulation order and the Maxwell-Boltzmann distribution parameter, the symbol type quantity, the probability distribution corresponding to the first symbol of each symbol type, and the bit quantity corresponding to each first symbol; and
the processing module is specifically configured to:
generate the first symbol stream based on the first coding rate, the symbol type quantity, the probability distribution corresponding to the first symbol of each symbol type, the bit quantity corresponding to each first symbol, and the first original bit stream.

39. The first communication apparatus according to any one of claims 28 to 36, wherein the processing module is further configured to:
obtain a channel state parameter;
determine, based on the channel state parameter and a first correspondence, a first coding rate and a first modulation order and a Maxwell-Boltzmann distribution parameter that correspond to the target probabilistic shaping constellation diagram, wherein the first correspondence is a correspondence between the channel state parameter and a modulation and coding parameter, and the modulation and coding parameter comprises a coding rate, a modulation order corresponding to a probabilistic shaping constellation diagram, and the Maxwell-Boltzmann distribution parameter; and
determine, based on the first modulation order and the Maxwell-Boltzmann distribution parameter that correspond to the target probabilistic shaping constellation diagram, the symbol type quantity, the probability distribution corresponding to the first symbol of each symbol type, and the bit quantity corresponding to each first symbol; and
the processing module is specifically configured to:
generate the first symbol stream based on the first coding rate, the symbol type quantity, the probability distribution corresponding to the first symbol of each symbol type, the bit quantity corresponding to each first symbol, and the first original bit stream.

40. The first communication apparatus according to any one of claims 28 to 36, wherein a first net transmission rate corresponding to a case in which the first communication apparatus performs modulation by using a uniform modulation scheme is equal to a product of a second modulation order and a second coding rate; and the processing module is further configured to:
set the second modulation order to a first modulation order corresponding to the target probabilistic shaping constellation diagram;
set the first net transmission rate to a net transmission rate corresponding to a case in which the first communication apparatus uses probabilistic constellation shaping modulation;
obtain, through calculation based on the first net transmission rate and the first modulation order, a first coding rate and a Maxwell-Boltzmann distribution parameter corresponding to the target probabilistic shaping constellation diagram; and
determine, based on the first modulation order and the Maxwell-Boltzmann distribution parameter corresponding to the target probabilistic shaping constellation diagram, the symbol type quantity, the probability distribution corresponding to the first symbol of each symbol type, and the bit quantity corresponding to each first symbol; and
the processing module is specifically configured to:
generate the first symbol stream based on the first coding rate, the symbol type quantity, the probability distribution corresponding to the first symbol of each symbol type, the bit quantity corresponding to each first symbol, and the first original bit stream.

41. The first communication apparatus according to any one of claims 28 to 36, wherein a first net transmission rate corresponding to a case in which the first communication apparatus performs modulation by using a uniform modulation scheme is equal to a product of a second modulation order corresponding to the uniform modulation scheme and a corresponding second coding rate; and the processing module is further configured to:
set the second coding rate to a first coding rate used when the first communication apparatus uses probabilistic constellation shaping modulation;
set a first modulation order corresponding to the target probabilistic shaping constellation diagram to be equal to the second modulation order plus a first preset value;
set the first net transmission rate to a net transmission rate corresponding to a case in which the first communication apparatus uses the probabilistic constellation shaping modulation;
determine, based on the first net transmission rate and the first modulation order, the Maxwell-Boltzmann distribution parameter corresponding to the target probabilistic shaping constellation diagram; and
determine, based on the first modulation order and the Maxwell-Boltzmann distribution parameter, the symbol type quantity, the probability distribution corresponding to the first symbol of each symbol type, and the bit quantity corresponding to each first symbol; and
the processing module is specifically configured to:
generate the first symbol stream based on the first coding rate, the symbol type quantity, the probability distribution corresponding to the first symbol of each symbol type, the bit quantity corresponding to each first symbol, and the first original bit stream.

42. The first communication apparatus according to any one of claims 37 to 41, wherein the first communication apparatus further comprises a transceiver module, wherein
the transceiver module is configured to send first indication information to a second communication apparatus, wherein
the first indication information indicates a first modulation and coding scheme MCS and/or the Maxwell-Boltzmann distribution parameter corresponding to the target probabilistic shaping constellation diagram, and the first MCS indicates the first coding rate and the first modulation order, or the first indication information is for the first coding rate, the first modulation order, and the Maxwell-Boltzmann distribution parameter.

43. The first communication apparatus according to claim 40 or 41, wherein the first communication apparatus further comprises a transceiver module, wherein
the transceiver module is configured to send second indication information to a second communication apparatus, wherein the second indication information indicates a second modulation and coding scheme MCS and an order-increase equal-entropy scheme, or indicates a second MCS and an equal-order coding rate increase scheme, and the second MCS indicates the second modulation order and the second coding rate.

44. The first communication apparatus according to any one of claims 28 to 43, wherein the processing module is further configured to:
obtain the channel state parameter; and
if a value of the channel state parameter is greater than or equal to a first threshold, perform modulation by using a probabilistic constellation shaping scheme.

45. A second communication apparatus, wherein the second communication apparatus comprises a processing module, wherein
the processing module is configured to: obtain a second quadrature amplitude modulation QAM symbol stream; demodulate the second QAM symbol stream to obtain a third bit stream; parse the third bit stream to obtain a system bit stream and a second check bit stream; perform decoding based on the system bit stream and the second check bit stream to obtain a fourth bit stream and a fifth bit stream; map the fourth bit stream into a second symbol stream according to a second mapping rule, wherein the second mapping rule is a mapping relationship between a bit and a second symbol, a bit quantity corresponding to each second symbol in the second symbol stream is a bit quantity required by each second symbol that are represented by using a bit, a symbol type quantity of second symbols comprised in the second symbol stream and a probability distribution corresponding to a second symbol of each symbol type indicate a probability distribution and a signal amplitude of a quadrature signal of a constellation point in a target probabilistic shaping constellation diagram and a probability distribution and a signal amplitude of the constellation point, and symbols of different symbol types correspond to different probability distributions and/or different signal amplitudes; and parse the second symbol stream based on the symbol type quantity, the bit quantity corresponding to each second symbol, and the probability distribution corresponding to each symbol type, to obtain a sixth bit stream.

46. The second communication apparatus according to claim 45, wherein the processing module is specifically configured to:
perform, according to a first de-interleaving and separation rule, de-interleaving and separation processing on a plurality of second symbols comprised in the second symbol stream, to obtain a de-interleaved second symbol stream; and
that the processing module parses the second symbol stream based on the symbol type quantity, the bit quantity corresponding to each second symbol, and the probability distribution corresponding to each symbol type, to obtain a sixth bit stream comprises:
parsing the de-interleaved second symbol stream based on the symbol type quantity, the bit quantity corresponding to each second symbol, and the probability distribution corresponding to each symbol type, to obtain the sixth bit stream.

47. The second communication apparatus according to claim 45 or 46, wherein the second symbol in the second symbol stream is a complex-valued symbol in which a value of a real part and a value of an imaginary part are both greater than or equal to 0.

48. The second communication apparatus according to any one of claims 45 to 47, wherein the system bit stream comprises a plurality of third bits and a plurality of fourth bits, the system bit stream is located in a second code block, and a length of the second code block is greater than a code block length supported by the second communication apparatus; and the processing module is further configured to:
determine the second code block as M code subblocks, wherein each of the M code subblocks comprises a part of the third bits and a part of the fourth bits, and different code subblocks comprise different third bits and different fourth bits; and
determine the second check bit stream as M portions of check bits, wherein the M portions of check bits one-to-one correspond to the M code subblocks; check bits corresponding to an M^{th} code subblock in the M code subblocks comprise a first transport block cyclic redundancy check TB CRC bit; M is equal to a rounded-up ratio of the length of the second code block to the code block length supported by the second communication apparatus; and a ratio of a quantity of third bits in the M code subblocks to a second value is equal to a first ratio, the second value is equal to a sum of a quantity of fourth bits comprised in each code subblock and a quantity of check bits corresponding to each code subblock, and the first ratio is a ratio of a quantity of bits required for representing a signal amplitude corresponding to each constellation point in the target probabilistic shaping constellation diagram to a quantity of bits required for representing a sign bit of a signal corresponding to each constellation point in the target probabilistic shaping constellation diagram; and
the processing module is specifically configured to:
decode each code subblock and the check bits corresponding to each code subblock, to obtain a fifth bit corresponding to each code subblock and a sixth bit corresponding to each code subblock; and
determine the fifth bit corresponding to each code subblock as the fourth bit stream, and determine the sixth bit corresponding to each code subblock as the fifth bit stream.

49. The second communication apparatus according to any one of claims 45 to 48, wherein the second communication apparatus further comprises a transceiver module, wherein
the transceiver module is configured to receive first indication information of a first communication apparatus, wherein the first indication information indicates a first modulation and coding scheme MCS and/or the Maxwell-Boltzmann distribution parameter corresponding to the target probabilistic shaping constellation diagram, and the first MCS indicates a first coding rate used when the first communication apparatus uses probabilistic constellation shaping modulation and a first modulation order corresponding to the target probabilistic shaping constellation diagram; or the first indication information is for the first coding rate and the first modulation order and the Maxwell-Boltzmann distribution parameter that correspond to the target probabilistic shaping constellation diagram;
the processing module is further configured to:
determine, based on the first modulation order and the Maxwell-Boltzmann distribution parameter, the symbol type quantity, the probability distribution corresponding to the second symbol of each symbol type, and the bit quantity corresponding to each second symbol; and
the processing module is specifically configured to:
parse the second symbol stream based on the first coding rate, the symbol type quantity, the bit quantity corresponding to each second symbol, and the probability distribution corresponding to each symbol type, to obtain the sixth bit stream.

50. The second communication apparatus according to any one of claims 45 to 48, wherein the second communication apparatus further comprises a transceiver module, wherein
the transceiver module is configured to receive second indication information from a first communication apparatus, wherein
the second indication information indicates a second modulation and coding scheme MCS and an equal-order coding rate increase scheme, or indicates a second MCS and an order-increase equal-entropy scheme, and the second MCS indicates a second modulation order used when the first communication apparatus uses uniform modulation and a second coding rate.

51. The second communication apparatus according to claim 50, wherein if the second indication information indicates the equal-order coding rate increase scheme, the processing module is further configured to:
determine, by using the equal-order coding rate increase scheme, a first coding rate used when the second communication apparatus uses probabilistic constellation shaping modulation, and a first modulation order and a Maxwell-Boltzmann distribution parameter that correspond to the target probabilistic shaping constellation diagram; and
determine, based on the first modulation order and the Maxwell-Boltzmann distribution parameter, the symbol type quantity, the probability distribution corresponding to the second symbol of each symbol type, and the bit quantity corresponding to each second symbol; and
the processing module is specifically configured to:
parse the second symbol stream based on the first coding rate, the symbol type quantity, the bit quantity corresponding to each second symbol, and the probability distribution corresponding to each symbol type, to obtain the sixth bit stream.

52. The second communication apparatus according to claim 51, wherein a first net transmission rate corresponding to a case in which the first communication apparatus performs modulation by using the uniform modulation is equal to a product of the second modulation order used when the first communication apparatus uses the uniform modulation and the corresponding second coding rate; and
the processing module is specifically configured to:
set the second modulation order to the first modulation order corresponding to the target probabilistic shaping constellation diagram;
set the first net transmission rate to a net transmission rate corresponding to a case in which the first communication apparatus uses the probabilistic constellation shaping modulation; and
obtain, through calculation based on the first net transmission rate and the first modulation order, the first coding rate and the Maxwell-Boltzmann distribution parameter corresponding to the target probabilistic shaping constellation diagram.

53. The second communication apparatus according to claim 50, wherein if the second indication information indicates the equal-order coding rate increase scheme, the processing module is further configured to:
determine, by using the order-increase equal-entropy scheme, a first coding rate used when the second communication apparatus uses probabilistic constellation shaping modulation, and a first modulation order and a Maxwell-Boltzmann distribution parameter that correspond to the target probabilistic shaping constellation diagram; and
determine, based on the first modulation order and the Maxwell-Boltzmann distribution parameter, the symbol type quantity, the probability distribution corresponding to the second symbol of each symbol type, and the bit quantity corresponding to each second symbol; and
the processing module is specifically configured to:
parse the second symbol stream based on the first coding rate, the symbol type quantity, the bit quantity corresponding to each second symbol, and the probability distribution corresponding to each symbol type, to obtain the sixth bit stream.

54. The second communication apparatus according to claim 53, wherein a first net transmission rate corresponding to a case in which the first communication apparatus performs modulation by using a uniform modulation scheme is equal to a product of the second modulation order used when the first communication apparatus uses the uniform modulation and the corresponding second coding rate; and
the processing module is specifically configured to:
set the second coding rate to a first coding rate used when the first communication apparatus uses the probabilistic constellation shaping modulation;
set the first modulation order corresponding to the target probabilistic shaping constellation diagram to the second modulation order plus a first preset value;
set the first net transmission rate to a net transmission rate corresponding to a case in which the second communication apparatus uses the probabilistic constellation shaping modulation; and
determine, based on the first net transmission rate and the first modulation order, the Maxwell-Boltzmann distribution parameter corresponding to the target probabilistic shaping constellation diagram.

55. A communication apparatus, wherein the communication apparatus comprises a processor, and the processor is configured to invoke and run a computer program stored in a memory, so that the communication apparatus performs the method according to any one of claims 1 to 17, or the communication apparatus performs the method according to any one of claims 18 to 27.

56. The communication apparatus according to claim 55, wherein the communication apparatus further comprises the memory.

57. A computer-readable storage medium, comprising computer instructions, wherein when the computer instructions are run on a computer, the computer is enabled to perform the method according to any one of claims 1 to 17, or the computer is enabled to perform the method according to any one of claims 18 to 27.

58. A computer program product, wherein when the computer program product runs on a computer, the computer is enabled to perform the method according to any one of claims 1 to 17, or the computer is enabled to perform the method according to any one of claims 18 to 27.

59. A communication system, wherein the communication system comprises the first communication apparatus according to any one of claims 28 to 44 and the second communication apparatus according to any one of claims 45 to 54.
